(19) Europäisches Patentamt
European Patent Office
Office européen des brevets

(11) EP 2 638 656 B1

(12) EUROPEAN PATENT SPECIFICATION

(45) Date of publication and mention of the grant of the patent:
**07.12.2016 Bulletin 2016/49**

(21) Application number: **11782287.4**

(22) Date of filing: **25.10.2011**

(51) Int Cl.:
***H04L 5/00*** *(2006.01)* ***H04W 72/04*** *(2009.01)*
*H04W 74/08* *(2009.01)* *H04W 84/12* *(2009.01)*
*H04W 88/02* *(2009.01)*

(86) International application number:
**PCT/US2011/057667**

(87) International publication number:
**WO 2012/064502 (18.05.2012 Gazette 2012/20)**

# (54) METHODS FOR PERFORMING CHANNEL AGGREGATION

VERFAHREN ZUR DURCHFÜHRUNG VON KANALAGGREGATION

PROCÉDÉS PERMETTANT DE RÉALISER UNE AGRÉGATION DE CANAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2010 US 413221 P**
**12.11.2010 US 413126 P**
**12.11.2010 US 413116 P**

(43) Date of publication of application:
**18.09.2013 Bulletin 2013/38**

(60) Divisional application:
**16188700.5**

(73) Proprietor: **InterDigital Patent Holdings, Inc.**
**Wilmington, DE 19809 (US)**

(72) Inventors:
- **DAI, Yuying**
**Lachine, Québec H8T 3R5 (CA)**
- **YE, Chunxuan**
**Wayne**
**Pennsylvania 19087 (US)**
- **LIN, Zinan**
**Melville**
**New York 11747 (US)**
- **GAUVREAU, Jean-Louis**
**La Prairie**
**Québec J5R 6G7 (CA)**
- **AHMAD, Saad**
**Montreal, Québec H2X 3R4 (CA)**
- **FREDA, Martino M.**
**Laval**
**Québec H7A 0A8 (CA)**
- **MUDGAL, Parul**
**New Delhi 110048 (IN)**
- **BATTISTON, Nick**
**Mississauga**
**Ontario L5K 1T3 (CA)**
- **DEMIR, Alpaslan**
**East Meadow**
**New York 11554 (US)**
- **MA, Liangping**
**San Diego**
**California 92130 (US)**

(74) Representative: **Awapatent AB**
**P.O. Box 45086**
**104 30 Stockholm (SE)**

(56) References cited:
**US-A1- 2005 100 039**
**US-A1- 2007 060 158**
**US-A1- 2010 271 970**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## BACKGROUND

A local wireless network (LAN) may operate in a bandwidth that is constrained as more and more bandwidth-demanding wireless applications are deployed in the home or in the office. To solve this, the operation of wireless transmit/receive units (WTRUs) in a new and emerging spectrum, such as television white space (TVWS), may be necessary. However, allowable channels that may be used by the WTRUs operating in such spectrum are often discontinuous chunks of spectrum. The current wireless technology does not operate over non-contiguous spectrum allocations in an aggregated way.

In order to maximize the bandwidth usable by a system or a user, the simultaneous use of discontinuous chunks of spectrum may be critical to achieve the required quality of service (QoS). Operating over multiple non-contiguous channels and accessing a channel in an orderly and robust fashion may be a complicated process. The WTRUs may have to function such that all of the WTRUs get a fair chance at accessing a medium so that there is a minimum chance of collision.

To facilitate dynamic spectrum allocation and ensure robustness of the LAN, different management/control messages need to be sent by an access point (AP) in the LAN. These messages may maintain coordination among all of the WTRUs and assist them in operating efficiently. In addition, the performance of medium access control (MAC) layer carrier aggregation over multiple channels may allow more data to be transmitted, thereby increasing system throughput.

US 2005/100039A1 discloses a system and a method for binding together a plurality of wireless data communications channels for achieving an aggregate throughput improvement.

## SUMMARY

Two alternative methods, according to claims 1 and 14, are described for performing channel aggregation to communicate over a non-contiguous spectrum, such as television white space (TVWS), using a plurality of aggregated channels including a primary channel and at least one non-primary channel (e.g., a secondary channel, a tertiary channel or a quaternary channel).

## BRIEF DESCRIPTION OF THE DRAWINGS

A more detailed understanding may be had from the following description, given by way of example in conjunction with the accompanying drawings wherein:

Figure 1A is a system diagram of an example communications system in which one or more disclosed embodiments may be implemented;
Figure 1B is a system diagram of an example wireless transmit/receive unit (WTRU) that may be used within the communications system illustrated in Figure 1A;
Figure 1C is a system diagram of an example radio access network and an example core network that may be used within the communications system illustrated in Figure 1A;
Figure 2 shows an example of a primary channel in an IEEE 802.11n system;
Figure 3 shows an example of a primary channel in an IEEE 802.11ac system;
Figure 4 shows an example of time sharing of a plurality of aggregated channels by control and data in a dynamic spectrum management (DSM) system operating channel;
Figure 5 shows an example of media access control (MAC) layer carrier sense multiple access (CSMA) over a primary channel;
Figure 6 shows an example of a defer 5/10/15/20 mechanism;
Figure 7 shows an example of request to send (RTS)/clear to send (CTS) messaging over a primary channel;
Figure 8 shows an example of RTS/CTS messaging in a multiuser scenario;
Figure 9 shows an example of a modified RTS messaging frame format;
Figure 10 shows an example of a primary channel as a dedicated control channel;
Figure 11 shows an example of a network allocation vector (NAV) and transmission to an access point (AP);
Figure 12 shows an example of a frame format for RTS;
Figure 13 shows an example of a frame format of CTS messaging;
Figure 14 shows an example of an AND-logic combined CSMA;
Figure 15 shows an example of a channel switch announcement (CSA) message;
Figure 16 shows an example of a modified CSA message used in an aggregated control channel implementation;

Figure 17 shows an example of a measurement report message in IEEE 802.11;
Figure 18 shows an example of a measurement type field in IEEE 802.11;
Figure 19 shows an example of a measurement type 4;
Figure 20 shows a flow diagram of a first scenario where a channel management function (CMF) of a dynamic spectrum management (DSM) system already had other available channels to replace failed channels;
Figure 21 shows a flow diagram of a second scenario where a CMF of a DSM system does not have available channels to replace failed channels;
Figure 22 shows an example of a primary channel failure, and
Figure 23 shows an example of a non-primary channel failure;
Figure 24 shows a table providing an example of control messages and their priority;
Figure 25 shows an example of an IEEE 802.11 measurement request field format for a basic request;
Figure 26 shows an example of a modified channel number field inside of the IEEE 802.11 measurement request field of Figure 25;
Figure 27 shows an example of a high priority control message transmission by a node (e.g., AP or eNB) with an event trigger;
Figure 28 shows an example of MAC layer aggregation unit;
Figure 29 shows simultaneous transmission and reception in MAC aggregation without positive acknowledgement (ACK) synchronization;
Figure 30 shows an example of an ACK procedure;
Figure 31 shows a duration field example in non-fragmented or single fragment packet transmission and the last transmission of a transmission opportunity (TXOP);
Figure 32 shows a duration field example in fragmented packet transmission or the non-last transmission of a TXOP;
Figure 33 shows a duration field example distinguishing a continuing TXOP from a non-continuing TXOP;
Figure 34 shows an example architecture of a DSM system;
Figure 35 shows an example architecture of a DSM engine;
Figure 36 shows an example diagram of primary CSMA;
Figures 37A and 37B show an example of an enhanced MAC architecture;
Figures 38 and 39 show examples of packet reordering due to an empty buffer;
Figures 40 and 41 show examples of packet reordering due to an unavailable channel;
Figures 42 and 43 show examples of packet reordering due to quality of service (QoS) requirements;
Figure 44 shows example call flows of a buffer controller (BC);
Figure 45 shows an example of an enhanced MAC layer architecture at a receive side;
Figure 46 shows a non-high throughput (HT) physical layer (PHY) protocol data unit (PPDU) data format;
Figure 47 shows a general format of a MAC header;
Figure 48 shows an HT-mixed PPDU data format;
Figure 49 shows a general format of a MAC header for HT-mixed or HT-Greenfield PPDUs;
Figure 50 shows an HT-Greenfield PPDU data format;
Figure 51 shows example call flow procedure for a frame controller;
Figure 52 shows modulation and coding scheme (MCS) parameters for a non-HT PPDU;
Figure 53 shows MCS parameters for an HT PPDU;
Figure 54 shows the configuration of an aggregated MAC protocol data unit (A-MPDU);
Figures 55A and 55B show an alternate embodiment of an enhanced MAC architecture at the transmit side based on a simplified buffer scheme;
Figure 56 is a buffering functional block diagram;
Figures 57A and 57B show different buffers for each access class (AC) block diagram;
Figure 58 shows a retransmission example in which transmission failed in the primary channel; and
Figure 59 shows a retransmission example in which transmission failed in the quaternary channel.

## DETAILED DESCRIPTION

When referred to hereafter, the terminology "wireless transmit/receive unit (WTRU)" includes but is not limited to a user equipment (UE), a station (STA), a mobile station, a fixed or mobile subscriber unit, a pager, a cellular telephone, a personal digital assistant (PDA), a non-AP station, a computer, or any other type of user device capable of operating in a wireless environment. A WTRU may be a non-infrastructure node.

As used herein, the terminology "access point (AP)" includes but is not limited to a Node-B, a site controller, a base station, or any other type of interfacing device capable of operating in a wireless environment. As used herein, the terms "network node," "network element," and "network component" refer to but are not limited to any electronic device that is attached to a communications network and is capable of sending and/or receiving data.

Figure 1A shows an example communications system 100 in which one or more disclosed embodiments may be implemented. The communications system 100 may be a multiple access system that provides content, such as voice, data, video, messaging, broadcast, and the like, to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in Figure 1A, the communications system 100 may include WTRUs 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the other networks 112. By way of example, the base stations 114a, 114b may be a base transceiver station (BTS), a Node-B, an evolved Node-B (eNB), a Home Node-B (HNB), a Home eNB (HeNB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple-output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link, (e.g., radio frequency (RF), microwave, infrared (IR), ultraviolet (UV), visible light, and the like). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as universal mobile telecommunications system (UMTS) terrestrial radio access (UTRA), which may establish the air interface 116 using wideband CDMA (WCDMA). WCDMA may include communication protocols such as high-speed packet access (HSPA) and/or evolved HSPA (HSPA+). HSPA may include high-speed downlink packet access (HSDPA) and/or high-speed uplink packet access (HSUPA).

In another embodiment, the base station 114a and the WTRUs 102a, 102b, 102c may implement a radio technology such as evolved UTRA (E-UTRA), which may establish the air interface 116 using long term evolution (LTE) and/or LTE-Advanced (LTE-A).

In other embodiments, the base station 114a and the WTRUs 102a, 102b, 102c may implement radio technologies such as IEEE 802.16 (i.e., worldwide interoperability for microwave access (WiMAX)), CDMA2000, CDMA2000 1X, CDMA2000 evolution-data optimized (EV-DO), Interim Standard 2000 (IS-2000), Interim Standard 95 (IS-95), Interim Standard 856 (IS-856), global system for mobile communications (GSM), enhanced data rates for GSM evolution (EDGE), GSM/EDGE RAN (GERAN), and the like.

The base station 114b in Figure 1A may be a wireless router, HNB, HeNB, or AP, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT, (e.g., WCDMA, CDMA2000, GSM, LTE, LTE-A, and the like), to establish a picocell or femtocell. As shown in Figure 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over Internet protocol (VoIP) services to one or more of the WTRUs 102a, 102b, 102c, 102d. For example, the core network 106 may provide call control, billing services, mobile location-based services, pre-paid calling, Internet connectivity, video distribution, and the like, and/or perform high-level security functions, such as user authentication. Although not shown in Figure 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the Internet protocol (IP) in the TCP/IP suite. The other networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in Figure 1A may be configured to communicate with the base station 114a, which may employ a cellular-based radio technology, and with the base station 114b, which may employ an IEEE 802 radio technology.

Figure 1B shows an example WTRU 102 that may be used within the communications system 100 shown in Figure 1A. As shown in Figure 1B, the WTRU 102 may include a processor 118, a transceiver 120, a transmit/receive element, (e.g., an antenna), 122, a speaker/microphone 124, a keypad 126, a display/touchpad 128, a non-removable memory 130, a removable memory 132, a power source 134, a global positioning system (GPS) chipset 136, and peripherals 138. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a microprocessor, one or more microprocessors in association with a DSP core, a controller, a microcontroller, an application specific integrated circuit (ASIC), a field programmable gate array (FPGA) circuit, an integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While Figure 1B depicts the processor 118 and the transceiver 120 as separate components, the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. The transmit/receive element 122 may be configured to transmit and/or receive any combination of wireless signals.

In addition, although the transmit/receive element 122 is depicted in Figure 1B as a single element, the WTRU 102 may include any number of transmit/receive elements 122. More specifically, the WTRU 102 may employ MIMO technology. Thus, in one embodiment, the WTRU 102 may include two or more transmit/receive elements 122, (e.g., multiple antennas), for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), and the like), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station, (e.g., base stations 114a, 114b), and/or determine its location based on the timing of the signals being received from two or more nearby base stations. The WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

Figure 1C shows an example RAN 104 and an example core network 106 that may be used within the communications system 100 shown in Figure 1A. The RAN 104 may be an access service network (ASN) that employs IEEE 802.16 radio technology to communicate with the WTRUs 102a, 102b, 102c over the air interface 116.

As shown in Figure 1C, the RAN 104 may include base stations 140a, 140b, 140c, and an ASN gateway 142, though it will be appreciated that the RAN 104 may include any number of base stations and ASN gateways while remaining consistent with an embodiment. The base stations 140a, 140b, 140c may each be associated with a particular cell (not shown) in the RAN 104 and may each include one or more transceivers for communicating with the WTRUs 102a, 102b, 102c over the air interface 116. In one embodiment, the base stations 140a, 140b, 140c may implement MIMO technology. Thus, the base station 140a, for example, may use multiple antennas to transmit wireless signals to, and receive wireless signals from, the WTRU 102a. The base stations 140a, 140b, 140c may also provide mobility management functions, such as handoff triggering, tunnel establishment, radio resource management, traffic classification, quality of service (QoS) policy enforcement, and the like. The ASN gateway 142 may serve as a traffic aggregation point and may be responsible for paging, caching of subscriber profiles, routing to the core network 106, and the like.

The air interface 116 between the WTRUs 102a, 102b, 102c and the RAN 104 may implement the IEEE 802.16 specification. In addition, each of the WTRUs 102a, 102b, 102c may establish a logical interface (not shown) with the core network 106. The logical interface between the WTRUs 102a, 102b, 102c and the core network 106 may be used for authentication, authorization, IP host configuration management, and/or mobility management.

The communication link between each of the base stations 140a, 140b, 140c may include protocols for facilitating WTRU handovers and the transfer of data between base stations. The communication link between the base stations 140a, 140b, 140c and the ASN gateway 142 may include protocols for facilitating mobility management based on mobility events associated with each of the WTRUs 102a, 102b, 102c.

As shown in Figure 1C, the RAN 104 may be connected to the core network 106. The communication link between the RAN 104 and the core network 106 may include protocols for facilitating data transfer and mobility management capabilities, for example. The core network 106 may include a mobile IP home agent (MIP-HA) 144, an authentication, authorization, accounting (AAA) server 146, and a gateway 148. While each of the foregoing elements are depicted as part of the core network 106, it will be appreciated that any one of these elements may be owned and/or operated by an entity other than the core network operator.

The MIP-HA may be responsible for IP address management, and may enable the WTRUs 102a, 102b, 102c to roam between different ASNs and/or different core networks. The MIP-HA 144 may provide the WTRUs 102a, 102b, 102c with access to packet-switched networks, such as the Internet 110, to facilitate communications between the WTRUs 102a, 102b, 102c and IP-enabled devices. The AAA server 146 may be responsible for user authentication and for supporting user services. The gateway 148 may facilitate interworking with other networks. For example, the gateway 148 may provide the WTRUs 102a, 102b, 102c with access to circuit-switched networks, such as the PSTN 108, to facilitate communications between the WTRUs 102a, 102b, 102c and traditional land-line communications devices. In addition, the gateway 148 may provide the WTRUs 102a, 102b, 102c with access to the networks 112, which may include other wired or wireless networks that are owned and/or operated by other service providers.

Although not shown in Figure 1C, it will be appreciated that the RAN 104 may be connected to other ASNs and the core network 106 may be connected to other core networks. The communication link between the RAN 104 the other ASNs may include protocols for coordinating the mobility of the WTRUs 102a, 102b, 102c between the RAN 104 and the other ASNs. The communication link between the core network 106 and the other core networks may include protocols for facilitating interworking between home core networks and visited core networks.

A local wireless network system such as, for example, an IEEE 802.11 system, may operate in a predefined spectrum such as the industrial, scientific and medical (ISM) bands. The IEEE 802.11 system may operate in a contiguous spectrum channel.

In the United States, 408 MHz of spectrum from 54 MHz to 806 MHz is allocated for television (TV). Currently, 108 MHz of that spectrum is being redeveloped for commercial operations through auctions and for public safety applications. The remaining 300 MHz of this prime radio spectrum may remain dedicated for over-the-air (OTA) TV operations. However, throughout the United States, portions of that 300 MHz resource remain unused. The amount and exact frequency of unused spectrum may vary from location to location. These unused portions of spectrum are referred to as TV white space (TVWS). The Federal Communications Commission (FCC) is considering opening these unused TVWS frequencies for a variety of unlicensed uses. Because there are fewer TV stations located outside top metropolitan areas, most of the unoccupied TVWS spectrum is available in low population density or rural areas that tend to be underserved with other broadband options, such as digital subscriber line (DSL) or cable.

Each available TV channel may provide 6 MHz of spectrum capacity that may be used for broadband connectivity. TVWS may have much larger coverage areas due to long range signal propagation at these frequencies. For example, a wireless local access network (WLAN) access point (AP) location operating in TVWS may provide coverage for an area of a few square miles. On the other hand, wireless equipment currently in operation in, for example, an IEEE 802.11b/g/n system may have an average coverage area of 150 square feet.

Figure 2 shows an example of a 20 MHz primary channel 205 and a 20 MHz secondary channel 210 in an IEEE 802.11n system. The primary channel 205 is a common channel of operation for all WTRUs, (i.e., stations (STAs)), that are members of a basic service set (BSS). All management traffic (beacons) may be sent over the primary channel 205. The secondary channel 210 may be associated with the primary channel 205 and used by high-throughput (HT) WTRUs for the purpose of creating a 40 MHz channel. There may not be any requirement for a transmitting device to consider the state of the secondary channel 210 when transmitting.

As illustrated in Figure 2, the access to the 40 MHz channel pair 205/210 may be controlled by performing primary carrier sensing multiple access (PCSMA), (i.e., performing carrier sensing multiple access (CSMA) only on the primary channel 205). As there is no requirement for a WTRU to consider the carrier sense state of the secondary channel 210 before transmitting, the probability of collisions on the secondary channel 210 is greatly increased.

As shown in Figure 2, a CSMA backoff procedure may be performed on the primary channel 205. Before transmitting, all of the WTRUs may insure that the primary channel 205 is idle for arbitration interframe space (AIFS) time and for going into backoff (AIFS plus backoff duration 215). The WTRU whose backoff expires first wins the contention and obtains access to transmit over the primary channel 205. The secondary channel 210 may be sensed for point coordination function (PCF) inter-frame space (PIFS) period 220, which is much smaller than the AIFS plus backoff duration 215.

The IEEE 802.11n system operates in a contiguous spectrum and may operate in two different defer modes. In a defer/20/40 mode, the WTRUs transmit at 40 MHz when both the primary channel 205 and the secondary channel 210 are idle, or at 20 MHz when the primary channel 205 is idle, or defer the transmission when the primary channel 205 is busy. In a defer/40 mode, the WTRUs transmit at 40 MHz when both primary channel 205 and the secondary channel 210 are idle, or defer the transmission. However, due to implementation constraints, most of the WTRUs may use the defer/40 mode.

Figure 3 shows an example of a primary channel 305 in an IEEE 802.11ac system. Because an IEEE 802.11ac system is an HT system which operates over a bandwidth of 80 MHz or 160 MHz, a plurality of contiguous 20 MHz channels may be used, including the primary channel 305 and a plurality of non-primary channels, (e.g., a secondary channel 310, a tertiary channel 315 or a quaternary channel 320). Every time a WTRU or a node (e.g., an AP or eNB) has control/data to transfer, it may perform CSMA (AIFS + back off) on the primary channel 305, and the other non-primary channels 310, 315 and 320 may be assumed to have the same channel status as the primary channel 305, (i.e., if the CSMA on the primary channel 305 returns a status of busy, all of the channels 305, 310, 315 and 320 may be assumed to be busy and thus be set to return a status of busy). Once the WTRU or node gets access to the primary channel 305, the WTRU and the node may then check the non-primary channels 310, 315 and 320 for a period of PIFS before transmission to help ensure that all of the channels are in fact free. The IEEE 802.11ac system may use a defer/20/40/80 mode for an 80 MHz bandwidth scenario.

The concept described above is known as "channel bonding". The big chunk of 40 MHz bandwidth with two channels in an IEEE 802.11n system and 80 MHz spectrum in an IEEE 802.11ac system may be used as one big channel from the physical layer's perspective, i.e., there is only one physical layer protocol data unit (PPDU) or one aggregated PPDU (A-PPDU) that is transmitted over this huge bandwidth.

Figure 4 shows an example of time sharing of a plurality of aggregated channels by control and data in a dynamic spectrum management (DSM) system operating channel. These channels may be contiguous or non-contiguous. The aggregated channels may be used to transmit data packets and control/management packets between a DSM engine and DSM clients.

The aggregated channels in an unlicensed or opportunistic spectrum (i.e., a spectrum that may be used by unlicensed devices as long as a primary or high priority user is not present on the spectrum), may not always be available, as a licensed user has precedence. Therefore, on the arrival of a primary user, the channel in question may become unavailable for use. For example, each channel may have a bandwidth of 5 MHz, and so aggregating the channels may provide a total of 20 MHz of bandwidth

Various examples of aggregated channel access based on a plurality of aggregated channels are described herein. One of ordinary skill in the art should understand that any number (x) of aggregated channels may be used, where x > 1 in any frequency band. Although specific references are made to an AP herein, one of ordinary skill should understand that the features described herein may be applicable to other types of nodes, such as an eNB used for LTE.

MAC layer CSMA may be performed over a primary channel. The primary channel may be used to perform channel aggregation at the MAC layer to transmit multiple MAC protocol data units (MPDUs) over the discontinuous spectrum. For example, in a scenario using four aggregated channels, one of the four channels may be assigned as the primary channel by an AP. Every time a WTRU or an AP has control/management packets or data to transfer, it may perform CSMA on the pre-assigned primary channel, and the other three channels may be assumed to have the same channel status as the primary channel, (i.e., if the CSMA on the primary channel returns a status of busy, all four channels may be assumed to be busy). When the WTRU or the AP gets access to the primary channel, it also may get access to the full set of aggregated channels. The WTRU and the AP may then check the non-primary (i.e., secondary, tertiary and quaternary) channels for a PIFS period before transmission to help ensure that all four channels are in fact free.

The aggregated channels may not be considered as one combined chunk of bandwidth at the PHY. Instead, separate PDUs or management PDUs (for management/control packets) are sent on each channel by a transmitting device. The PDUs may be directed to one or more WTRUs. The receiving WTRU may send positive acknowledgement (ACK) messages separately for each PDU it receives, (if required). For example, if a WTRU correctly receives simultaneous PDUs on all of the aggregated channels, it may send an ACK on each of the aggregated channels.

Figure 5 shows an example of MAC layer CSMA over a primary channel. As shown in Figure 5, the device which wins the CSMA contention on the primary channel gets access to all of the aggregated channels. If a clear channel assessment (CCA) indication is received over a PIFS period, and a busy status is returned on a non-primary channel, the busy non-primary (e.g., secondary) channel may not get used, but the transmission may still occur over the remaining channels. When the primary channel is busy, the entire transmission may be deferred to a subsequent transmission opportunity.

Assuming that each operating channel is about 5 MHz wide, this procedure may be referred as a defer 5/10/15/20 procedure, as it allows the option of transmitting over one or more of the aggregated channels, depending on availability. A defer 5/10/15/20 procedure allows dynamic selection of channels, enables the devices to use all 20 MHz when all of the channels are idle, or a defer 15/10/5 procedure may be used if one or more non-primary channels are occupied, (i.e., they are found busy by CCA applied to the non-primary channel), by unwanted interferers, as shown in Figure 6.

Furthermore, channels having different bandwidths may be aggregated. For example, channel 1 may operate over a bandwidth of 10 MHz (operating over 2 contiguous video channels), while the remaining channels (2, 3 and 4) may operate over a bandwidth of 5 MHz each. The selection of the primary channel may take this into account.

Additionally, depending on the amount of data in the MAC buffer, the transmitting device may not need to have different PDUs to transmit. In this scenario, the device may perform one or more of the following operations:

1) Segmentation: The device may segment the PDUs into smaller PDUs. The device may ensure that the PDUs are not segmented such that there is a very large MAC/PHY overhead causing channel wastage.
2) Repetition: The device may transmit the same PDU over multiple channels simultaneously to increase the robustness of the system. For example, if tertiary and quaternary channels have lower link quality and the device has three PDUs to transmit, it may repeat PDU 3 on both the tertiary and quaternary channels.
3) Null transmission: The device may choose to send a null frame in a channel that is not needed for transmission. For example, if the device has to transmit three PDUs. It may transmit PDU 1, PDU 2 and PDU 3 on the primary, secondary and tertiary channel, and a null frame on the quaternary channel. The transmission of null is required to make sure that the channel remains busy, (i.e., to ensure that no other outside AP or uncoordinated device starts its transmission on that channel).
4) No transmission on some non-primary channels: Since no CSMA is done on the non-primary channels, it may be possible not to transmit any PDU on one or more non-primary channels.

The devices may also use request to send (RTS) and clear to send (CTS) messages to access the channel.

However, the RTS/CTS procedure must be adapted to operate over aggregated channels operating over discontinuous spectrum. The normal RTS/CTS procedure starts when a transmitting device sends an RTS message to the intended receiving device. If a receiving device is available, it may reply back with a CTS message after waiting a short interframe space (SIFS) period. The transmitting device may then send a data packet after waiting an SIFS period. The data packet may then be followed by an ACK from the receiving device, also after waiting an SIFS period. The RTS message may include a duration field in a MAC header, which informs all of the devices about the time the channel may be reserved for this data transmission, (the time until an ACK is received). This ensures that the other devices do not transmit during this protected period by setting their network allocation vector (NAV) accordingly.

As shown in Figure 7, the transmitting device may compete for the aggregated channels on the primary channel, (i.e., it may wait for AIFS and perform backoff on the primary channel). Once the transmitting device gets access to the channel, it may send out an RTS message. Upon receiving this RTS message, the receiving device may reply with a CTS message to establish the protected period for data transmission. The data may be transmitted on all of the aggregated channels after waiting an SIFS period, followed by ACKs on all of the aggregated channels.

The duration field in the RTS message may be set to: SIFS + CTS transmission time + SIFS + transmission time of the longest packet on the aggregated channels + SIFS + ACK transmission time. Similarly, the duration field in the CTS packet may be set to: SIFS + transmission time of the longest packet on the aggregated channels + SIFS + ACK. The transmission time of the longest packet may be used so that all of the channels remain busy as long as there is a transmission on any one of the channels.

Alternatively, RTS/CTS messages may be transmitted on more than one channel or on all of the aggregated channels to increase robustness. In this case, the RTS message sent over non-primary channels may be sent after sensing the channels for a PIFS period.

The device (e.g., AP) may also use RTS/CTS messages to reserve a channel to transmit to multiple users simultaneously. The source WTRU may transmit an RTS message on the primary channel with multiple destination addresses. The destination WTRUs may reply back with a CTS message after waiting an SIFS period on multiple channels as specified in the RTS message. The source WTRU may then simultaneously transmit PDUs addressed to different destination WTRUs on different channels. The destination WTRUs may send ACK messages on the same channel they received the transmission on. All of the ACKs may be transmitted at the same time by the destination WTRUs after waiting an SIFS period, and after the end of the longest PDU on the aggregated channels.

As shown in Figure 8, to make sure that all of the devices know when the longest PDU transmission ends, the longest transmission may be forced to take place in the primary channel, and the longest channel indicator may be set in the MAC header to show which channel's transmission lasts the longest.

Figure 9 shows the frame structure of an RTS message 900 including a frame control field 905, a duration field 910, a receive addresses field 915, a transmit address field 920, a CTS channel(s) field 925, a transmit channel field 930 and a frame check sequence (FCS) field 935. The receive addresses (1...N) field includes the addresses of the intended destination WTRUs that the RTS message 900 is directed towards. The maximum number of addresses in the field 915 is N, which may not exceed the number of channels, (e.g., in the scenario illustrated in Figure 8, N=4). The CTS channel (1...N) field 925 instructs each destination WTRU to send a CTS message on the specified channel. For example, in the scenario illustrated in Figure 8, CTS channel 1 is set to a primary channel and CTS channel 2 is set to a tertiary channel). The transmit channel(s) (1...N) field 930 informs the destination WTRU about the channels where data would be transmitted. For example, in the scenario illustrated in Figure 8, transmit channel 1 is set to the primary channel and the secondary channel where transmit channel 2 is specified as the tertiary channel and the quaternary channel.

RTS/CTS messages may be sent on more than one channel to increase the robustness of the system. The primary channel may also be used as a dedicated control channel. All of the WTRUs may receive and transmit control information on a primary channel, and no data transmission may occur on the primary channel. Beacon, association request/response, channel switch message, RTS/CTS and all the other control/management messages may be transmitted on the primary channel using CSMA. For data transmission, all of the other channels may be used and coordinated by the AP using the primary channel.

The WTRUs may send an RTS message to get access to the data channels. The RTS message may be addressed to the AP, which in essence is a request to the AP to assign channels for data transmission. The AP may reply back with a CTS message informing the WTRU of the channels to use and the duration for which the channels have been allocated to the AP. The AP may then send PDUs on those channels and may receive an ACK on the same channel from the destination WTRU. The WTRUs may maintain a NAV for the primary channel since they need to perform CSMA to compete for the primary channel, whereas for the data channels, the WTRUs cannot transmit until they receive a CTS message from the AP indicating the channels they may transmit on.

Figure 10 shows an example of a primary channel acting as a dedicated control channel. As shown in Figure 10, a first WTRU (WTRU1) requests bandwidth from the AP to transfer data to a second WTRU (WTRU2). The AP replies back with a CTS message informing WTRU1 that it may use a secondary channel and a tertiary channel after waiting an SIFS period. While WTRU1 is transmitting packets on the secondary and tertiary channels, a third WTRU (WTRU3) wins the contention on the primary channel and sends an RTS message to the AP to send packets to a fourth WTRU (WTRU4). The AP replies back with a CTS message informing WTRU3 to use the quaternary channel after waiting an SIFS period.

In the case when all of the channels are busy and the AP does not have any channels to assign, the AP may ask the WTRUs to wait for a specific period of time before the transmitting on the assigned channels, or the AP may send a CTS message with a failure flag. In the latter case, the WTRUs may have to send an RTS again after some time.

As shown in Figure 11, in case the WTRUs have to transmit data to the AP, they may be assigned a primary channel to transmit that data in the CTS message. This is because the AP may remain busy anyway while receiving data from the WTRUs. As shown in Figure 11 the NAV is based only on the primary channel.

If all of the aggregated channels belong to a single radio, (e.g., the radio in the DSM system), the WTRUs may not be able to simultaneously transmit on one channel while receiving on the other channel. This may cause self-interference among different channels. To avoid this problem, the WTRU may not listen to the primary channel while they are transmitting data on other channels. If the WTRU has multiple radios, then one of radios may be used to transmit/receive on the primary channel while another radio in the WTRU is sending data on different channels.

Figure 12 illustrates the frame format of an RTS message 1200 to be used in the primary channel for a dedicated control channel procedure. The RTS message 1200 may include a frame control field 1205, a duration field 1210, a receiver addresses field 1215, a destination address field 1220, a transmit address field 1225, a channel(s) requested field 1230 and an FCS field 1235. The destination address field 1220 may include the address of the WTRU that is supposed to receive data packets. The receiver addresses field 1215 may include the address of the WTRU that receives the RTS message 1200 and replies with a CTS message, (usually sent by an AP or a network controller). If the data is destined towards the AP, the receiver addresses field 1215 and the destination address field 1220 may be the same. The channel(s) requested field 1230 may indicate the number of channels required by the source WTRU to transmit data.

Figure 13 illustrates the frame format of a CTS message 1300 to be used in the primary channel for a dedicated control channel procedure. The CTS message may include frame control field 1305, a duration field 1310, a receiver addresses field 1315, a wait time field 1320, a channel(s) granted field 1325 and an FCS field 1330. The wait time field 1320 may indicate the time duration, (after waiting an SIFS period), that the WTRU may have to wait before it may transmit data on the granted channel(s). If the wait time is zero, the WTRU may start data transfer after waiting the SIFS period. The channel(s) granted field 1325 may inform the WTRU about the channel number or identity (ID) of the channels the WTRU is allowed to transmit data on. If the AP does not have the number of requested channels available, it may grant fewer channels to the source WTRU.

Combined CSMA is another alternative technique to access the aggregated channels. Combined CSMA may perform CSMA on all of the channels instead of just doing it only on the primary channel. Combined CSMA may use "AND" logic on all of the channels to access them together. Therefore, combined CSMA may not allow the use of the defer 5/10/15/20 option or else the medium would be blocked completely in the event of any of the aggregated channels being busy.

Figure 14 shows an example of an AND-Logic combined CSMA. Combined CSMA may remove the need for tracking which channel is the primary channel, although performing CSMA on every channel may be more power consuming and complex. An advantage of combined CSMA may be that it removes the need for the longest transmission to be in the primary channel.

Different control/management message and procedures are described below for supporting the robust operation of a DSM system implementing channel access procedures.

Figure 15 shows a channel switch announcement (CSA) message 1500 that may be sent in the beacon as information elements (IEs), or as a separate MAC action frame. The CSA message 1500 may contain information about a new channel and indicate the time to switch to the new channel. The CSA message 1500 may include an element ID field 1505, a length field 1510, a channel switch mode field 1515, a new channel number field 1520, and a channel switch count field 1525.

Figure 16 shows an example of a modified CSA message 1600 used in an aggregated control channel implementation. The CSA message 1600 may take into account that there are a plurality of operating channels, and more than one channel may have to be switched to a new frequency at the same time. As shown in Figure 16, the action frame of the CSA message 1600 may include a switching channel(s) field 1605 that indicates which of the channels (primary, secondary, tertiary or quaternary) is being switched. The switching channel(s) field 1605 may contain a plurality of bits, each representing one of the aggregated channels. If the bit is set to one (1), it may indicate that the particular channel is being switched to a new frequency. More than one bit may be set to 1 in case multiple channels are being switched simultaneously, (i.e., a value of 0011 indicates that the tertiary and quaternary channels are being switched). The CSA message 1600 may also include a new channel number(s) [1...N] field 1610 that indicates the frequency of the new channel. It may contain up to N new channel frequencies corresponding to each channel (out of N) being switched, where, e.g., N= 4. The CSA message 1600 may further include a channel characteristics field 1615 that indicates the properties of the new channel(s), i.e., it indicates if the channel has been obtained by querying the data by a mode II device, or the channel has been obtained by sensing unlicensed or opportunistic spectrum by a sensing only device. The channel characteristics field 1615 may have three values for each new channel, (i.e., value 0: no information available about channel characteristics; value 1: channel obtained from a mode II device, and value 2: channel obtained from a sensing only device).

The CSA message 1600 may further include a channel switch mode field 1620 that indicates any restrictions on transmission until a channel switch. A channel switch mode set to 1 may indicate that the WTRU in the network to which the frame containing the element is addressed may transmit no further frames until the scheduled channel switch. A channel switch mode set to 0 may not impose any requirement on the receiving client.

The CSA message 1600 may further include a channel switch count field 1625 that may be set to the number of target beacon transmission times (TBTTs) until the WTRU sends the CSA element switches to the new channel. A value of 1 may indicate that the switch may occur immediately before the next TBTT. A value of 0 may indicate that the switch may occur at any time after the frame containing the element is transmitted.

The CSA message 1600 may further include an element ID field 1630 and a length field 1635. The CSA message 1600 may be transmitted as an action frame on all of the channels, (i.e., the CSA message 1600 may be repeated simultaneously on all four channels). This may ensure that the WTRUs are able to receive this message. Also, when it is sent as part of the beacon, it may be repeated on more than one segment for the same reason.

The following procedures for primary channel failure and non-primary channel failures assume that no device is operating in a power save mode and is listening to all four aggregated channels. Additionally, it is assumed that in order to facilitate recovery after channel failure, the beacon may contain an ordered list of which channel takes over for the primary channel in the case of primary channel failure, and a backup channel, that is not one of the four aggregated channels, for a total aggregated channel failure. All WTRUs may store this information and may be responsible for keeping it up-to-date.

Figure 17 shows an example of a measurement report message 1700 that indicates a failure. The measurement report message 1700 may include a measurement token field 1705. When set to 0, the measurement token field 1705 may indicate that the measurement report message 1700 is an autonomous measurement report and is not in response to a measurement request message. The measurement report message 1700 may also include a measurement type field 1710, a measurement report field 1715, an element ID field 1720, a length field 1725 and a measurement report mode field 1730.

Figure 18 shows an example of IEEE 802.11 measurement types indicated by the measurement type field 1710 of the measurement report message 1700. As shown in Figure 18, in case of failure, an indication reserved type 4 may be used. The measurement report field 1715 in the measurement report message 1700 may be equal to zero since the measurement report message 1700 does not report any measurements but only indicates the channel failure.

Figure 19 shows the format of the reserved "measurement type 4". As shown in Figure 19, the "measurement type 4" may be an eight-bit field where each bit represents the failed channel. Setting a bit to one may indicate that the particular channel associated with the bit is not operational. For example, setting bits 0 and 2 shown in Figure 19 to one may indicate the failure of the primary and tertiary channels. In the case where all of the channels fail, the failure indication message may be sent with all the bits set to one on the backup primary channel if available. Otherwise, the message may be sent on all of the channels successively with a very low modulation and coding rate.

When a sensing processor (SP) entity in a DSM engine detects a primary channel failure by gathering sensing results from nodes in the network, the presence of high interference or the planned entry of a primary user (from the TVWS database) in the primary channel is determined. A channel management function (CMF) may determine if that channel should be abandoned or not. This decision may be based on already available sensing results, or the CMF may require further results over a silent period.

The WTRUs may realize that the primary channel has failed, as the channel quality indicators (CQIs) may vary. These CQIs may be based on the number of retransmissions, energy levels, received signal strength indications (RSSIs), retransmissions, throughput, and the like by increasing/decreasing to levels above/below the designated threshold. The WTRUs may also suspect failure based on consecutive attempts to access the channel have failed, (e.g., CSMA has failed a predetermined number of times), and the WTRUs have not received the periodic messages (i.e., the beacon).

If any WTRUs detect any changes in the channel quality that indicate high interference, they may indicate the failure to the DSM system by sending a failure indication message. If the quality of the primary channel is degraded so as to not allow access to the WTRU, it may switch to the primary backup channel, as specified in a "backup list" beacon IE and perform primary CSMA on that channel. This may deviated from the primary channel protocol. However, transmitting on a non-primary channel may result in collisions with transmissions of other WTRUs, but this is the only way to communicate with the DSM system and the WTRUs may retransmit until the failure indication is successfully transmitted.

Figure 20 shows a flow diagram of a first scenario where a CMF of a DSM system 2005 already had other available channels to replace failed channels. The DSM system 2005 may include a CMF 2010 and an AP 2015. A WTRU 2020 communicates with the DSM system 2005. When the AP 2015 receives a failure indication message 2025 from the WTRU 2020, the AP 2015 may forward this message to the CMF 2010 as a bandwidth allocation (BA) reconfiguration request 2030. The CMF 2010 may respond back to this request, depending on whether the CMF 2010 already has other available channels to replace the failed channels (2035). If the CMF 2010 sends a BA reconfiguration response 2040 indicating new channel(s), the AP 2015 may update its channel list (2045) and send a CSA message 2050 to the WTRU. The WTRU 2020 then may operate on all four channels (2055). In case of a primary channel failure, the new primary channel may be the first available channel in the "backup list" information element as described above.

Figure 21 shows a flow diagram of a second scenario where a CMF of a DSM system does not have available channels to replace failed channels. When the AP 2015 receives a failure indication message 2025 from the WTRU 2020, the AP 2015 may forward this message to the CMF 2010 as a BA reconfiguration request 2030. If the CMF 2010 does not have any available channels (2150), it may instantly reply back with a BA reconfiguration response (2155) indicating that the AP 2015 may "escape" (i.e., abandon) the current channel while the CMF 2010 looks for a new available channel. The AP 2015 may forward this message to the WTRU 2020 as a CSA message 2160 indicating that the WTRU 2020 may operate on remaining channels (2165). If a primary channel failure has occurred, the new primary channel may be picked from the "backup list" IE. When the CMF 2010 finds the new channels (2170), the CMF 2010 may sends another BA reconfiguration response 2175 to the AP 2015 with new channel(s), which is forwarded to the WTRU 2020 as another CSA message 2180 and the WTRU 202 may now operate on all four channels (2185) as specified in the CSA message 2180.

Additionally, the channel time line for primary channel failure is shown in Figure 22, and the channel time line for non-primary channel failure is shown in Figure 23. If it's a case of primary channel failure, the new primary channel is picked from the "backup list" IE as shown in Figure 22, (where the secondary channel has become the new primary channel). If the channel failure occurs on a non-primary channel, primary CSMA continues to use the same primary channel as before the failure occurred, as shown in Figure 23.

High priority (HP) control messages may be delivered in the context of a primary CSMA approach. The control message and data may be transmitted in the same channels and thus compete with each other. Therefore, it is desirable to deliver the control messages with high robustness and minimum delay. For reference, the different types of control messages which are not given in IEEE 802.11n and their priority are presented in Figure 24. The high priority control messages may be transmitted by periodic delivery with/without beacon, (i.e., sensing reports from the WTRUs to the DSM system), and independent transmission by an event trigger (i.e., a CSA message).

To avoid collision, some high priority control messages, (i.e., periodic sensing results, latest channel back-up), may be attached in the beacon information which is periodically delivered in the four channels. However, to improve the robustness of high priority control message, this type of control message is repeatedly filled in the reserved fields of the four segmented beacons, (as shown in Figure 24), in the four physical channels. If some event occurs right before the beacon time, the related message may be filled in the beacon message. For example, if a channel switch is to occur, the announcement may be sent in the beacon.

If there is any emergency taking place, (i.e., channel failure, channel switch, congestion report, and the like), and the next beacon may not be coming soon, (i.e., gap between the latest beacon transmission and event is larger than doc11MinGap, which is a newly defined parameter), or the transmitting device to deliver the control message is not the AP, then the message needs to be delivered by the AP or WTRU with a minimum delay. All of these types of messages may be delivered with a robust modulation mode and coding rate, (i.e., the lowest modulation mode and coding rate).

Four access categories (ACs) are defined in IEEE 802.11. As shown in Figure 24, a WTRU may send a notice to a buffer controller to put a message with the highest AC in the front end of an AC buffer. This type of control message may be delivered as data frame. For example, the congestion report or channel failure report from WTRUs to an AP may have the frame format of a measurement request.

In aggregated channels implementation, a measurement request message 2500 including a channel number field 2505, a measurement start time field 2510 and a measurement duration field 2515 may be used, as shown in Figure 25. The number of bits used in the channel number field 2505 may be reduced to 2 bits. For example, if a WTRU suspects that there is congestion or high interference in a secondary channel, the channel number field 2505 may be indicated as 01.

Figure 26 shows an example of the channel number field 2505 inside of the IEEE 802.11 measurement request message 2500 of Figure 25. Embedded in a lower AC, if the high priority control message sent by the WTRU does not win the channel access, it is the other AC from the same transmitter that wins the channel access. This type control message (packed as a MPDU) may be added into the buffer of that AC which wins the contention. Then, this control message may be delivered with other messages together in the case that the high priority message does not win the channel access.

As the high priority message delivered by AP may be more systematic, (i.e., a CSA message would be better to be delivered with no delay). This type of message may be transmitted without backoff, and the most robust modulation and coding scheme (MCS) set, (i.e., the lowest modulation mode and coding rate). As long as the primary channel is idle for AIFS, and the non-primary channels are idle for PIFS, the WTRU may transmit this control message immediately without performing backoff. The AIFS for this type of transmission may be decreased as well. For example, AIFSN = 1 (in the adjacent channel interference (ACI)/AIFSN field), which indicates the total value of AIFS = one slot time + SIFS. As shown in Figure 27, to improve the robustness, this type of control message may be repeated over the four physical channels.

When there are multiple channels available in unlicensed or licensed bands, (e.g., TVWS), performing MAC layer aggregation over these channels may provide an effective solution to make use of these available channels. Using multiple channels may allow more data to be transmitted, thereby increasing the system throughput.

Figure 28 shows an example of MAC layer aggregation unit 2800. As shown in Figure 28, an aggregated data stream 2805 may be separated into a number of available MAC layers 2810 and aggregated physical channels 2815, and may be transmitted over these channels independently. Therefore, the MAC layer aggregation may require the MAC layer aggregation unit 2800 to be capable of operating on these channels simultaneously without interfering with each other. However, half-duplex devices may not transmit and receive at the same time, even on different channels. This may introduce a synchronization problem in wireless communications, for example, IEEE 802.11 communications, which may require a positive acknowledgement (ACK) upon the successful reception of a packet. IEEE 802.11 may require that after the successful reception of a frame requiring acknowledgment, transmission of the ACK frame may commence after an SIFS period, without regard to the busy/idle state of the medium.

Due to the channel variations over time and the different qualities of the aggregated channels, it may be difficult to guarantee that each transmission over these channels ends at exactly the same time. Therefore, transmission of an ACK, triggered by the successful reception of frames on the different channels, may result in simultaneous reception, (receiving frames in one channel), and transmission, (transmitting an ACK in the other channel), as shown in Figure 29. In addition, the greater the difference in the transmission over each of the channels, the less efficient the use of these channels becomes, as there is an increase in overall idle time on one or more of the channels.

Simultaneous transmission and reception may be infeasible in half-duplex devices because it may cause self-interference. For example, the reception of a frame may be interfered with due to the out-of-band emission from the transmitter. This may make it necessary to use algorithms to synchronize the acknowledgement procedures performed by the receiver over the aggregated channels. Synchronizing the ACKs may result in idle time that is longer than an SIFS period between the data transmission and ACK transmission. To address this issue, the algorithms may also have to prevent other devices from accessing the channel during this time.

To solve the synchronization problem described above, different rules may be applied to the channel transmission when using MAC aggregation, for example, forcing the transmissions in the aggregated channels to end at the same time. However, in the case where packets need to be retransmitted due to failed transmissions in one or more channels, the retransmission may break the rules implemented to ensure synchronization. Also, the contention window for the mixed transmission, (i.e., first-time transmission and retransmission), may be another issue that does not need to be addressed in single channel transmission, for example, in IEEE 802.11. Therefore, a MAC retransmission solution may be used for retransmissions in MAC layer aggregation such that the synchronization criteria may be met.

In the following description, it is assumed that four physical channels operating over the non-contiguous spectrum are being used. However, it will be appreciated that the algorithms described below may be applied to MAC layer aggregation over any number of physical channels. It may also be assumed that primary CSMA is being implemented for the MAC layer aggregation.

To synchronize the acknowledgement transmissions over the aggregated channels, the coordination among the aggregated channels may be handled by implementing a primary channel ending last procedure and a common virtual sensing procedure.

The primary channel ending last procedure implements the primary CSMA in MAC layer aggregation. In this scenario, one approach to ensure acknowledgment synchronization may be to impose that the transmission on the primary channel always ends last or approximately at the same time as the transmission over the secondary channels. Figure 30 shows a procedure for synchronizing ACK transmission to avoid collisions.

The following rules or any combination of the rules may be used for synchronizing ACK transmission to avoid collisions. First, transmissions on the different channels may not need to end at the same time, but data transmission on the primary channel may end last. Second, the ACK procedure when a data/management frame is received on the primary channel may be the same as used in IEEE 802.11. For example, after a successful reception of a frame requiring acknowledgment, transmission of the ACK frame may commence after an SIFS period, without regard to the busy/idle state of the medium. Third, when a data/management frame is received on the secondary, tertiary, and quaternary channels, the ACK procedure may be such that after a successful reception of a frame requiring acknowledgment, transmission of the ACK frame may commence after the primary channel has been idle for an SIFS period. Fourth, data/management frames sent on the primary channel may expect an ACK in "SIFS+ACK transmission time" after transmission ends. However, data/management frames sent on the secondary, tertiary, and quaternary channels may expect their respective ACKs in "SIFS+ACK transmission time" after the primary channel transmission ends.

Alternatively or additionally, to synchronize the acknowledgement transmission in aggregated channels, a common virtual sensing NAV value may be used in all channels, so that the primary channel transmission may not end last. Although the following focuses on primary CSMA, common virtual sensing may be implemented for any other CSMA algorithm, for example, combined CSMA, where no primary channel may be defined and sensing may be performed over all aggregated channels.

This may impact how the duration field in a frame header is set. In IEEE 802.11, the medium may be determined to be idle only if both the physical and virtual carrier sense mechanisms indicate it to be idle. The virtual carrier sense mechanism may be called the NAV. The NAV may be carried in the duration field of the MAC headers that announce the duration of the busy status of the medium.

The current rules for setting the duration field may require that within all data or management frames sent in a contention period (CP) by the quality of service (QoS) WTRUs outside of a controlled access phase (CAP), following a contention access of the channel, the duration/ID field may be set to one of the following values. First, for management frames with a QoS data subfield set to zero and unicast data frames with ACK policy subfield set to normal ACK, the time required for the transmission of one ACK frame, (including appropriate interframe space (IFS) values), if the frame is the final fragment of the transmission opportunity (TXOP), or the time required for the transmission of one ACK frame plus the time required for the transmission of the following MPDU and its response if required (including appropriate IFS values). Second, for unicast data frames with the ACK policy subfield set to "no ACK" or "block ACK" and for multicast/broadcast frames, the duration/ID field may be set to zero, if the frame is the final fragment of the TXOP, or the time required for the transmission of the following MPDU and its response frame, if required, (including appropriate IFS values). Third, the duration/ID field may be set to the minimum of the time required for the transmission of the pending MPDUs of the access class (AC) and the associated ACKs, if any, and applicable SIFS periods, and the time limit imposed by the management information base (MIB) for that AC minus the already used time within the TXOP.

To effectively avoid collisions from WTRUs and uncoordinated APs, the duration field value may be derived based on the time when the longest transmission will end. Depending on the transmission type, (fragmented packet transmission, continuing TXOP or not, and the like), each duration field may be based on the SIFS + ACK transmission time associated with the channel with the longest transmission + delta. Delta may be the difference between the longest transmission time and the transmission time of that specific channel.

The duration field may be interpreted as the duration in microseconds (μs) when the value in the field is less than 32,768. Otherwise, it may indicate that the field should be interpreted as the association identifier.

A transmitter may decide which frame will take the longest to transmit before any are sent. This may not only be a factor of the size of the frame, but also the modulation and coding scheme used on each channel. For unicast data frames with a policy subfield set to normal ACK, the transmission time of each frame may be calculated. This calculation may be performed as follows:

$$packet_xmit_time = 80\mu s + (262 + size_of_data) / data_rate, \qquad \text{Equation (1)}$$

where 80μs accounts for the physical layer convergence protocol (PLCP) header; 262 is the number of bits in the other fields of the MAC frame; *size_of_data* is the number of bits to be included in the data field; and *data_rate* is the operational transmit speed of the channel.

For the transmission of 4 packets with different lengths or modulation schemes, each may have a different duration field value as follows: non-fragmented packet transmission using a distributed coordination dunction (DCF), or the last packet transmission in the TXOP in a hybrid coordination function (HCF) contention-based channel access (EDCA), or the last fragment transmission in DCF. For the frame with the largest transmission time (*MAX_XMIT_TIME*), the value may be set to the SIFS time plus the transmission time of an ACK packet in the channel with the lower modulation and coding scheme (MCS), such that:

$$duration_field = SIFS_time + ACK_TX_TIME \text{ (pre-defined MCS).} \qquad \text{Equation (2)}$$

For the other frames, the duration field may include the SIFS time plus the transmission time of an ACK packet in addition to the difference in transmission time between the packet being sent and the largest transmission time. Thus, the value may be set to:

$$duration_field = (MAX_XMIT_TIME - packet_xmit_time) + SIFS_time + ACK_TX_TIME \text{ (pre-defined MCS)}, \quad \text{Equation (3)}$$

where *packet_xmit_time* corresponds to that of the packet being transmitted. For retransmissions of failed packets, the duration field value in the saved copy of the packet may be updated to match the other packets it is being sent along with.

Figure 31 shows a duration field example in non-fragmented or single fragment packet transmission and the last transmission of a TXOP. Figure 31 shows that the maximum transmission time (*MAX_XMIT_TIME*) may occur on the secondary channel. The duration field for the secondary channel may therefore be the shortest. The duration field length may be different for the other packets and may go from the end of the packet transmission to the end of the ACK. The tertiary channel transmission may be a good example of the description above.

The duration field value may also be determined according to the non-last fragment transmission in the fragmentation case or non-last packet transmission in the TXOP in the EDCA. In this case, the duration field may include one more SIFS times, adding on another (SIFS time + ACKtime) and the longest transmission time among the 4 packets in the next transmission (*NEXT_MAX_XMIT_TIME*). For example:

$$duration_field = (MAX_XMIT_TIME - packet_xmit_time) + SIFS_time + 2 \times (ACK_TX_TIME \text{ (pre- defined MCS)} + SIFS_time) + NEXT_MAX_XMIT_TIME, \quad \text{Equation (4)}$$

where *packet_xmit_time* may correspond to the transmit time of the current packet being transmitted in that channel, *MAX_XMIT_TIME* may represent the longest transmission among the 4 physical channels, and *NEXT_MAX_XMIT_TIME* may correspond to the longest time required for the next transmission among the 4 physical channels. Figure 32 shows a duration field example in fragmented packet transmission or the non-last transmission of a TXOP. The *MAX_XMIT_TIME* and *NEXT_MAX_XMIT_TIME* may exist in different channels.

The receiving station logic of a receiver may also be impacted by the common virtual sensing technique used by the transmitter. An important case to be handled may be when the receiver finishes receiving a full packet on one channel, and the receiver continues to be busy on other channels. In this case, the receiver may decide whether or not to wait for any more packet transmissions to finish on the other channels, or how long to wait before abandoning the other transmissions. The combined use of the duration field and the PHY-RXSTART.indication may help decide when to stop reception on the other channels.

The RXSTART.indication may be provided by the physical layer (PHY) to notify the MAC that it has received a valid start frame delimiter and PLCP header. The MAC may be able to use this by recording the times at which it received this indication on each channel, and comparing them to the time that it received this indication on the primary channel. If these occur at the same time for the other channels, then the MAC may know that they are not interference and that it should wait for their completion before beginning the SIFS period. Otherwise, if this indication is not received at the same time on the other channels, then the MAC may not wait for the transmissions on this channel to complete. To protect against waiting for packets that become interfered with after this indication is received, a timeout may be initialized. This may be set to the transmission time of the longest possible MAC data frame on the lowest MCS. This timeout may be cancelled or altered once the first packet is successfully received.

Once the first packet of a transmission set is received, the WTRU may extract the duration field from the frame header. This value may contain either zero (for broadcast packets) or a minimum of SIFS and the transmission time of an ACK packet. If the received frame requires an ACK and the duration field is set to the SIFS time plus the ACK transmission time, then the SIFS period may begin immediately. This may occur because the frame received was either the longest frame transmitted, or the transmission of the other frames ended at the current time as well. As the receiver may now know exactly when SIFS will start, the timeout that was set due to the RXSTART.indication may be cancelled.

Otherwise, the amount of time may represent one of two things, depending on whether the transmitter is currently in an ongoing TXOP or not. First, if the transmitter is not currently in an ongoing TXOP, for example, it is the last packet in the TXOP, the duration field may represent the time remaining in the longest ongoing transmission, plus SIFS and the transmission time of an ACK packet. Second, if the TXOP will be continued, (the first or the middle packet in the TXOP), the duration field may be at least the sum of the amount of time as above, plus another SIFS plus the longest transmission time in the next set of packets, plus the other (SIFS + transmission time required for ACK).

If the duration field is less than SIFS + ACK transmission time + SIFS + PLCP header, then the transmitter may not be continuing a TXOP. Therefore, the receiver may schedule the SIFS period to begin t microseconds ($\mu$s) after the

end of the received packet:

(μs) after the end of the received packet:

$$t = duration_field - SIFS_time - ACK_TX_TIME. \quad \text{Equation (5)}$$

The WTRU may begin its SIFS backoff period at this time, regardless of whether its receiver is still busy on other channels. This may be because these other channels would be experiencing interference. Figure 33 shows a duration field example illustration of distinguishing a continuing TXOP from a non-continuing TXOP.

If the duration field is not less than that amount of time, then the TXOP may continue and the timeout that was set at the time of the RXSTART.indication may be adjusted to t microseconds (μs) after the end of the received packet. The receiver may wait for the packets to finish on the channels which received an RXSTART.indication at the same time as the primary channel.

Figure 34 shows an example dynamic spectrum management (DSM) system 3400, which may operate in a local area, such as a home or a small office. The DSM system 3400 may include a DSM engine 3405 and a plurality of DSM clients 3410.

The DSM engine 3405 may manage wireless communications taking place in the local area operating in unlicensed or opportunistic bands such as the 2.4GHz and 5GHz ISM bands, TVWS bands and 60 GHz bands. The DSM engine 3405 may also aggregated bandwidth over licensed and unlicensed bands. As shown in Figure 34, the DSM engine 3405 may be interconnected DSM clients (i.e., WTRUs) 3410 and to external networks such as a cellular core network 3415, a TVWS database 3420, and IP networks 3425 through a wireless wide area network (WWAN) or wireline links.

The DSM engine 3405 may operate in the TVWS band as a mode II device, since the DSM engine 3405 may have access to the TVWS database and may have geo-location capability. The DSM engine 3405 may also operate in sensing only mode, which may allow the DSM system 3400 to operate in a larger subset of channels than what the TVWS database 3420 may allow.

The DSM clients 3410 may be cognitive radio enabled client devices capable of establishing a communication link with the DSM engine 3405 directly. The communication link between a DSM engine 3405 and a DSM client 3410 is referred to as a DSM link 3430 and it may provide enhanced control plane and user plane functionalities. The DSM link 3430 may be based on an enhanced IEEE 802.11 radio access technology (RAT) capable of operating over a non-contiguous spectrum.

The DSM link 3430 may also be based on other RATs, such as LTE. The DSM clients 3410 may not have access to the TVWS database 3420 and may rely on the DSM engine 3405 to indicate which channels may be used. A DSM client 3410 may also operate in a sensing-only mode. In the sensing-only mode, the DSM client 3410 may periodically verify that no primary user occupies channels identified by the DSM engine 3405 as sensing-only mode channels to enable transmission in these channels. The DSM engine 3405 may schedule silent periods to enable adequate spectrum sensing on these channels at the DSM clients 3410. A DSM client 3410 with a sensing-only capability may operate on a subset of channels as a mode I device. A procedure for primary user detection may need to be implemented on channels identified as sensing-only channels. The DSM clients 3410 may communicate directly with each other through a direct link 3435. The radio resources and radio access technology (RAT) used for the direct link 3435 may be controlled by the DSM engine 3405.

Figure 35 shows an example architecture of the DSM engine 3405. The DSM engine 3405 may include a channel management function (CMF) 3505, a multi-network connection (MNC) server 3510, a DSM policy engine 3515, access point (AP) functions 3520, a sensing processor (SP) 3525, a centralized WTRU database 3530, and a home Node-B (HNB) function 3535.

The CMF 3505 is the central resource controller and may be responsible for managing the radio resources and allocating them efficiently to each of the WTRUs and APs.

The AP functions 3520 may provide the main connectivity function for the WTRUs (i.e., DSM clients) that join the network. It may contain a coordination function which manages the aggregation based on the channels selected by the CMF 3505. The responsibilities of the AP functions 3520 may include performing basic IEEE 802.11 MAC/PHY functionalities, (or LTE functionalities in the case of an LTE-based DSM link), supporting new control channel schemes, performing contiguous and non-contiguous spectrum aggregation of channels determined by the CMF 3505, supporting neighbour/node discovery and channel sounding, supporting control channel and common data channel setup procedures for the IEEE 802.11-based DSM links 3430, supporting control channel robustness and channel switch procedures for LTE-based DSM links, and supporting direct link configuration, setup, tear-down, and maintenance.

If a primary user of an unlicensed or opportunistic band begins transmitting on a channel, according to FCC rules, the DSM engine 3405, as shown in Figure 35, may need to evacuate the channel within a certain time period. The detection of a primary user may depend on the sensing processor (SP) 3525. Once the SP 3525 detects a primary user, it may inform the CMF 3505 in the DSM engine 3405.

The DSM engine 3405 and the associated WTRUs may gain access to the aggregated channels through contention using PCSMA. Whenever a WTRU needs to transmit, it may use all of the channels and it therefore may need to verify that all of the channels are free. One method involves assigning one channel as a primary channel and performing CSMA on the primary channel. When a WTRU or the DSM engine 3405 has control data or communication data to transfer, it may perform CSMA on the pre-assigned primary channel. The other three channels may be assumed to have the same channel status as the primary channel. For instance, if the CSMA on the primary channel returns a status of busy, all of the channels may be assumed to be busy. Once the WTRU or the DSM engine 3405 gains access to the primary channel, it gains access to the primary and non-primary channels. On gaining access to the primary channel, the WTRU or the DSM engine 3405 may check the non-primary channels for a PIFS period of point coordination function (PCF) inter-frame space (PIFS) before transmission to help ensure that all of the channels are free. Figure 36 shows an example of CSMA on a primary channel.

A device may not transmit and receive at the same time, even on different channels. As such, acknowledgement procedures by a receiver may be done in a synchronized fashion over the aggregated channels. For example, a device may not receive an acknowledgement on a given channel while transmitting over another channel. Two techniques for handling the coordination of transmission and reception are "primary channel ending last" and "common virtual sensing." Primary channel ending last may implement acknowledgment synchronization by ensuring the primary channel ends last or at approximately the same time as the transmission over the secondary channels. Common virtual sensing may use a common virtual sensing (NAV value) in all channels which may not require the primary channel transmission to end last.

According to FCC rules, the secondary user may be required to vacate a TVWS channel once a primary user is detected on the TVWS channel. In order to detect primary users, the DSM engine 3405 may consult a TVWS database 3420 or perform spectrum sensing. To detect a primary user using spectrum sensing, an AP and its associated WTRUs may need to be silent at certain times. The duration and the frequency of silent periods may depend on spectrum sensing algorithms while following FCC rules. According to FCC rules, the in-service monitoring may be required to be less than 60 seconds. Also, the silent period information may be broadcast to all of the WTRUs associated with the AP. Hence, the IEEE 802.11 MAC layer architecture, (or LTE architecture in the case of an LTE RAT for the DSM system), may be adjusted to support halting transmission during the silent period, silent period determination, and silent period synchronization between an AP and WTRUs.

IEEE 802.11 APs or WTRUs operating as secondary users may switch operating channels depending on a primary user's presence. To direct the WTRUs to new operating channels, the AP may broadcast channel reallocation information to the WTRUs. This information may have a high priority and its transmission may affect the regular data transmission. Hence, the IEEE 802.11 MAC layer architecture may be modified to incorporate the transmission of channel re-allocation information.

A typical channel bandwidth may be 6 MHz and a typical WiFi channel bandwidth may be 20 MHz. As such, the channels may be aggregated to support the bandwidth of a WiFi channel. An AP or a WTRU may operate on a plurality of contiguous or non-contiguous parallel PHY channels. Hence, the IEEE 802.11 MAC layer architecture may be modified to support distribution of frames over these PHY channels. Such frame distribution may be dynamic due to the unreliability of the PHY channels. For example, if one of the channels becomes unavailable due to a primary user, then the frames assigned to this channel may be reassigned to another channel.

The transmission of channel reallocation information and silent period synchronization information for spectrum sensing on one or more of the PHY channels may lead to frame re-ordering. Consequently, the frames assigned to these channels may be reassigned to other channels.

Due to the out-of-band emission, an AP or WTRU should not simultaneously transmit and receive on different channels because it may self-jam. Specifically, if an AP or a WTRU transmits on one TVWS channel, while receiving on another TVWS channel, then the transmitted signal may be received at the latter channel which may cause reception errors. To efficiently use all channels, the AP or WTRU may synchronize the transmission duration over the channels. Hence, one solution may be to arrange transmissions such that those beginning simultaneously may also end simultaneously or approximately simultaneously. To achieve this goal, the frames to be transmitted on different PHY channels may be appropriately sized so that the over-the-air transmission durations are approximately the same. Modulation and coding schemes (MCS) may be different for PHY channels experiencing different conditions. Therefore, frames to be transmitted on different channels may have different sizes. A frame to be transmitted on a better channel may be of a larger size, and a frame to be transmitted on a worse channel may be of a smaller size. To generate frames of the desired lengths, the IEEE 802.11 MAC may need to be modified.

Figures 37A and 37B show an example MAC layer architecture 3700 which supports quality of service (QoS). Except for the CMF 3505, the MAC layer architecture 3700 may be incorporated into an AP function 3520 of the DSM engine 3405. As shown in Figure 37A, the example MAC layer architecture 3700 includes a MAC layer coordinator 3705 including a buffer controller 3710, a frame controller 3715, a QoS controller 3720, a silent period scheduler 3725, and a channel monitor 3730 to enhance the regular MAC layer architecture to support the IEEE 802.11 operation on an unlicensed or opportunistic band, with the carrier aggregation functionality.

As shown in Figure 37B, the MAC layer architecture 3700 may distribute frames over a plurality of parallel PHY channels 3735 using a plurality of logic buffers $3740_1$ - $3740_4$ that may be created within each of a plurality of ACs $3745_1$ - $3745_N$. Each logic buffer 3740 may store the frames to be sent over a specific PHY channel 3735.

As shown in Figures 37A and 37B, the MAC layer architecture 3700 may further include an AC mapping unit 3755, a plurality of aggregated MAC service data unit (A-MSDU) aggregation units $3760_1$ - $3760_N$, fragmentation units $3765_1$ - $3765_N$, MPDU header and CRC units $3770_1$ - $3770_N$, a plurality of aggregated MAC protocol data unit (A-MPDU) aggregation units $3775_1$ - $3775_N$, a plurality of enhanced distributed channel access functions (EDCAFs) $3780_1$ - $3780_N$, a switch 3785 and a digital transceiver 3790.

Once a MAC service data unit (MSDU) frame from the upper layer is received, the MAC layer may examine the user priorities (UP) of the frame. In one example, 8 UPs may be mapped to four access category (AC) values. The four AC types, listed with priorities from high to low, may include: AC_VO (voice), AC_VI (video), AC_BE (best effort) and AC_BK (background). Although this example includes four AC types, other embodiments may include any number of AC types. The mapping may be performed at the AC mapping unit 3755. There are four branches after the AC mapping unit 3755, one corresponding to each AC 3745. The A-MSDU aggregation units 3760 may aggregate several MSDU frames to reduce the MAC layer overhead, and hence, increase the data throughput. Each aggregated MSDU (A-MSDU) frame may be assigned a sequence number and may have integrity protection. Then, an MSDU frame may be fragmented by the fragmentation units 3765. Fragmentation may not be performed on an A-MSDU frame.

Next, the fragmented frame may be saved in a logic buffer 3740, which may trigger the contention of the medium resource. The contention may be executed by an EDCAF 3780. Each AC 3745 may have its own EDCAF 3780, and these EDCAFs 3780 may apply different parameters so that the EDCAF 3780 associated with a higher priority AC 3745 may win the contention with a higher probability. Once an EDCAF 3780 obtains the medium resource, it may begin to transmit the frames in its buffer. MPDUs may be constructed by adding an MPDU header and cyclic redundancy check (CRC) to a segmented frame using the MPDU header and CRC units 3770. Several MPDUs may also be aggregated into a single A-MPDU frame and sent to the PHY layer.

The frame controller 3715 may be configured to control the A-MSDU aggregation units 3760, the fragmentation units 3765, and the A-MPDU aggregation units 3775, such that each A-MPDU output may be designed to transmit on a specific PHY channel 3735, and the A-MPDU transmission duration over each PHY channel 3735 may be approximately the same.

The frame controller 3715 may first receive MCS information for all four PHY channels 3735. It may then pre-specify an over-the-air duration based on the MCS values of the four PHY channels 3735. It may then control the A-MSDU aggregation units 3760, the fragmentation units 3765 and the A-MPDU aggregation units 3775 to generate A-MPDUs designed for each PHY channel 3735 to have similar over-the-air duration. It may also control the generation rate of the frames for any PHY channel 3735. This operation may ensure buffer balance, and subsequently load balance among the four PHY channels 3735. Initially, the frame controller 3715 may apply the equal generation rate for all PHY channels 3735, in a round robin fashion. Upon receiving the buffer status information from the buffer controller 3710, the frame controller 3715 may adjust its frame generation style accordingly.

The creation and maintenance of the logic buffers 3740 may be performed by the buffer controller 3710. To efficiently use the PHY channels 3735, the buffer controller 3710 may distribute and reorder frames among the logic buffers 3740 to balance the logic buffers 3740.

Out-of-band emissions may prevent transmitting on one PHY channel while receiving on another PHY channel on the same WTRU. Consequently, in one embodiment, transmissions on these channels start and end at approximately the same time. This may be achieved by adjusting the frame size according to the channel condition. For example, the frames to be sent over a better channel may be larger than the frames to be sent over a worse channel. The accurate calculation of frame sizes may be performed by the frame controller 3715 in the MAC layer architecture 3700 of Figure 37. The frame controller 3715 may control the A-MSDU aggregation units 3760, the A-MPDU aggregation units 3775, and the fragmentation units 3765 to generate frames with desired sizes.

A secondary user may need to cease transmission on a channel following the detection of a primary user on the channel. One way to detect a primary user is through spectrum sensing. One implementation of spectrum sensing may require all the secondary users to be silent during the sensing duration. The silent period scheduler block may determine the frequency and the duration of the silent period and synchronize its silent period decision with all of the associated WTRUs.

Alternatively, an AP or WTRU may trigger the detection of primary users when the AP or WTRU observes the channel conditions or transmission conditions degrade below a certain threshold. This is called event triggered primary user detection. The AP or a WTRU may need to report to a channel management function (CMF) 3505 in the MAC layer architecture 3700 of Figure 37. The channel monitor 3730 may collect PHY channel information, such as MCS information, on each channel. The channel monitor 3730 may provide such information to the buffer controller 3710 or the frame controller 3715. It may also forward a channel report from the buffer controller 3710 to the CMF 3505 based on the frame flows within the logic buffers 3740, and forward the channel update information from the CMF 3505 to the buffer controller 3710. The CMF 3505 may also inform the buffer controller 3710 to empty the buffer corresponding to the channel with a primary user.

There may be four AC buffers 3745 (i.e., N=4) in the MAC data plane architecture, and there may be a logic buffer 3740 for each AC 3745 to store the frames of that category before they are successfully delivered, (i.e., the ACK for that frame transmission may be received). Also, each AC may be associated with its own EDCAF 3780 to maintain a backoff procedure for the medium resource contention. Upon a successful contention, the EDCAF 3780 of an AC may be granted an EDCA transmission opportunity (TXOP) for the transmission of frames of this category. Contention window sizes and maximum TXOP durations for different ACs may be different. This allows a higher priority AC to access the medium with a higher probability.

If there is only one PHY channel 3735, the EDCAF 3780 may quit the TXOP and invoke a backoff procedure when there are no more frames in the buffer of that AC, there is a transmission failure, i.e., (an ACK (or Block ACK) frame that was expected is not received), or the maximum TXOP duration is reached.

Multiple frames may be transmitted in an EDCA TXOP if there is more than one frame pending in the AC. However, the frames pending in other ACs may not be transmitted in this EDCA TXOP. After the completion of the immediately preceding frame exchange sequence, a WTRU may commence transmission of a new frame if the duration of transmission plus any expected ACK for that frame is less than the remaining medium occupancy timer value.

If there is a transmission failure, the corresponding channel access function may recover before the expiry of the NAV setting. Furthermore, with a transmission failure, a WTRU may continue transmitting after the carrier sense mechanism indicates that the medium is idle at the boundary before the expiry of the pre-specified NAV timer.

The maximum TXOP duration for an AC may be determined by an AP and broadcast through beacon and probe response frames to all of the WTRUs.

When using four parallel PHY channels, the transmission rate may be approximately quadruple of that of a single PHY channel. Within the four parallel PHY channels, one of them may be selected as a primary channel. Instead of sensing all four PHY channels before transmissions, a WTRU may sense the primary channel for the duration of an AIFS plus a backoff period. Medium sensing on the other three channels may be performed with the duration of a PIFS period. Two possible schemes for transmission duration of the primary channel and other channels are "primary channel ending last" and "common virtual sensing." In the former scheme, the transmissions on the primary channel may always end last, ensuring the reservation of channel resources. The latter scheme applies NAV for channel resource reservation.

Once an EDCAF 3780 is granted an EDCA TXOP, it may transmit multiple frames. The EDCAF 3780 may quit the TXOP and invoke backoff procedure when there are no more frames in the buffer of that AC, there is a transmission failure on the primary PHY channel, or the maximum TXOP duration is reached.

When there are no more frames in the buffer of that AC, a similar procedure as specified in the IEEE 802.11n standards may be followed, (i.e., frames from different ACs may not be transmitted within an EDCA TXOP).

In the single PHY channel case, the transmission failure may terminate the TXOP in order to avoid potential collisions. In the multiple PHY channels case, the transmission failure on a PHY non-primary channel may terminate the transmission on this channel during the current TXOP duration. Alternatively, transmission may continue on the other available PHY channels during this TXOP duration. Unless a transmission failure occurs on the primary PHY channel, the corresponding channel access function may recover before the expiry of the NAV setting.

If the maximum TXOP duration remains the same, the buffer size of each AC may be only ¼ of the size of the buffer for the single PHY channel. On the other hand, the buffer size may remain the same, but the AP may reduce the maximum TXOP duration.

The buffer controller 3710 shown in the MAC layer architecture 3700 of Figure 37 may implement buffer creation, (i.e., creating buffers within each AC for PHY channels), frame insertion, (i.e., distributing input frames (e.g., A-MPDU frames) to proper buffers), frame removal, (i.e., removing frames from buffers), frame reordering, (i.e., switching frames between buffers or switching frames to different locations within a buffer), buffer balancing, (i.e., ensuring the buffers within each AC are evenly loaded), channel condition reporting, (i.e., reporting the case when a PHY channel is not working properly), and buffer removal, (i.e., removing buffers when a PHY channel is unavailable).

The buffer controller 3710, together with the frame controller 3715 shown in the MAC layer architecture 3700 of Figure 37, may try to ensure frames sent over a PHY channel 3735 takes approximately the same duration. One assumption may be that the PHY channels 3735 are quasi-static, which implies the MCS values of each channel may not change frequently.

All the following examples are for the case that all frames are to be sent to a single destination. However, the MAC layer architecture 3700 of Figure 37 may also be applied to multiple destinations.

Under the assumption of four parallel PHY channels 3735, the buffer controller 3710 may first receive the channel MCS information from the channel monitor 3730. Then, the buffer controller 3710 may allocate four logic buffers 3740 for every AC 3745. Each logic buffer 3740 may correspond to a PHY channel 3735. In this case, the frames in the same logic buffer 3740 may be sent over the same PHY channel 3735. An indicator for each frame may be used to indicate to which logical buffer a frame is assigned.

According to the quasi-static channel assumption, the frames within a common buffer may have similar lengths so that the durations of these frames over-the-air are similar. However, since different PHY channels have different MCS values, the frames from different buffers within an AC may be of different length. Subsequently, the buffers corresponding to different PHY channels may have different sizes.

The outputs of the A-MPDU aggregation block may be A-MPDU frames of different lengths. Each A-MPDU may be assigned to a specific PHY channel. The length of an A-MPDU may be designed such that if it is sent over its assigned PHY channel, its duration over-the-air may be approximately the same as other frames. The buffer controller 3710 may assign an input frame to the proper buffer, based on the frame length and the MCS information of PHY channels. Frames may be distributed to ensure the transmission of a packet over its designed PHY channel lasts approximately the same duration. For example, if a frame is long, it may be assigned to the buffer corresponding to the PHY channel with good channel conditions, which implies a high MCS value.

Another embodiment includes an input frame containing the information of which PHY channel via which it is to be sent. When a frame is sent out and an ACK is received, then the buffer controller 3710 may remove the frame from buffer. If no ACK is received, then the frame may be kept in the buffer unless the maximal number of retransmissions is reached or the life time of a frame expires.

For each unsuccessful transmission, a counter of the number of re-transmissions for a frame may be increased by 1. There may be two lifetime limits on a frame. If a buffer is full, then any input frames assigned to this buffer may be removed as well.

When any of the buffers within an AC is not empty, the ACs associated EDCAF 3780 may contend for an EDCA TXOP. This may invoke a backoff procedure. During a TXOP, frames in buffers may be transmitted. If the ACK of a transmission is received, the frame may be removed from the buffer. Multicast or broadcast frames which do not require ACK may be removed from the buffer automatically when they are transmitted. Otherwise, the frame may be kept in the buffer for a retransmission until some restrictions are broken, such as the maximum number of retransmissions is reached.

There are several situations that the buffer controller 3710 may transfer packets from one buffer to another buffer, or from one location to another location within a buffer. In a TXOP, some buffers are empty, while other buffers are not. A PHY channel may become unavailable due to the arrival of a primary user or strong interference, which may trigger by a message from the channel monitor 3730. A frame may stay in a buffer longer than its maximal allowable delivery time, and a scheduled silent period on certain PHY channels may defer the transmissions of the frames assigned to these channels.

Packet transfer may occur among the buffers within the same AC. A block ACK mechanism may be applied to ensure the transmissions on the primary channel end last. The frame reordering process may be easily implemented due to the logical buffer.

Although the following discussions regarding packet reordering processes are based on the primary CSMA assumption, they may also be applied to the regular CSMA case.

When a buffer is empty during a TXOP, there are at least the following three scenarios.

(1) If there is exactly one buffer with more than 1 frame, then the buffer controller 3710 may transfer a frame from that buffer to the empty buffer.

(2) If there is more than one buffer with more than 1 frame, then the buffer controller 3710 may select one from the list of the candidate buffers, such that a frame from the selected buffer may be transferred to the empty buffer. The buffer controller 3710 may check the conditions of the channels corresponding to the candidate buffers, and determine the channel that has the closest MCS value to the condition of the channel corresponding to the empty buffer. The distance between two MCS values may be the absolute value of the difference between two coding and modulation rates. For example, for quadrature phase-shift keying (QPSK) modulation and rate-3/4 channel codes, the overall rate is $2 \times 3/4 = 3/2$. An alternative way to determine the closeness of two MCS values is via the difference between the MCS indices. This buffer selection scheme may ensure that the durations of frame transmissions over different channels are approximately similar.

After the buffer controller 3710 determines a suitable empty buffer, it may transfer the frame second from the front of the buffer to the empty buffer. This is because the first frame in that buffer may still be transmitted on the same channel.

(3) If there is no other buffer with more than 1 frame, the frame reordering process may not be performed when the empty buffer does not correspond to the primary channel. Alternatively, a frame may be copied from one buffer to the empty buffer. The frame to be copied may be from the buffer whose corresponding MCS value is closest to that of the empty buffer. This copy operation may result in a repeated transmission. Alternatively, a frame may be transferred from a nonempty buffer if the empty buffer corresponds to the primary channel. This may ensure the transmission on the primary channel. Alternatively, frame reordering may begin once a buffer has less than a certain number of frames.

Figures 38 and 39 show an example of packet reordering due to the empty buffer within a TXOP. Figure 38 illustrates during a TXOP, logic buffer $3740_1$ is empty; logic buffer $3740_2$ contains 1 frame; logic buffer $3740_3$ contains 3 frames and logic buffer $3740_4$ contains 4 frames. Furthermore, PHY channel $3735_3$ has the closest MCS value to PHY channel $3735_1$. By the aforementioned packet reordering scheme, the buffer controller 3710 transfers the second frame from logic buffer $3740_3$ to logic buffer $3740_1$. In this case, all 4 PHY channels 3735 are utilized.

Figure 39 illustrates logic buffers $3740_1$ and $3740_2$ are empty, logic buffer $3740_3$ has one frame, and logic buffer $3740_4$ has 3 frames. By the aforementioned packet reordering scheme, the buffer controller 3710 transfers one frame from logic buffer $3740_4$ to logic buffer $3740_1$, and transfers another frame from logic buffer $3740_4$ to logic buffer $3740_2$. This ensures that none of the four PHY channels 3735 is wasted, although the transmissions on the four PHY channels 3735 may finish at different time.

The buffer controller 3710 may transfer the frames from the buffer corresponding to the channel used by the primary user to another buffer. The selection of the destination buffer may again depend on the closeness of the MCS values of the corresponding channels. Once the destination buffer is determined, the buffer controller 3710 may transfer the frames from the buffer corresponding to the lost channel to the destination buffer in order. The frames in the front of the old buffer may still be in the front of the destination buffer. Since the transferred frames may have already experienced some delays due the presence of primary user, these frames may be inserted in the front of the destination buffer. But these frames may not be inserted before the first frame in the destination buffer, because the first frame may be under re-transmissions. Further procedures may be applied to transfer frames to proper locations in the destination buffer, depending on their sequence numbers or QoS requirements.

Packet reordering due to an unavailable channel may involve a bulk frame transfer. This may lead to overflow at the destination buffer. In this case, the buffer controller 3710 may select another buffer for transferring the remaining frames. The selection criteria may be the same. Furthermore, the buffer controller 3710 may inform the frame controller 3715 of the latest buffer status.

Figures 40 and 41 show an example of packet reordering due to an unavailable channel. In this example, it may be assumed at some time, the buffer controller 3710 receives a message from the channel monitor 3730, which includes information that PHY channel $3735_2$ is unavailable due to a primary user. Consequently, the buffer controller 3710 may empty logic buffer $3740_2$. After MCS comparison, the buffer controller 3710 may determine to transfer the frames from logic buffer $3740_2$ to logic buffer $3740_4$. However, logic buffer $3740_4$ may only hold part of the frames from logic buffer $3740_2$. Then, the buffer controller 3710 may select logic buffer $3740_1$ to store the remaining frames from logic buffer $3740_2$. It may also inform the frame controller 3715 about the buffer status.

The QoS requirements from the QoS controller 3720, or the control message QoS requirements from the CMF 3505, may be sent to the buffer controller 3710, informing the maximal delays of the frames. The buffer controller 3710 may check the frames in the buffers in all ACs 3745 to see if some frames may potentially break the transmission time limitation. If the buffer controller 3710 detects such frames, the buffer controller 3710 may perform the packet reordering process to transmit those frames within their transmission time limitation. The frames may be transferred among the buffers corresponding to similar MCS values, and the transferred frames may be inserted in the front of the new buffer.

Figures 42 and 43 show an example of packet reordering due to QoS requirements. Upon receiving the QoS requirements from the QoS controller 3720, the buffer controller 3710 may check the logic buffers 3740. In this example, the buffer controller 3710 detects that two frames in logic buffer $3740_2$ may not satisfy their QoS requirements. Then, the buffer controller 3710 may try to transfer them to another logic buffer 3740. Since channel $3735_3$ and channel $3735_2$ have similar MCS values, the buffer controller 3710 may transfer the two frames from logic buffer $3740_2$ to the front of logic buffer $3740_3$.

Sensing operations may require devices to be silent so that the detection of primary users may be performed. If each silent period is scheduled for a subset of operating channels, then the frames assigned to those channels may experience delays as transmissions may not be allowed during the silent period. Hence, the buffer controller 3710 may reorder the frames originally assigned to those channels. The detailed frame reordering operations may be similar to the unavailable channel case.

Before transmission, the frames may be distributed evenly over the four logic buffers 3740. However, with different packet transmission rates from different channels, some buffers may be heavy while others may be light. For efficient use of the PHY channels 3735, the buffer controller 3710 may keep the number of frames in each logic buffer 3740 relatively even. This avoids the situation that some buffers are almost full while some buffers are almost empty, and subsequently, there may be no frame to be sent over certain channels while there may also be too many frames to be sent over other channels. In order to evenly distribute frames over buffers, the buffer controller 3710 may inform the frame controller 3715 to generate more frames for a PHY channel if its corresponding buffer has fewer frames. It may also inform the frame controller 3715 to generate fewer frames for a PHY channel if its corresponding buffer has many frames.

When a logic buffer 3740 is full or above a certain threshold, the buffer controller 3710 may inform the frame controller 3715 to generate fewer frames designed for transmission on the corresponding PHY channel 3735. When a logic buffer 3740 is empty or below certain threshold, the buffer controller 3710 may inform the frame controller 3715 to generate more frames designed for transmission on the corresponding PHY channel 3735. The thresholds may vary with frame generation rate or other factors and they may also be fixed.

The message sent from the buffer controller 3710 to the frame controller 3715 may include an AC ID, channel ID, and an indicator of an increasing or decreasing frame generation rate. The message trigger may be that the number of frames in a buffer is greater or less than a threshold.

The buffer controller 3710 may need to report the channel conditions to the channel monitor 3730, from the buffer status viewpoints. Such a report may help the early detection of a primary user because the channel report may trigger an asynchronous spectrum sensing. The buffer controller 3710 may determine whether and when to report the channel condition. Some criteria that the buffer controller 3710 may apply are the number of re-transmissions on a channel may be above some threshold, the retransmission rate on a channel may be above some threshold, or the frame loss rate on a channel being above some threshold. The thresholds may be different for different ACs.

When receiving a message from the channel monitor 3730 that some PHY channel 3735 becomes unavailable, the buffer controller 3710 may empty the corresponding logic buffer 3740. When receiving a message from the channel monitor 3730 indicating that a new PHY channel 3735 becomes available, the buffer controller 3710 may create a logic buffer corresponding to this PHY channel 3735.

The QoS controller 3720 and the CMF 3505 may provide QoS related information to the buffer controller 3710. Such information may imply that the delivery of related messages satisfies certain requirements. The corresponding message may include frame information such as frame ID, source address, and destination address, the maximum delay of the frame, and the minimum rate the frame of this message type.

The silent period scheduler 3725 may inform the buffer controller 3710 to stop transmitting on certain channels during a certain time period. This silent period may be for the spectrum sensing operations to detect primary users. The message contents may include the duration of the upcoming silent period, the list of PHY channels 3735 to be silenced, and the starting time of the silent period.

There may be at least two types of messages from the channel monitor 3730 to the buffer controller 3710. A first message type may contain the channel MCS information. Specifically, the first message may include a destination address, up to four channels IDs and/or their frequencies, and the MCS indices of these channels. A second message type may contain the channel configuration information. The second message may include an old channel ID, an old channel definition such as the frequency range of the old channel, a new channel ID, a new channel definition such as the frequency range of the new channel, and a primary channel indicator which may indicate whether the channel is a primary channel or not.

Figure 44 shows an example call flow procedure 4400 performed by the buffer controller 3710. In this example, the buffer controller 3710 may initially receive MCS information 4405 for all of the PHY channels from the channel monitor 3730. It then may create logic buffers accordingly (4410). Once, it receives A-MPDU frame information 4415 output from the frame controller 3715, the buffer controller oversees the distribution the A-MPDU frames to proper logic buffers, based on the frame length and the channel MCS information (4420). Upon successful contention, the buffer controller 3710 schedules the frame transmissions and frame reordering process (4425). It may also inform the frame controller 3715 of the buffer status (4430) and receive more frames (A-MPDU) (4435), which may be intended for buffer balancing. Once the buffer controller 3710 receives the QoS information 4440 from the QoS controller 3720, or the control message QoS information 4445 from the CMF 3505, or the silent period information 4450 from the silent period scheduler 3725, it may schedule the frame reordering and frame transmissions accordingly (4455). In case the buffer controller 3710 detects some channels experiencing low throughput, it may report the channel condition (bad channel report) 4460 to the channel monitor 3730. After receiving the channel update information 4465, the buffer controller 3710 may perform frame reordering, buffer removal, and buffer creation operations (buffer reorganization), (4470).

According to the aforementioned buffering schemes, the frames may not be sent in the order they are received and processed at the MAC layer. This may be to meet a design requirement that the frames have similar over-the-air duration. As shown in Figure 45, the major effects of the frame disordered delivery may result in a big buffer at the receiver side because the receiver may need to receive all of the MSDU fragments before processing them.

On the transmitter side, a frame may be removed from the buffer if its maximal number of retransmissions is reached, if its life time in the MAC layer is reached, or if its life time after the first transmission is reached. Similar operations may be applied at the receiver side. This may reduce the buffer requirement at the receiver side. Further, frame reordering due to QoS requirements may ensure a frame is delivered within a certain time period and may alleviate the receiver buffer size issue.

Additional schemes to alleviate the receiver buffer size issue include adding additional frame reordering triggers. If a frame in a buffer meets one or more predetermined conditions, the frame reordering operation may be triggered. By adjusting various parameters, a tradeoff between bandwidth efficiency and receiver buffer size may be adjusted.

There are three types of physical layer protocol data unit (PPDU) frames in IEEE 802.11n: non-high throughput (HT), HT-mixed, and HT-greenfield. A 5 MHz bandwidth and OFDM modulations are assumed, which implies that each OFDM symbol lasts 16 $\mu$s. Furthermore, a guard interval of 3.2 $\mu$s is assumed for simplicity.

Figure 46 shows a non-HT PPDU data format 4600 including a PLCP headed 4602. The PLCP header may include a legacy short training field (L-STF) 4605, a legacy long training field (L-LTF) 4610, and a legacy signal (L-SIG) field 4615. The duration of the L-STF 4605 may be 32 $\mu$s and may contain 10 short preambles. The L-LTF 4610 may contain 2 long preambles plus a guard interval. The duration of the L-LTF 4610 may also be 32 $\mu$s. The L-SIG field 4615 may contain the rate and the length fields of the TXVECTOR. The duration of the L-SIG field 4615 may be 16 $\mu$s.

The non-HT PPDU data format 4600 may further include a data field 4620, which may include service bits 4625, MPDU 4630, tail bits 4635 and pad bits 4640. The service bits 4625 may have a length of 16 bits and the tail bits 4635 may have a length of 6 bits. The pad bits 4640 may vary from 0 to the number of data bits per OFDM symbol. These pad bits 4640 may be applied to ensure the whole data field is an integer multiple of OFDM symbols. The MPDU 4630 may comprise a MAC header 4645, an MSDU 4650 and an FCS field 4655. The MSDU payload may not exceed 18432 bits without encryption and integrity. The MAC header 4645 may have a length of 208 bits and the FCS field 4655 may have a length of 32 bits

The general format of a MAC header 4645 is illustrated in Figure 47. The MAC header 4645 may include a frame control field 4705 of length 16 bits, which may be composed of subfields: protocol version, type, subtype, to distribution stream (DS), from DS, more fragments, retry, power management, more data, protected frame and order.

The MAC header 4645 may include a duration/ID field 4710, which may be 16 bits in length. Its contents may vary with frame type and subtype.

The MAC header 4645 may include a plurality of address fields 4715, which may be used to indicate the basic service set identification (BSSID), source address (SA), destination address (DA) and transmitting STA address (TA) and receiving WTRU address (RA). Each address field 4715 may be 48 bits in length. The MAC header 4645 may include a sequence control field 4720, which may be 16 bits in length, including at least two subfields: the sequence number and the fragment number. The MAC header 4645 may include a QoS control field 4725, which may be a 16-bit field that identifies the traffic category (TC) or traffic stream (TS) to which the frame belongs and various other QoS-related information about the frame that may vary by frame type and subtype.

Address field $4715_4$ may only be used in the AP to AP communication case. In some embodiments, the address field $4715_4$ may not be used. The QoS control field 4725 may be used for data frames, but not for management frames. Hence, in summary, the MAC header 4645 may be 208 bits in length for data frames and may be 192 bits in length for management frames.

Figure 48 shows an HT-mixed PPDU data format 4800 including a PLCP header 4802 including an L-STF 4805, an L-LTF 4810 and an L-SIG field 4815. The PLCP header 4802 of the HT-mixed PPDU data format 4800 may further include an HT-SIG field 4820, an HT-STF field 4825 and a plurality of HT-LTFs $4830_1$ - $4830_N$. The HT-SIG field 4820 may be used to carry information required to interpret the HT packet formats. The duration of the HT-SIG field 4820 may be 32 $\mu$s. One purpose of the HT-STF 4825 may be to improve automatic gain control estimation in a MIMO system. The duration of the HT-STF field 4825 may be 16 $\mu$s. The HT-LTF fields 4830 may provide a means for the receiver to estimate the MIMO channel between the set of quadrature amplitude modulation (QAM) mapper outputs and the receive chains. There may be at least two types of HT-LTF fields 4830: data HT-LTFs (HT-DLTFs) and extension HT-LTFs (HT-ELTFs). HT-DLTFs may be included in HT PPDUs to provide the necessary reference for the receiver to form a channel estimate that allows it to demodulate the data portion of the frame. The number of HT-DLTFs may be 1, 2 or 4, depending on the number of space-time streams being transmitted in the frame. HT-ELTFs may provide additional reference in sounding PPDUs so that the receiver may form an estimate of additional dimensions of the channel beyond those that are used by the data portion of the frame. The number of HT-ELTFs may be 0, 1, 2 or 4. In one embodiment, the number of HT-DLTFs may be 1 and the number of HT-ELTFs may be 0.

The HT-mixed PPDU data format 4800 may further include a data field 4835, which may include service bits 4840, A-MPDU 4845, tail bits 4850 and pad bits 4855. The A-MPDU 4845 may comprise a MAC header 4860, an A-MSDU 4865 and an FCS field 4870.

The general format of a MAC header 4860 is illustrated in Figure 49. The MAC header 4860 may include a frame control field 4905 of length 16 bits, which may be composed of subfields: protocol version, type, subtype, to distribution stream (DS), from DS, more fragments, retry, power management, more data, protected frame and order.

The MAC header 4860 may include a duration/ID field 4910, which may be 16 bits in length. Its contents may vary with frame type and subtype.

The MAC header 4860 may include a plurality of address fields 4915, which may be used to indicate the basic service set identification (BSSID), source address (SA), destination address (DA) and transmitting STA address (TA) and receiving WTRU address (RA). Each address field 4915 may be 48 bits in length. The MAC header 4860 may include a sequence control field 4920, which may be 16 bits in length, including at least two subfields: the sequence number and the fragment number. The MAC header 4860 may include a QoS control field 4925, which may be a 16-bit field that identifies the traffic category (TC) or traffic stream (TS) to which the frame belongs and various other QoS-related information about the frame that may vary by frame type and subtype.

Address field $4915_4$ may only be used in the AP to AP communication case. In some embodiments, the address field $4915_4$ may not be used. The QoS control field 4925 may be used for data frames, but not for management frames. Hence, in summary, the MAC header 4860 may be 208 bits in length for data frames and may be 192 bits in length for management frames.

The MAC header 4860 for the HT PPDUs may have an HT-control field 4930, which may be 32 bits in length and may be used to specify certain HT-related information. In summary, the MAC header 4860 may be 240 bits in length for data frames and 224 bits in length for management frames.

The HT-greenfield PPDU data format 5000 is shown in Figure 50. The HT-greenfield short training field (HT-GF-STF) 5005 may be applied as a replacement of L-STF in the non-HT PPDU format 4600 and the HT-mixed PPDU data format 4800. Its duration may be 32 μs. The first HT long training (HT-LTF1) field 5010 may be applied as a replacement of L-LTF in the non-HT PPDU format and the HT-mixed PPDU format. The other fields in the HT-greenfield PPDU data format may be similar to the corresponding fields in the HT-mixed PPDU data format.

Figure 51 shows an example call flow procedure 5100 for a frame controller 3715. In this example, the frame controller 3715 initially receives channel MCS information 5105 from the channel monitor 3730. Based on these MCS values, the frame controller 3715 may determine the over-the-air duration of all the frames (5110). The determination of the over-the-air duration may also depend on the applications, such as the average frame length of an application. A channel with a better condition may have a higher MCS value and hence a smaller over-the-air duration.

After the determination of the over-the-air duration, the frame controller 3715 may receive the buffer status information 5115 from the buffer controller 3710. Since all the buffers may be empty initially, the frame controller 3715 may determine to generate frames for different PHY channels 3735 in a round robin fashion. In one example, the frame controller 3715 may decide to generate a frame for a PHY channel $3735_1$ (5120). Based on the over-the-air duration and the MCS value of PHY channel $3735_1$, the frame controller 3715 may calculate the payload length (5125) such that if a resulting PPDU frame is transmitted on PHY channel $3735_1$, the transmission duration matches the over-the-air duration. After determining the payload length, the frame controller 3715 may try to control the A-MSDU aggregation units 3760, the fragmentation units 3765, and the A-MPDU aggregation units 3775 to generate frames of that length (5130). In one embodiment, if after some time the frame controller 3715 receives updated buffer status information from the buffer controller 3710 (5140) in response to sending A-MPDU information to the buffer controller (5135), it may again determine to generate frames for different PHY channels 3735 (5145), calculate the payload length (5150), and control the A-MSDU aggregation units 3760, the fragmentation units 3765, and the A-MPDU aggregation units 3775 to generate frames of that length (5155).

Payload refers to the MSDU length in the following calculation of payload length in order to achieve a specific over-the-air duration on a specific PHY channel 3735. It may be assumed that the pre-specified over-the-air duration is *T* μs.

With the MCS information, the frame controller 3715 may first find the corresponding data bits per OFDM symbol. Figure 52 shows the mapping from modulation and coding rates to the data bits per OFDM symbol, as well as the coded bits per OFDM symbol and data rates for the non-HT PPDU frames.

As a first example, it may be assumed the frame controller 3715 is operating with data frames, a specific channel applies QPSK modulation and ¾ coding rate. It may be further assumed that the PLCP header 4602 takes 80 μs, as shown in Figure 46, and the sum of service bits 4625, MAC header (for data frame) 4645, FCS field 4655 and tail bits 4635 is 262 bits. From Figure 52, the data bits per OFDM symbol is 72. Assuming that the symbol duration is 16 μs for a 5 MHz bandwidth, the over-the-air duration T is:

$$T = 80 + 16 \times \left\lceil \frac{x + 262}{72} \right\rceil, \qquad \text{Equation (6)}$$

where *x* is the payload length.

As a second example, it may be assumed the frame controller 3715 is operating with data frames, and a specific channel applies 16-QAM modulation and ½ coding rate. From Figure 52, the data bits per OFDM symbol is 96. Hence, the over-the-air duration *T* is calculated using the payload length x as follows:

$$T = 80 + 16 \times \left\lceil \frac{x + 262}{96} \right\rceil . \qquad \text{Equation (7)}$$

The calculations in Equations (6) and (7) are for non-HT PPDU frames. For HT-mixed PPDU frames and HT-greenfield PPDU frames, the mapping from modulation and coding rates to the data bits per OFDM symbol, as well as the coded bits per OFDM symbol and data rates for the non-HT PPDU frames may be different. A proposed mapping is presented in Figure 53.

As a third example, it may be assumed the frame controller 3715 is operating with data frames and a specific channel applies QPSK modulation and ¾ coding rate. It may be further assumed that the PLCP header 4802 takes 144 μs as shown in Figure 48, and the sum of service bits 4840, MAC header (for data frames) 4860, FCS field 4870 and tail bits 4850 is 294 bits. From Figure 53, the data bits per OFDM symbol is 78. Assuming the symbol duration is 16 μs for a 5 MHz bandwidth, the over-the-air duration Tis:

$$T = 144 + 16 \times \left\lceil \frac{x + 294}{78} \right\rceil . \qquad \text{Equation (8)}$$

As a fourth example, it may be assumed the frame controller 3715 is operating with data frames and a specific channel applies 64-QAM modulation and ¾ coding rate. From Figure 53, the data bits per OFDM symbol is 234. Hence, over-the-air duration T may be calculated by using the payload length as:

$$T = 144 + 16 \times \left\lceil \frac{x + 294}{234} \right\rceil . \qquad \text{Equation (9)}$$

IEEE 802.11n supports MSDU aggregation and MPDU aggregation to reduce the MAC overhead and increase the raw data rate. The configuration of an A-MPDU 5400 of a PPDU is shown in Figure 54. The A-MPDU 5400 may include a plurality of A-MPDU subframes $5405_1$, $5405_2$, ..., $5405_n$. Each A-MPDU subframe 5405 may include an MPDU delimiter 5410, an MPDU 5415 and padding bits 5420. The MPDU delimiter 5410 may be of a 2-byte length and the padding bits 5420 may vary from 0 to 3 bytes.

The MPDU 5415 may include a MAC header 5425 of 30 bytes, a plurality of A-MSDU subframes $5430_1$ - $5430_m$, and an FCS field 5435 of 4 bytes. Each A-MSDU subframe 5430 may include a DA 5440 of 6 bytes, an SA 5445 of 6 bytes, a length field 5450 of 2 bytes, an MSDU 5455 and padding bytes 5460. The padding bytes 5460 may be such that an A-MSDU subframe 5430 may be a multiple of 4 bytes. Hence, the padding bytes 5460 may vary from 0 bytes to 3 bytes. Since the MSDU 5455 may be less than 2304 bytes, the A-MSDU subframe 5430 may be less than 2320 bytes. The MPDU 5415 may be less than 4095 bytes without encryption and integrity. With a 30-byte MAC header 5425 and a 4-byte FCS field 5435, the total length of the A-MSDU subframes 5430 in the MPDU 5415 may be less than 4061 bytes. Since the MPDU 5415 may be less than 4095 bytes, the maximal length of an A-MPDU subframe 5405 may be less than 4100 bytes. It follows that the total length of the A-MPDU 5400 may be less than 65535 bytes.

As a fifth example, it may be assumed the frame controller 3715 is operating with data frames and a specific channel applies QPSK modulation and ¾ coding rate. The MSDUs are of equal length and are a multiple of 4 bytes. While the frame controller 3715 aggregates MPDUs, there may be no A-MSDU operation.

In the example shown in Figure 54, the sum of the bits of the MAC header 5425, the MPDU delimiter 5410 and the FCS field 5435 is equal to 288 bits. In this example, the over-the-air duration Tis:

$$T = 144 + 16 \times \left\lceil \frac{22 + (x + 288)y}{78} \right\rceil . \qquad \text{Equation (10)}$$

As a fifth example, it may be assumed the frame controller 3715 is operating with data frames and a specific channel applies 64-QAM modulation and ¾ coding rate. It may be assumed service bits plus tail bits are of length 22 bits and the sum of the bits of the MAC header 5425, the MPDU delimiter 5410 and the FCS field 5435 is equal to 288 bits. From Figure 53, the data bits per OFDM symbol is 234. Hence, the over-the-air duration Tis:

$$T = 144 + 16 \times \left\lceil \frac{22 + (x + 288)y}{234} \right\rceil . \qquad \text{Equation (11)}$$

In an alternate embodiment shown in Figures 55A and 55B, the association of a separate buffer with each physical channel in the access categories may be removed. Instead, a set of buffers may be used to divide the frames to be transmitted into different length groupings. In the described embodiment, three buffers are used per access category, however a different number of buffers may also be possible.

In this embodiment, the remainder of the functional block diagram may remain similar to Figure 37, except for the addition of a scheduler 5500, as shown Figure 55B. In this alternate design, the buffer controller 3710 may manage the logic buffers 3740 in each of the access categories to maintain relatively the same number of frames in the logic buffers 3740 to be transmitted as in the previous design. In this case, the logic buffers 3740 may correspond to a subset of lengths of frames. Logic buffer $3740_1$ may contain all short frames, logic buffer $3740_2$ may contain all medium-sized frames, and logic buffer $3740_3$ may contain all long frames. The role of the scheduler 5500 may be to select appropriately sized frames to transmit on each physical channel during each individual TXOP. This selection may be based on the buffer from which a frame is selected and the channel quality at a specific time. In this way, the assumption of approximately equal length transmission may be maintained with a small loss of efficiency of the channel use, (due to the use of a limited number of buffers). Nonetheless, approximate equal length transmission may be ensured by the MPDU aggregation blocks located after the scheduler 5500 in the transmit chain. For example, the scheduler 5500 may select four frames from the three buffers during each transmission time using a set of criteria.

At a specific transmission time, the scheduler 5500 may examine the frames at the front of each buffer and start by selecting the frame which has the smallest 'time to live'. This selection may be performed in conjunction with considerations for QoS, which may be received from the QoS controller 3720. In the case where a higher priority frame needs to be sent instead, the frame at the front of the logic buffer 3740 may wait for the next transmission opportunity.

The chosen frame may be mapped to a channel based on recent channel quality information, such as retransmissions and delay statistics, to maximize the probability of correct transmission for that frame.

The remaining channels may be allocated frames in such a way to have approximate equal transmission time on all channels. This may be performed through the selection of a frame from the appropriate logic buffer 3740 to match to each of the channel conditions. During this frame allocation, primary CSMA rules may still be taken into account.

The buffer controller 3710 may continue to perform its aforementioned tasks with the exception of reordering, where reordering may only apply to moving higher priority frames to the front of each buffer within the same buffer. The need for re-ordering of frames from one buffer to another buffer may be eliminated. In addition, buffer creation may be modified to take into account the presence of a different number of frames which may not be specifically attached to a PHY channel.

This embodiment may eliminate the need for packet re-ordering from one buffer to another buffer, since the scheduler 5500 may dynamically choose the packets to be transmitted over each PHY channel at each TXOP.

This embodiment may eliminate channel inefficiencies that occur during packet re-ordering. Packets created with a length that may be tailored to a different PHY channel may result in inefficiencies when reordered. Since the scheduler 5500 in Figure 55B may choose packets dynamically to achieve approximate equal length transmission, the efficiency may be the same on every TXOP.

This embodiment may react rapidly to problems with a specific PHY channel. In particular, if a PHY channel is having problems, such as multiple retransmissions or errors, the scheduler 5500 may ensure that a frame may be sent to a different PHY channel to reduce the transmit time for that frame that has already incurred a delay due to the problematic PHY channel. The scheduler 5500 may therefore enable a form of channel diversity by dynamically changing the PHY channel for a frame on a TXOP basis.

The size of receiver buffers at the upper layers (e.g., IP) may be reduced because the scheduler 5500 may allow for frames from an IP fragment to be sent with the minimum overall delay. This may result in a lower end-to-end delay. Furthermore, changes in the channel response may be dealt with, as the frames are created with lengths that are independent of the channel at a given time.

Transmission errors may be handled in the context of aggregated channels using a primary CSMA approach. Retransmission may be performed in, for example, three ways: 1) Single MPDU retransmission, wherein MPDU may be retransmitted in one channel; 2) MPDU on multiple channels, wherein MPDU may be repeatedly transmitted on all aggregated channels; and/or 3) re-fragmented over multiple channels. For the last option, the failed MPDU may be divided and an additional MAC header may be added to indicate the part of the fragment and the failed MPDU. The receiver may need to reassemble all of the chopped fragments. Each of these options may introduce extra complexity. In addition, it may not be efficient in terms of the ratio of data messages and overhead. In the following description, the focus is on the transmission which may require ACK. If no ACK is required, then no retransmission may be needed.

It may be assumed that all packets transmitted on the four aggregated channels at the same time belong to the same AC. Thus, the algorithm described below may not support packets with different ACs transmitted on the aggregated channels at the same time. It may be assumed that each AC has its own buffer. Also, each AC may be associated with its EDCAF to maintain a backoff procedure for the medium competition. Upon a successful contention, the EDCAF of an AC may be granted an EDCA TXOP for the transmission of MPDUs of this category. The contention window sizes and the maximum TXOP durations for different ACs may be different.

There may be two different buffering options. As shown in Figure 56, a first buffering option may assume that each channel is associated with a single instant buffer. For each AC, there may be only one buffer. If the primary channel ending last technique described above is used in the implementation, to improve the efficiency of the channel usage, the transmission time of the frames in non-primary channels may be similar. There may not be too large of an idle period in a non-primary channel before the transmission ends in the primary channel. The largest gap between the transmission time in the non-primary channel and the primary channel may be smaller than a certain value, for example, largest_gap<AIFS (AC). If a common virtual sensing technique is implemented as described above, there may be no need to guarantee the primary channel to end last when the frame assignment is performed.

The buffer may store the frames which are scheduled to be transmitted on the corresponding channels before they are successfully delivered. Before being assigned to the physical channels, the frame to be transmitted may be added with a MAC header and a CRC to make a complete MPDU, and may stay in an instant buffer, which may only store the MPDU for the next transmission in each channel.

As shown in Figures 57A and 57B, a second buffering option may be implemented such that each AC may have a separate buffer, with different frames assigned to each channel. In each AC, there may be four logic buffers corresponding to the four channels, respectively. The retransmission techniques for both buffer implementations may be similar and are described herein.

Retransmission of high priority control messages may be different from the data message or medium-low priority control message. High priority control messages, for example, channel switching, etc, may not be queued in the buffer in the first time transmission. Transmission of high priority control messages may be repeatedly transmitted over the four channels to improve the robustness. Therefore, the probability of the retransmission of high priority control messages may be lower. When there are no ACKs received on the four channels, the high priority control messages may be retransmitted. In such a case, the backoff window may be increased for retransmission. Different transmission approaches used for high priority control message delivery may lead to different retransmission schemes. For example, for the message delivered by a WTRU: 1) for the message transmitted in the highest AC, the failed MPDU may stay in the front end of the buffer and may be retransmitted once it gains the TXOP again; the contention window may be doubled as shown in IEEE 802.11; and/or 2) for the message transmitted in the lower AC, the message may be moved to the front end of highest AC and transmitted through the highest AC in the retransmission.

As another example, for the message delivered by the AP, the contention window CW for the first retransmission may be set as CWmin and may be doubled for the second. For each retransmission, the contention window may be doubled as in IEEE 802.11 until it reaches CWmax. For example, CWmin and CWmax may be set as the one for the highest AC, wherein CWmin may be 7 (slot times) and CWmax may be 15 (slot times).

For retransmission of medium and low priority control messages, medium and low priority control messages may be transmitted in one AC if EDCA is invoked. If the transmission of MPDU is failed in the primary channel, various options may be implemented as following. In a first option, the TXOP transmission may be terminated and a backoff procedure may be invoked. All of the frames may stay as the original ones.

Alternatively or additionally, in a second option, if the first option is used, it may stay in the instant buffer of the primary channel and repeat sending this packet to the destination until the current TXOP ends. Then, the primary channel of the receiver may need to provide feedback regarding this information to the buffer controller 3710 to make sure all of the frames are assigned to non-primary channels. The failed MPDU may be moved to one of the non-primary channels with better channel conditions to make sure the transmission in the primary channel ends last, if the primary channel ending last technique is implemented. If the primary channel ending last technique is not implemented, the failed MPDU may be moved to any one of the non-primary channels, for example, the quaternary channel. No new MPDU may be packed for the primary channel. If this failed transmission is the last transmission in this TXOP, then the failed MPDU may stay in the instant buffer of the primary channel and may be transmitted when this EDCAF gains the channel again during the next TXOP. Figure 58 shows a retransmission example wherein transmission failed in the primary channel.

If the transmission of an MPDU fails in the non-primary channels, two scenarios may occur. First, no new frames may be assigned to all channels. In one example, only one transmission in the non-primary channel may have failed. If the TXOP is not terminated, the retransmission MPDU may be moved to the buffer of primary channel and transmitted on the primary channel. If this TXOP is terminated, the retransmission packet may stay in the same instant buffer and may be transmitted in the next TXOP. Figure 59 shows a retransmission example wherein the transmission failed in the quaternary channel.

In another example, at least two transmissions in the non-primary channels failed. If the TXOP is not terminated, one of the retransmission MPDUs may be moved to the primary channel and the other retransmission MPDUs may remain in the same buffer. If the transmission ends in the primary channel, the retransmitted MPDU may be moved. This may require more transmission time in the primary channel than the other channel. Alternatively, all of the retransmission MPDUs may be placed in the primary channels. If a common virtual sensing technique is implemented, any one of the failed MPDUs may be moved to the primary channel and retransmitted on the primary channel. If the TXOP is terminated, all of the retransmission MPDUs may remain in the instant buffer and may be transmitted in the same channels until the next TXOP.

If a frame is assigned to the primary channel the TXOP is terminated, the retransmission MPDU may remain in its original position, (instant buffer or logic buffer of non-primary channel), until the next TXOP, its lifetime is expired or the number of retry limits is reached. If the TXOP is not terminated, transmission may be continued in the same channel. The failed MPDU may be retransmitted on the same channel. Longer frames may need to be transmitted on the primary channel and transmission on the primary channel may need to be guaranteed to ends last if the ACK procedure described above is implemented. Otherwise, there may be no need to have longer frames transmitted in the primary channel.

Alternatively, the transmission in the failed channel(s) may be terminated. Within this TXOP, the retransmitted MPDU may be moved to another instant or logic buffer and transmitted in the channel with similar channel conditions.

Alternatively, the retransmitted MPDU may stay in the original instant or logic buffer until the next TXOP. If this MPDU stays in the buffer longer than a certain time, it may be moved to another channel with similar channel conditions.

In the aggregated channel transmissions, the contention window for transmission may be implemented as follows: If the primary channel fails, the contention window may double. If the non-primary channel fails, and if there is at least one retransmission MPDU existing in at least one channel, the contention window for this transmission may be doubled. If all of the non-primary channels are retransmissions, the contention window may be doubled. If more than one retransmitted MPDU exists in more than one channel, the contention window for this transmission may be doubled.

A modified ACKTimeOut interval may be used such that the STA may wait for an ACKTimeout interval, with a value of an SIFSTime + a SlotTime + a PHY-RX-START-Delay, starting at the PHY-TXend.confirm. In an aggregated channels implementation, the ACKTimeOut interval may need to be modified. If the primary channel ending last technique is implemented, then the value of ACKTimeOut interval for each channel may be modified as (*XMIT_TIME_PRIMARY* - *pachet_xmit_time*) + *SIFSTime* + *aSlotTime* + *aPHY-RX-START-Delay*, where *XMIT_TIME_PRIMARY* may be the MPDU transmission time in the primary channel and the *packet_xmit_time* is the MPDU transmission time in that channel.

If the common virtual sensing technique is implemented, the value of modified ACKTimeOut interval for each channel may be (*MAX_XMIT_TIME* - *packet_xmit_time*) + *SIFSTime* + aSlotTime + $\alpha$*PHY-RX-START-Delay,* where *MAX_XMIT_TIME* may be the longest transmission time in the aggregated channels.

Embodiments

1. A method of a node performing channel aggregation to communicate over a non-contiguous spectrum using a plurality of aggregated channels including a primary channel and at least one non-primary channel, the method comprising:

    performing carrier sense multiple access (CSMA) on the primary channel to obtain access to the primary channel and determine the channel status of the primary channel; and
    setting the channel status of the at least one non-primary channel based on the channel status of the primary channel.

2. The method of embodiment 1 wherein the node is an access point (AP) or an evolved Node-B (eNB).
3. The method as in any one of embodiments 1-2 further comprising:

    circuitry in the node transmitting a protocol data unit (PDU) on each of the aggregated channels to at least one wireless transmit/receive unit (WTRU), wherein the PDU is a data PDU or a management PDU.

4. The method as in any one of embodiments 1-3 wherein a data transmission on the primary channel ends after a data transmission on the at least one non-primary channel.
5. The method as in any one of embodiments 1-4 wherein a network allocation vector (NAV) is included in a duration field of packets transmitted over the aggregated channels to indicate the longest transmission time on the channels and the difference between the longest transmission time and transmission time on a specific one of the channels.
6. The method as in any one of embodiments 1-5 further comprising:

circuitry in the node detecting a failed packet transmission in the primary channel;
circuitry in the node terminating a current transmission opportunity; and
circuitry in the node initiating a backoff procedure.

7. The method as in any one of embodiments 1-6 further comprising:

circuitry in the node detecting a failed packet transmission in the primary channel; and
circuitry in the node moving the failed packet to a buffer associated with the non-primary channel.

8. The method as in any one of embodiments 1-7 further comprising:

circuitry in the node detecting a failed packet transmission in the non-primary channel; and
circuitry in the node moving the failed packet to a buffer associated with the primary channel.

9. The method as in any one of embodiments 1-8 wherein the at least one non-primary channel is assumed to have a busy channel status on a condition that the primary channel has a busy channel status.

10. The method as in any one of embodiments 1-9 wherein a transmission is deferred to a subsequent transmission opportunity (TXOP) on a condition that the primary channel has a busy channel status.

11. The method as in any one of embodiments 1-10 wherein the node obtains access to the at least one non-primary channel upon obtaining access to the primary channel.

12. The method as in any one of embodiments 1-11 further comprising:

circuitry in the node waiting an arbitration interframe space (AIFS) and performing backoff on the primary channel;
circuitry in the node checking the channel status of the at least one non-primary channel for a point coordination function (PCF) inter-frame space (PIFS) period; and
circuitry in the node receiving a positive acknowledgement (ACK) message on each of the primary channel and the at least one non-primary channel in response to transmitting a protocol data unit (PDU) on each of the primary channel and the at least one non-primary channel.

13. The method as in any one of embodiments 1-12 wherein the primary channel is configured to operate over a larger bandwidth than at least one non-primary channel.

14. The method as in any one of embodiments 1-13 further comprising:

circuitry in the node transmitting a request to send (RTS) message after waiting an arbitration interframe space (AIFS) time and performing backoff on the primary channel;
circuitry in the node receiving a clear to send (CTS) message after waiting a short interframe space (SIFS) period;
circuitry in the node transmitting a protocol data unit (PDU) on each of the primary channel and the at least one non-primary channel; and
circuitry in the node receiving a positive acknowledgement (ACK) message on each of the primary channel and the at least one non-primary channel.

15. The method as in any one of embodiments 1-14 further comprising:

circuitry in the node transmitting a channel switch announcement (CSA) message including a switching channel field that indicates which of the primary channel and the at least one non-primary channel is being switched to a new channel, a new channel number field that indicates a frequency of the new channel, and a channel characteristics field that indicates properties of the new channel.

16. The method as in any one of embodiments 1-15 further comprising:

a buffer controller in the node receiving channel modulation and coding scheme (MCS) information on the aggregated channels;
the buffer controller creating, for each of a plurality of access classes (ACs), a logic buffer for each of the aggregated channels;
the buffer controller receiving aggregated medium access control (MAC) protocol data unit (A-MPDU) frame information from a frame controller in the node; and
the frame controller controlling the aggregation and fragmentation of A-MPDU frames.

17. The method of embodiment 16 further comprising:

the buffer controller receiving quality of service (QoS) information and silent period information; and
the buffer controller scheduling frame reordering and frame transmission.

18. The method as in any one of embodiments 1-17 further comprising:

a scheduler in the node selecting frames to transmit on each of a plurality of physical channels during respective transmission opportunities based on a buffer from which each frame is selected and the channel quality at a specific time; and
the scheduler mapping each selected frame to a respective channel.

19. The method of embodiment 18 wherein the mapping is based on recent channel quality information to maximize the probability of correct transmission for the selected frame.
20. A node comprising:

a buffer controller configured to receive channel modulation and coding scheme (MCS) information on a plurality of aggregated channels including a primary channel and at least one non-primary channel, and create, for each of a plurality of access classes (ACs), a logic buffer for each of the aggregated channels; and
a frame controller configured to provide the buffer controller with aggregated medium access control (MAC) protocol data unit (A-MPDU) frame information, and control the aggregation and fragmentation of MAC service data unit (A-MSDU) frames.

21. The node of embodiment 20 wherein the frame controller is further configured to control the aggregation of A-MPDUs.
22. The node as in any one of embodiments 20-21 wherein the logic buffers store fragmented A-MSDU frames.
23. The node as in any one of embodiments 20-22 wherein the node is an access point (AP) or an evolved Node-B (eNB).
24. A node comprising:

a transceiver configured to communicate over a non-contiguous spectrum using a plurality of aggregated channels including a primary channel and at least one non-primary channel; and
a buffer controller configured to receive channel modulation and coding scheme (MCS) information on the aggregated channels, and create, for each of a plurality of access classes (ACs), a logic buffer for each of the aggregated channels; and
a scheduler configured to select frames to transmit on each of a plurality of physical channels during respective transmission opportunities based on a buffer from which each frame is selected and the channel quality at a specific time, and map each selected frame to a respective channel.

25. The node of embodiment 24 wherein the node is an access point (AP) or an evolved Node-B (eNB).

Although features and elements are described above in particular combinations, one of ordinary skill in the art will appreciate that each feature or element may be used alone or in combination with any of the other features and elements. In addition, the embodiments described herein may be implemented in a computer program, software, or firmware incorporated in a computer-readable medium for execution by a computer or processor. Examples of computer-readable media include electronic signals, (transmitted over wired or wireless connections), and computer-readable storage media. Examples of computer-readable storage media include, but are not limited to, a read only memory (ROM), a random access memory (RAM), a register, a cache memory, a semiconductor memory device, a magnetic media, (e.g., an internal hard disc or a removable disc), a magneto-optical media, and an optical media such as a compact disc (CD) or a digital versatile disc (DVD). A processor in association with software may be used to implement a radio frequency transceiver for use in a WTRU, UE, terminal, base station, Node-B, eNB, HNB, HeNB, AP, RNC, wireless router or any host computer.

## Claims

1. A method of a node (102) performing channel aggregation to communicate over a non-contiguous spectrum using a plurality of aggregated channels including a primary channel (205) and at least one non-primary channel (210), the method comprising:

performing carrier sense multiple access, CSMA, on the primary channel (205) to obtain access to the primary channel (205);
determining the channel status of the primary channel (205) based on the CSMA performed on the primary channel (205);
performing sensing on the at least one non-primary channel (210);
determining the channel status of the at least one non-primary channel (210) based on the channel status of the primary channel (205) and the sensing on the at least one non-primary channel (210); and
performing aggregated transmission on the primary channel (205) and any one of the non-primary channels (210) for which an available channel status has been determined.

**2.** The method of claim 1 wherein the node is an access point, AP, or an evolved Node-B, eNB.

**3.** The method of claim 1 further comprising:

transmitting a protocol data unit, PDU, on each of the aggregated channels to at least one wireless transmit/receive unit, WTRU, wherein the PDU is a data PDU or a management PDU.

**4.** The method of claim 1 wherein a data transmission on the primary channel ends after a data transmission on the at least one non-primary channel.

**5.** The method of claim 1 wherein a network allocation vector , NAV, is included in a duration field of packets transmitted over the aggregated channels to indicate the longest transmission time on the channels and the difference between the longest transmission time and transmission time on a specific one of the channels.

**6.** The method of claim 1 further comprising:

detecting a failed packet transmission in the primary channel;
terminating a current transmission opportunity; and
initiating a backoff procedure.

**7.** The method of claim 1 further comprising:

detecting a failed packet transmission in the primary channel; and
moving the failed packet to a buffer associated with the non-primary channel.

**8.** The method of claim 1 further comprising:

detecting a failed packet transmission in the non-primary channel; and
moving the failed packet to a buffer associated with the primary channel.

**9.** The method of claim 1 wherein the primary channel is configured to operate over a larger bandwidth than at least one non-primary channel.

**10.** The method of claim 1 further comprising:

transmitting a request to send, RTS, message after waiting an arbitration interframe space, AIFS, time and performing backoff on the primary channel;
receiving a clear to send, CTS, message after waiting a short interframe space, SIFS, period; transmitting a protocol data unit, PDU, on each of the primary channel and the at least one non-primary channel; and
receiving a positive acknowledgement, ACK, message on each of the primary channel and the at least one non-primary channel.

**11.** The method of claim 1 further comprising:

transmitting a channel switch announcement, CSA, message including a switching channel field that indicates which of the primary channel and the at least one non-primary channel is being switched to a new channel, a new channel number field that indicates a frequency of the new channel, and a channel characteristics field that indicates properties of the new channel.

**12.** The method of claim 1 further comprising:

receiving channel modulation and coding scheme, MCS, information on the aggregated channels;
creating, for each of a plurality of access classes, ACs, a logic buffer for each of the aggregated channels;
receiving aggregated medium access control, MAC, protocol data unit, A-MPDU, frame information from a frame controller in the node; and controlling the aggregation and fragmentation of A-MPDU frames.

**13.** The method of claim 12 further comprising:

receiving quality of service, QoS, information and silent period information; and
scheduling frame reordering and frame transmission.

**14.** A method of a node performing channel aggregation to communicate over a non-contiguous spectrum using a plurality of aggregated channels including a primary channel (205; 305) and at least one non-primary channel (210; 310, 315, 320), the method comprising:

performing carrier sense multiple access, CSMA, on the primary channel to obtain access to the primary channel (205; 305) the method comprising:

determining the channel status of the primary channel (205; 305) based on the CSMA performed on the primary channel (205; 305) ;
setting the channel status of the at least one non-primary channel (210, 215, 310, 315) based on the channel status of the primary channel (205, 305) waiting an arbitration interframe space, AIFS, and performing backoff on the primary channel (205; 305), before transmission;
checking the channel status of the at least one non-primary channel (210, 215, 310, 315) for a point coordination function, PCF, inter-frame space, PIFS, period before transmission; and
receiving a positive acknowledgement, ACK, message on each of the primary channel (205; 305) and the at least one non-primary channel (210, 215, 310, 315) in response to successfully transmitting a protocol data unit, PDU, on each of the primary channel (205; 305) and the at least one non-primary channel (210, 215, 310, 315).

## Patentansprüche

**1.** Verfahren eines Knotens (102), der eine Kanalaggregation ausführt, zum Kommunizieren über ein nicht-zusammenhängendes Spektrum unter Verwendung mehrerer aggregierter Kanäle, die einen primären Kanal (205) und mindestens einen nicht-primären Kanal (210) enthalten,
wobei das Verfahren Folgendes umfasst:

Ausführen eines Carrier Sense Multiple Access (CSMA) auf dem primären Kanal (205), um Zugang zu dem primären Kanal (205) zu erhalten;
Bestimmen des Kanalstatus des primären Kanals (205) auf der Basis des auf dem primären Kanal (205) ausgeführten CSMA;
Ausführen eines Abfühlens auf dem mindestens einen nicht-primären Kanal (210);
Bestimmen des Kanalstatus der mindestens einen nicht-primären Kanals (210) auf der Basis des Kanalstatus des primären Kanals (205) und des Abfühlens auf dem mindestens einen nicht-primären Kanal (210); und
Ausführen einer aggregierten Übertragung auf dem primären Kanal (205) und einem der nicht-primären Kanäle (210), für den ein verfügbarer Kanalstatus bestimmt wurde.

**2.** Verfahren nach Anspruch 1, wobei der Knoten ein Zugangspunkt (Access Point, AP) oder ein evolved Node-B (eNB) ist.

**3.** Verfahren nach Anspruch 1, das des Weiteren Folgendes umfasst:

Senden einer Protokolldateneinheit (PDU) auf jedem der aggregierten Kanäle an mindestens eine Drahtlos-Sende- und -Empfangseinheit (Wireless Transmit/Receive Unit, WTRU), wobei die PDU eine Daten-PDU oder eine Management-PDU ist.

**4.** Verfahren nach Anspruch 1, wobei eine Datenübertragung auf dem primären Kanal nach einer Datenübertragung auf dem mindestens einen nicht-primären Kanal endet.

**5.** Verfahren nach Anspruch 1, wobei ein Netzzuweisungsvektor (Network Allocation Vector, NAV) in einem Zeitdauerfeld von Paketen enthalten ist, die über die aggregierten Kanäle gesendet werden, um die längste Übertragungszeit auf den Kanälen und die Differenz zwischen der längsten Übertragungszeit und der Übertragungszeit auf einem bestimmten der Kanäle anzugeben.

**6.** Verfahren nach Anspruch 1, das des Weiteren Folgendes umfasst:

Detektieren einer fehlgeschlagenen Paketübertragung auf dem primären Kanal;
Beenden einer momentanen Übertragungsgelegenheit; und
Initiieren eines Backoff-Verfahrens.

**7.** Verfahren nach Anspruch 1, das des Weiteren Folgendes umfasst:

Detektieren einer fehlgeschlagenen Paketübertragung auf dem primären Kanal; und
Verschieben des fehlgeschlagenen Paketes in einen Puffer, der dem nicht-primären Kanal zugeordnet ist.

**8.** Verfahren nach Anspruch 1, das des Weiteren Folgendes umfasst:

Detektieren einer fehlgeschlagenen Paketübertragung auf dem nichtprimären Kanal; und
Verschieben des fehlgeschlagenen Paketes in einen Puffer, der dem primären Kanal zugeordnet ist.

**9.** Verfahren nach Anspruch 1, wobei der primäre Kanal dafür konfiguriert ist, über eine größere zu arbeiten Bandbreite als mindestens ein nichtprimärer Kanal.

**10.** Verfahren nach Anspruch 1, das des Weiteren Folgendes umfasst:

Senden einer Request to Send (RTS)-Nachricht nach dem Abwarten einer Arbitration Interframe Space (AIFS)-Zeit und Ausführen eines Backoff auf dem primären Kanal;
Empfangen einer Clear to Send (CTS)-Nachricht nach dem Abwarten eines Short Interframe Space (SIFS)-Zeitraums;
Senden einer Protokolldateneinheit (Protocol Data Unit, PDU) auf jedem des primären Kanals und des mindestens einen nicht-primären Kanals; und
Empfangen einer positiven Bestätigungs (Acknowledgement, ACK)-Nachricht auf jedem des primären Kanals und des mindestens einen nicht-primären Kanals.

**11.** Verfahren nach Anspruch 1, das des Weiteren Folgendes umfasst:

Senden einer Channel Switch Announcement (CSA)-Nachricht, die Folgendes enthält: ein Switching-Channel-Feld, das angibt, welcher des primären Kanals und des mindestens einen nicht-primären Kanals zu einem neuen Kanal gewechselt wird, ein New-Channel-Number-Feld, das eine Frequenz des neuen Kanals angibt, und ein Channel-Characteristik-Feld, das Eigenschaften des neuen Kanals angibt.

**12.** Verfahren nach Anspruch 1, das des Weiteren Folgendes umfasst:

Empfangen von Kanalmodulations- und -codierungsregime (Modulation and Coding Scheme, MCS)-Informationen auf den aggregierten Kanälen;
Bilden, für jede von mehreren Zugangsklassen (Access Classes, ACs), eines Logikpuffers für jeden der aggregierten Kanäle;
Empfangen von Aggregated-Medium-Access-Control (MAC)-Protocol Data Unit (A-MPDU)-Frame-Informationen von einer Framesteuereinheit in dem Knoten; und
Steuern der Aggregation und Fragmentierung von A-MPDU-Frames.

**13.** Verfahren nach Anspruch 12, das des Weiteren Folgendes umfasst:

Empfangen von Dienstqualitäts (Quality of Service, QoS)-Informationen und Stummzeitraum-Informationen; und
Disponieren einer Frame-Neuordnung und Frame-Übertragung.

**14.** Verfahren eines Knotens, der eine Kanalaggregation ausführt, zum Kommunizieren über ein nicht-zusammenhängendes Spektrum unter Verwendung mehrerer aggregierter Kanäle, die einen primären Kanal (205; 305) und mindestens einen nicht-primären Kanal (210; 310, 315, 320) enthalten, wobei das Verfahren Folgendes umfasst:

Ausführen eines Carrier Sense Multiple Access (CSMA) auf dem primären Kanal, um Zugang zu dem primären Kanal (205; 305) zu erhalten;
wobei das Verfahren Folgendes umfasst:

Bestimmen des Kanalstatus des primären Kanals (205; 305) auf der Basis der auf dem primären Kanal (205; 305) ausgeführten CSMA;
Einstellen des Kanalstatus des mindestens einen nicht-primären Kanals (210, 215, 310, 315) auf der Basis des Kanalstatus des primären Kanals (205, 305);
Abwarten eines Arbitration Interframe Space (AIFS) und Ausführen eines Backoff auf dem primären Kanal (205; 305) vor der Übertragung;
Überprüfen des Kanalstatus des mindestens einen nicht-primären Kanals (210, 215, 310, 315) für einen Point Coordination Function (PCF) Interframe Space (PIFS)-Zeitraum vor der Übertragung; und
Empfangen einer positiven Bestätigungs (Acknowledgement, ACK)-Nachricht auf jedem des primären Kanals (205; 305) und des mindestens einen nicht-primären Kanals (210, 215, 310, 315) in Reaktion auf das erfolgreiche Senden einer Protokolldateneinheit (PDU) auf jedem des primären Kanals (205; 305) und des mindestens einen nicht-primären Kanals (210, 215, 310, 315).

## Revendications

**1.** Procédé d'un noeud (102) exécutant une agrégation de canaux pour communiquer sur un spectre non contigu en utilisant une pluralité de canaux agrégés comprenant un canal primaire (205) et au moins un canal non primaire (210), le procédé comprenant :

l'exécution d'un accès multiple de détection de porteuses, CSMA, sur le canal primaire (205) pour obtenir l'accès au canal primaire (205) ;
la détermination du statut de canal du canal primaire (205) sur la base du CSMA effectué sur le canal primaire (205) ;
l'exécution d'une détection sur l'au moins un canal non primaire (210) ;
la détermination du statut de canal de l'au moins un canal non primaire (210) sur la base du statut de canal du canal primaire (205) et de la détection sur l'au moins un canal non primaire (210) ; et
l'exécution d'une transmission agrégée sur le canal primaire (205) et l'un quelconque des canaux non primaires (210) pour lequel un statut de canal disponible a été déterminé.

**2.** Procédé selon la revendication 1, dans lequel le noeud est un point d'accès, AP, ou un noeud B évolué, eNB.

**3.** Procédé selon la revendication 1, comprenant en outre :

la transmission d'une unité de données de protocole, PDU, sur chacun des canaux agrégés à au moins une unité émettrice-réceptrice sans fil, WTRU, dans lequel la PDU est une PDU de données ou une PDU de gestion.

**4.** Procédé selon la revendication 1, dans lequel une transmission de données sur le canal primaire se termine après une transmission de données sur l'au moins un canal non primaire.

**5.** Procédé selon la revendication 1, dans lequel un vecteur d'allocation de réseau, NAV, est inclus dans un champ de durée de paquets transmis sur les canaux agrégés pour indiquer le plus long temps de transmission sur les canaux et la différence entre le plus long temps de transmission et le temps de transmission sur l'un spécifique des canaux.

**6.** Procédé selon la revendication 1, comprenant en outre :

la détection d'une transmission de paquets ayant échoué dans le canal primaire ;
la terminaison d'une opportunité de transmission actuelle ; et
le lancement d'une procédure de réduction de puissance.

**7.** Procédé selon la revendication 1, comprenant en outre :

la détection d'une transmission de paquets ayant échoué dans le canal primaire ; et
le déplacement du paquet ayant échoué dans une mémoire tampon associée au canal non primaire.

**8.** Procédé selon la revendication 1, comprenant en outre :

la détection d'une transmission de paquets ayant échoué dans le canal non primaire ; et
le déplacement du paquet ayant échoué dans une mémoire tampon associée au canal primaire.

**9.** Procédé selon la revendication 1, dans lequel le canal primaire est configuré pour fonctionner sur une largeur de bande plus grande que celle d'au moins un canal non primaire.

**10.** Procédé selon la revendication 1, comprenant en outre :

la transmission d'un message Request To Send, RTS, après l'attente d'un temps d'espace inter-trame d'arbitration, AIFS, et l'exécution d'une réduction de puissance sur le canal primaire ;
la réception d'un message Clear To Send, CTS, après l'attente d'une période de court espace inter-trame, SIFS ;
la transmission d'une unité de données de protocole, PDU, sur chacun du canal primaire et de l'au moins un canal non primaire ; et
la réception d'un message d'accusé de réception positif, ACK, sur chacun du canal primaire et de l'au moins un canal non primaire.

**11.** Procédé selon la revendication 1, comprenant en outre :

la transmission d'un message Channel Switch Announcement, CSA, comprenant un champ de commutation de canal qui indique lequel du canal primaire et de l'au moins un canal non primaire est commuté sur un nouveau canal, un champ de numéro de nouveau canal qui indique une fréquence du nouveau canal, et un champ de caractéristiques de canal qui indique des propriétés du nouveau canal.

**12.** Procédé selon la revendication 1, comprenant en outre :

la réception d'informations de schéma de modulation et de codage de canal, MCS, sur les canaux agrégés ;
la création, pour chacune d'une pluralité de classes d'accès, AC, d'une mémoire tampon logique pour chacun des canaux agrégés ;
la réception d'informations de trames d'unités de protocole de données de commande d'accès au support agrégées, A-MPDU, en provenance d'un organe de commande de trames dans le noeud ; et
la commande de l'agrégation et de la fragmentation de trames A-MPDU.

**13.** Procédé selon la revendication 12, comprenant en outre :

la réception d'informations de qualité de service, QoS, et d'informations de période de silence ; et
la programmation d'une réorganisation de trame et d'une transmission de trame.

**14.** Procédé d'un noeud exécutant une agrégation de canaux pour communiquer sur un spectre non contigu en utilisant une pluralité de canaux agrégés comprenant un canal primaire (205 ; 305) et au moins un canal non primaire (210 ; 310, 315, 320), le procédé comprenant :

l'exécution d'un accès multiple de détection de porteuses, CSMA, sur le canal primaire pour obtenir l'accès au canal primaire (205 ; 305) ;
le procédé comprenant :

la détermination du statut de canal du canal primaire (205 ; 305) sur la base du CSMA effectué sur le canal primaire (205 ; 305) ;
le réglage du statut de canal de l'au moins un canal non primaire (210, 215, 310, 315) sur la base du statut de canal du canal primaire (205, 305),
l'attente d'un espace inter-trame d'arbitrage, AIFS, et l'exécution d'une réduction de puissance sur le canal primaire (205 ; 305), avant la transmission ;
le contrôle du statut de canal de l'au moins un canal non primaire (210, 215, 310, 315) pour une période d'espace inter-trame de fonction de coordination de points, PCF, PIFS ; et
la réception d'un message d'accusé de réception positif, ACK, sur chacun du canal primaire (205 ; 305) et de l'au moins un canal non primaire (210, 215, 310, 315) en réponse à la transmission réussie d'une unité de données de protocole, PDU, sur chacun du canal primaire (205 ; 305) et de l'au moins un canal non primaire (210, 215, 310, 315).

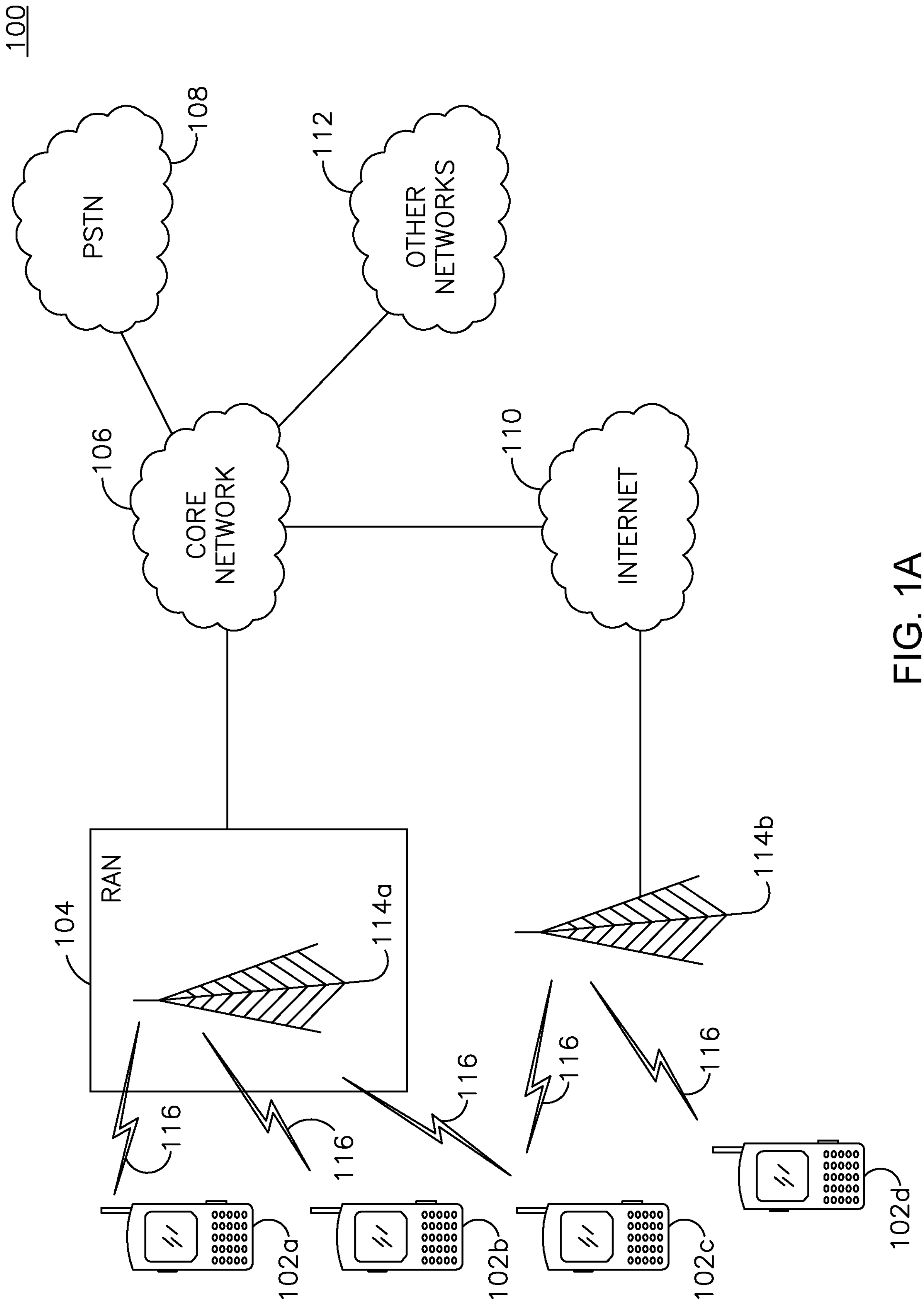
100
PSTN
108
OTHER NETWORKS
112
CORE NETWORK
106
INTERNET
110
RAN
104
114a
114b
116
102a
102b
102c
102d

FIG. 1A

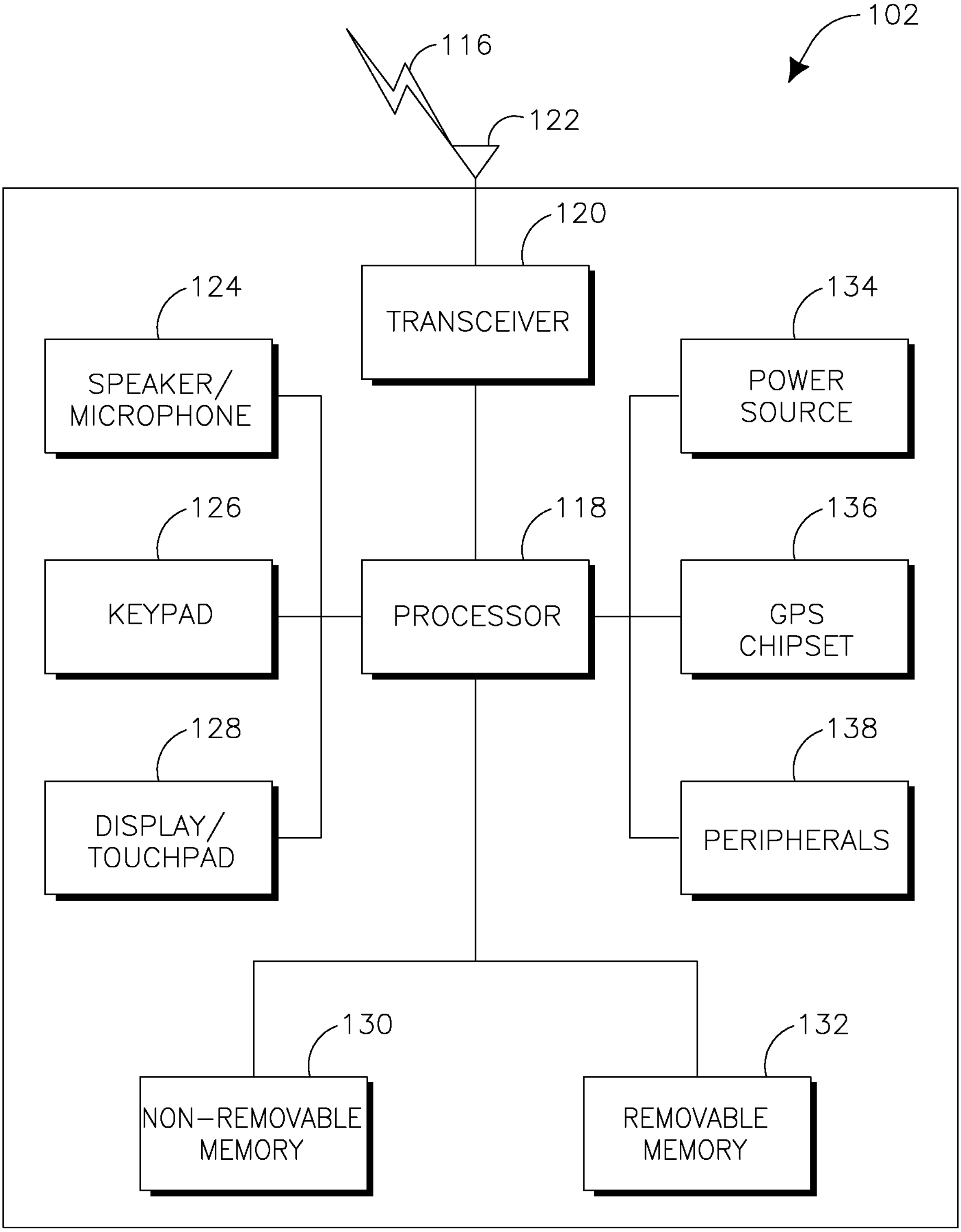
102
116
122
120
TRANSCEIVER
124
SPEAKER/
MICROPHONE
134
POWER
SOURCE
126
KEYPAD
118
PROCESSOR
136
GPS
CHIPSET
128
DISPLAY/
TOUCHPAD
138
PERIPHERALS
130
NON-REMOVABLE
MEMORY
132
REMOVABLE
MEMORY

FIG. 1B

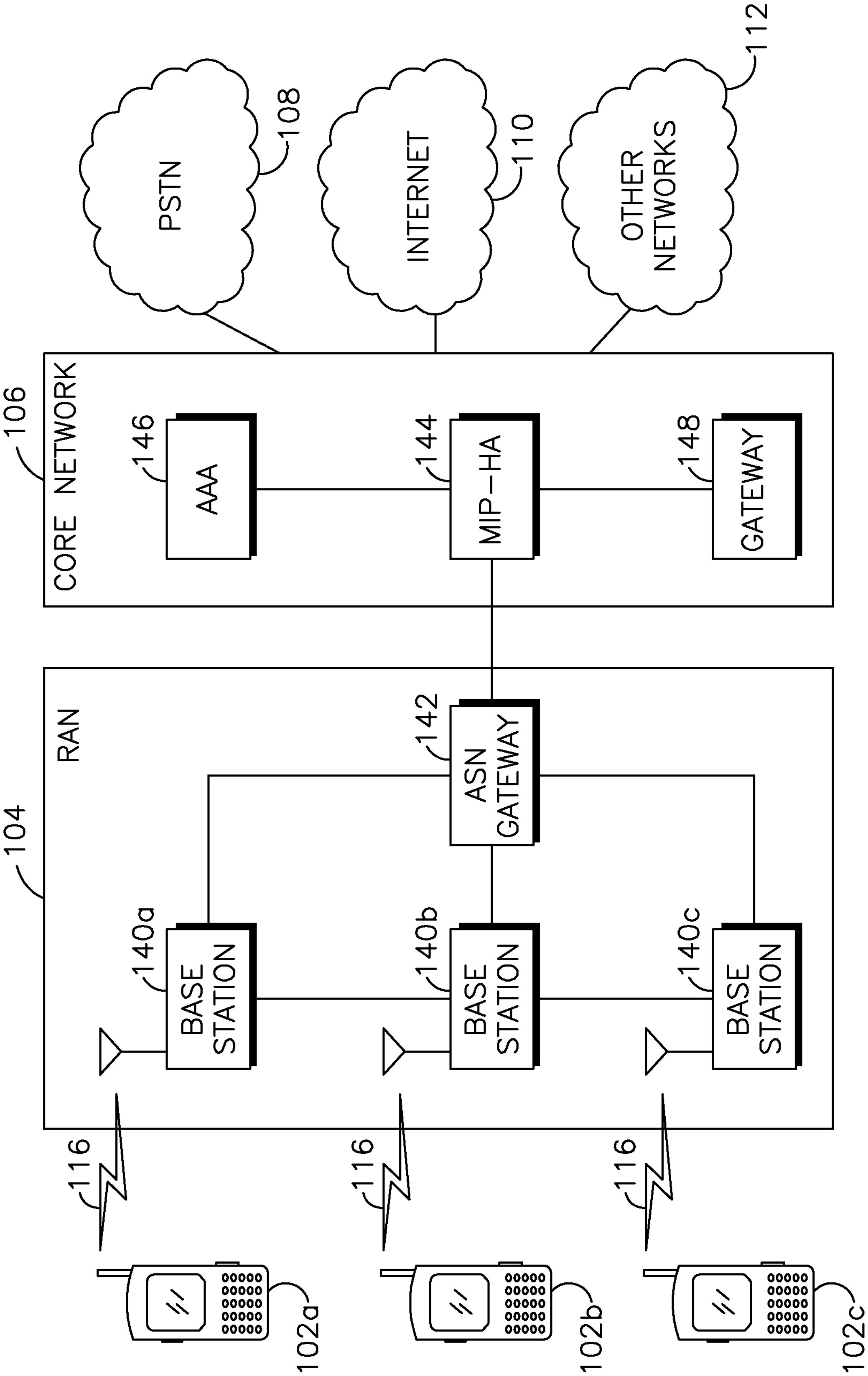
PSTN
108
INTERNET
110
OTHER NETWORKS
112
CORE NETWORK
106
AAA
146
MIP–HA
144
GATEWAY
148
RAN
104
ASN GATEWAY
142
BASE STATION
140a
BASE STATION
140b
BASE STATION
140c
116
116
116
102a
102b
102c

FIG. 1C

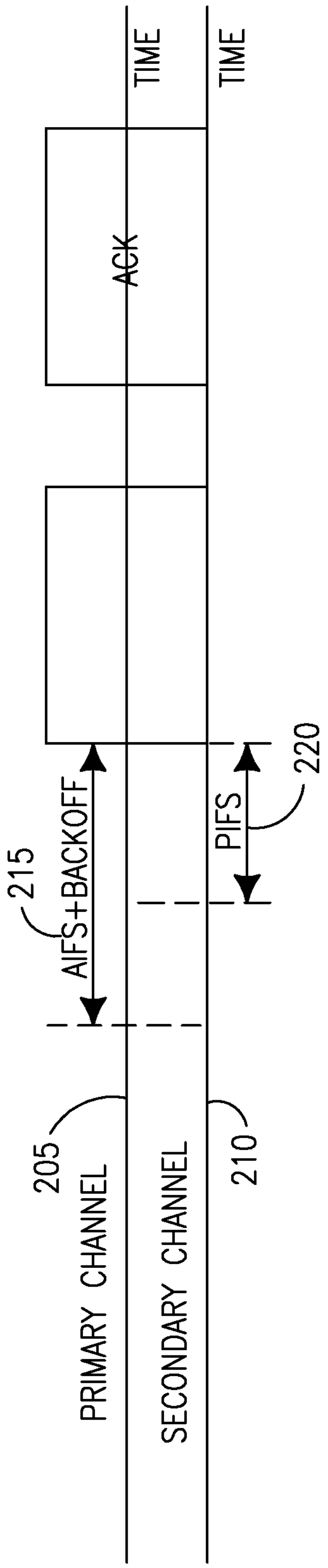
PRIMARY CHANNEL
SECONDARY CHANNEL
205
210
215
220
AIFS+BACKOFF
PIFS
ACK
TIME
TIME

FIG. 2

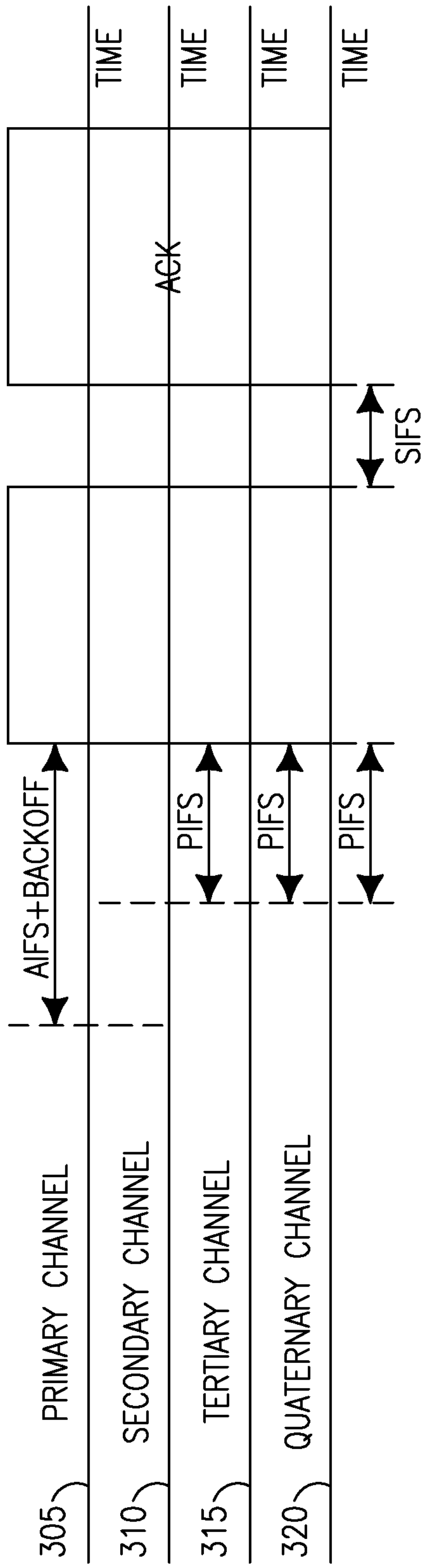
PRIMARY CHANNEL
SECONDARY CHANNEL
TERTIARY CHANNEL
QUATERNARY CHANNEL
305
310
315
320
AIFS+BACKOFF
PIFS
PIFS
PIFS
SIFS
ACK
TIME
TIME
TIME
TIME

FIG. 3

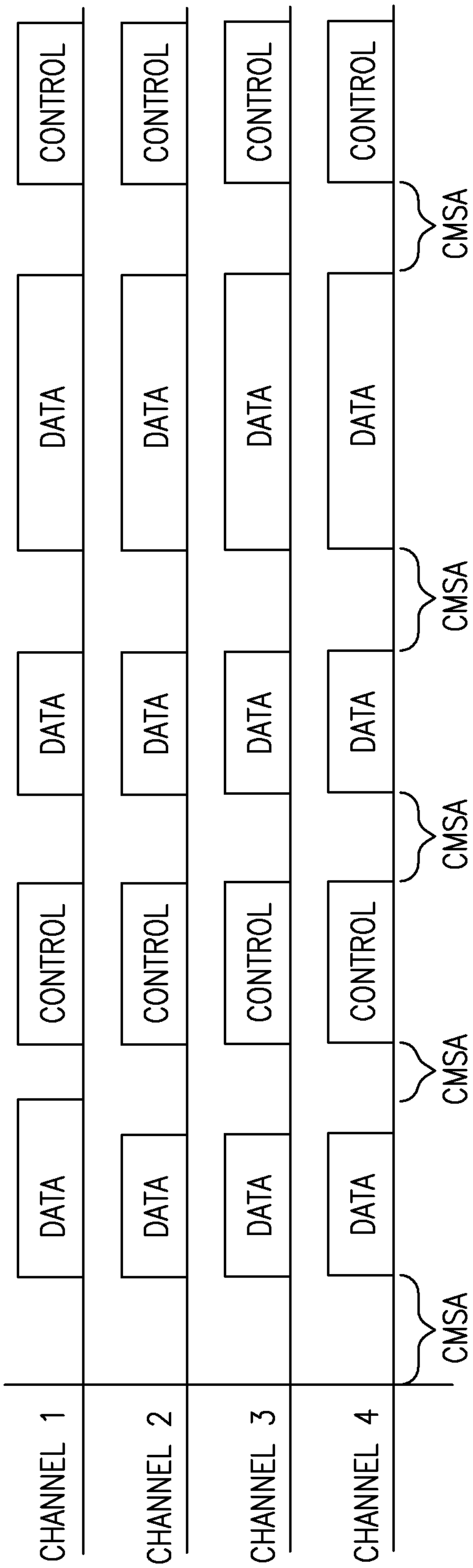
CHANNEL 1
CHANNEL 2
CHANNEL 3
CHANNEL 4
DATA
CONTROL
DATA
DATA
CONTROL
CMSA
CMSA
CMSA
CMSA

FIG. 4

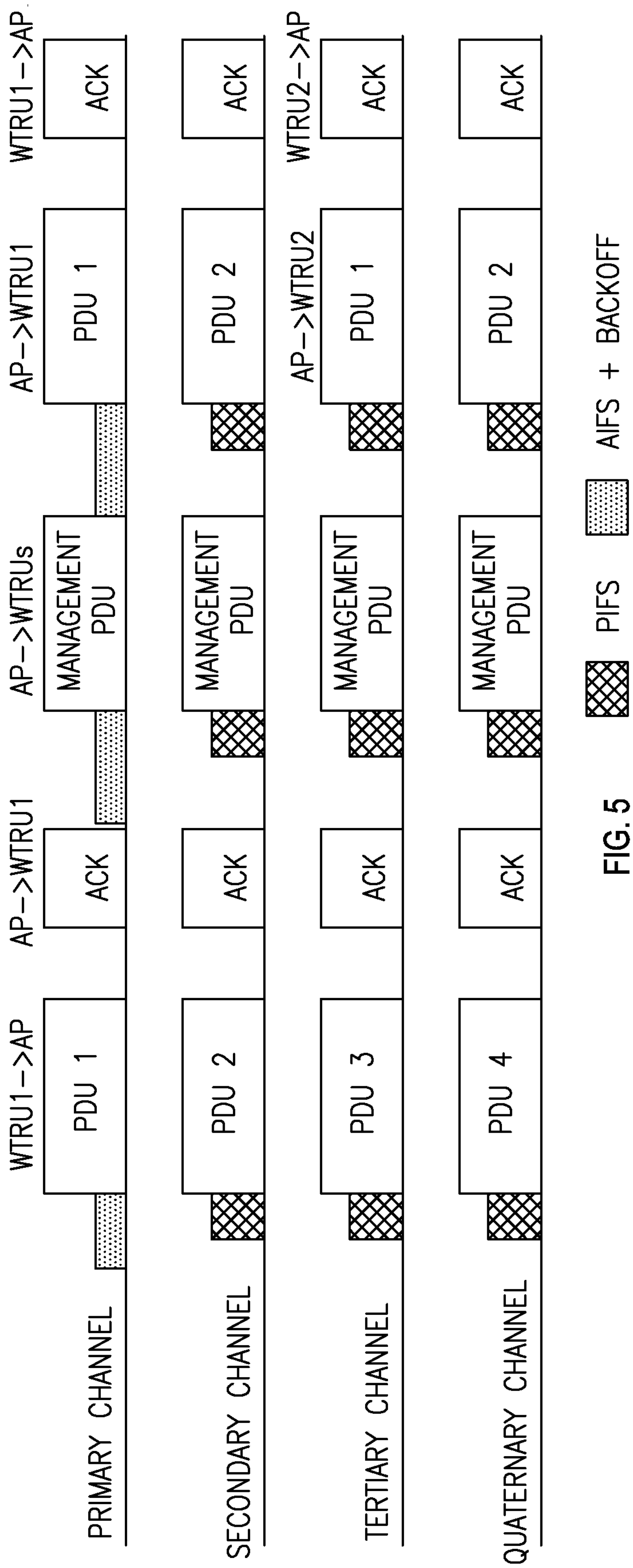
PRIMARY CHANNEL
SECONDARY CHANNEL
TERTIARY CHANNEL
QUATERNARY CHANNEL
WTRU1->AP
PDU 1
PDU 2
PDU 3
PDU 4
AP->WTRU1
ACK
AP->WTRUs
MANAGEMENT PDU
AP->WTRU1
PDU 1
PDU 2
AP->WTRU2
WTRU1->AP
WTRU2->AP
PIFS
AIFS + BACKOFF

FIG. 5

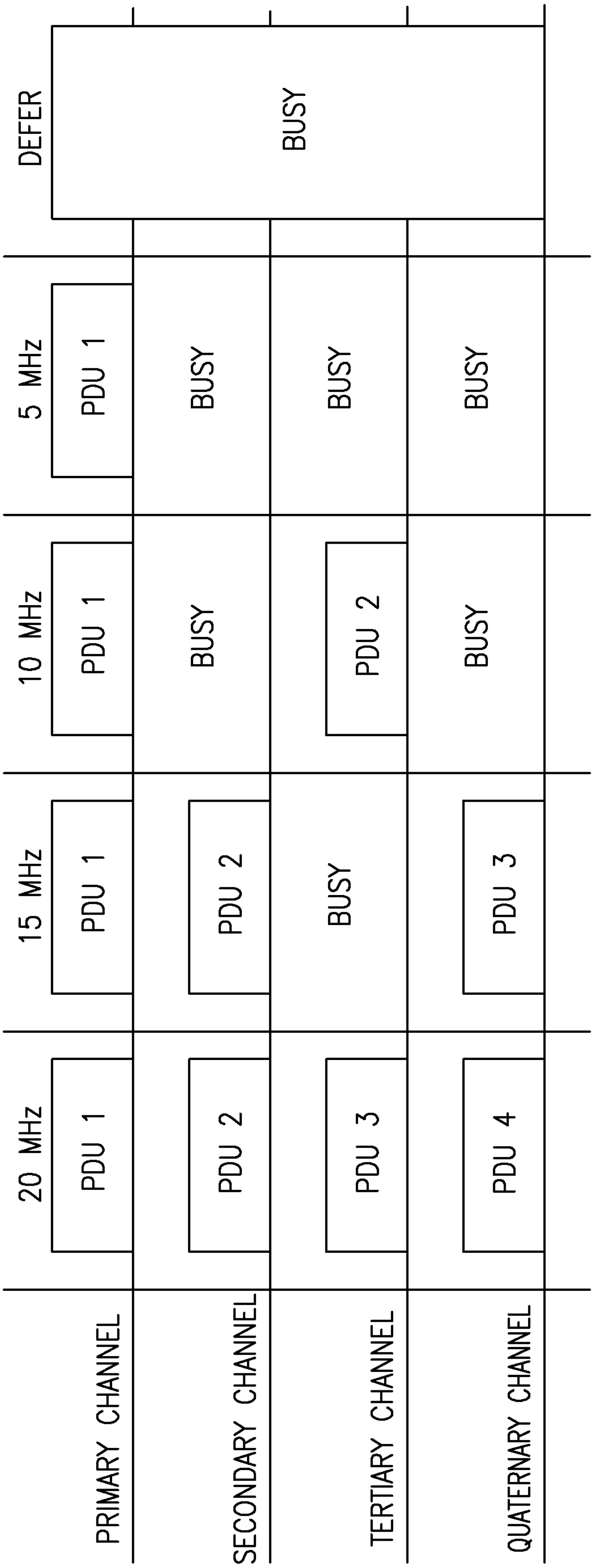
DEFER
BUSY
5 MHz
PDU 1
BUSY
BUSY
BUSY
10 MHz
PDU 1
BUSY
PDU 2
BUSY
15 MHz
PDU 1
PDU 2
BUSY
PDU 3
20 MHz
PDU 1
PDU 2
PDU 3
PDU 4
PRIMARY CHANNEL
SECONDARY CHANNEL
TERTIARY CHANNEL
QUATERNARY CHANNEL

FIG. 6

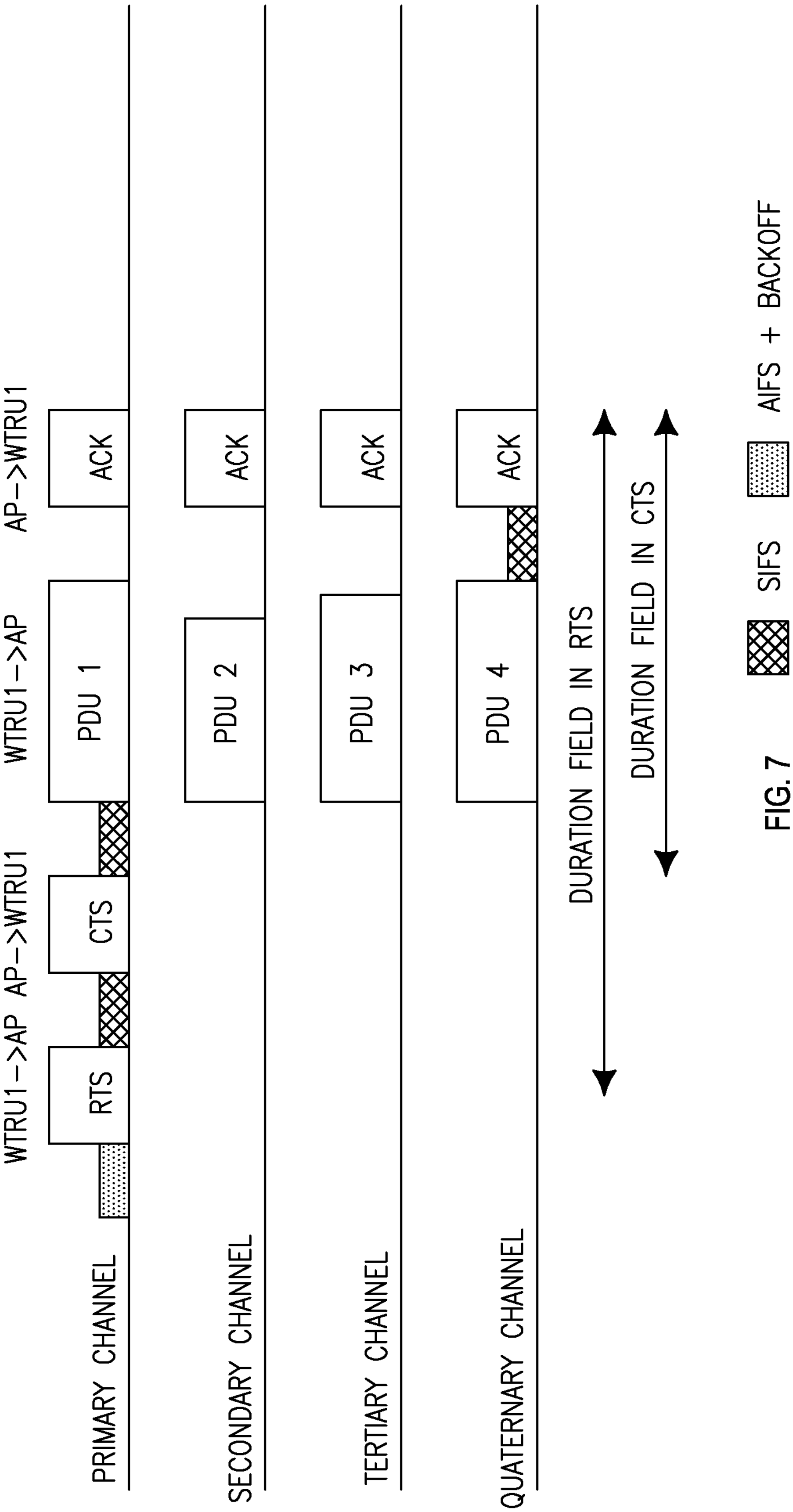
PRIMARY CHANNEL
SECONDARY CHANNEL
TERTIARY CHANNEL
QUATERNARY CHANNEL
WTRU1->AP
AP->WTRU1
WTRU1->AP
AP->WTRU1
RTS
CTS
PDU 1
PDU 2
PDU 3
PDU 4
ACK
ACK
ACK
ACK
DURATION FIELD IN RTS
DURATION FIELD IN CTS
SIFS
AIFS + BACKOFF

FIG. 7

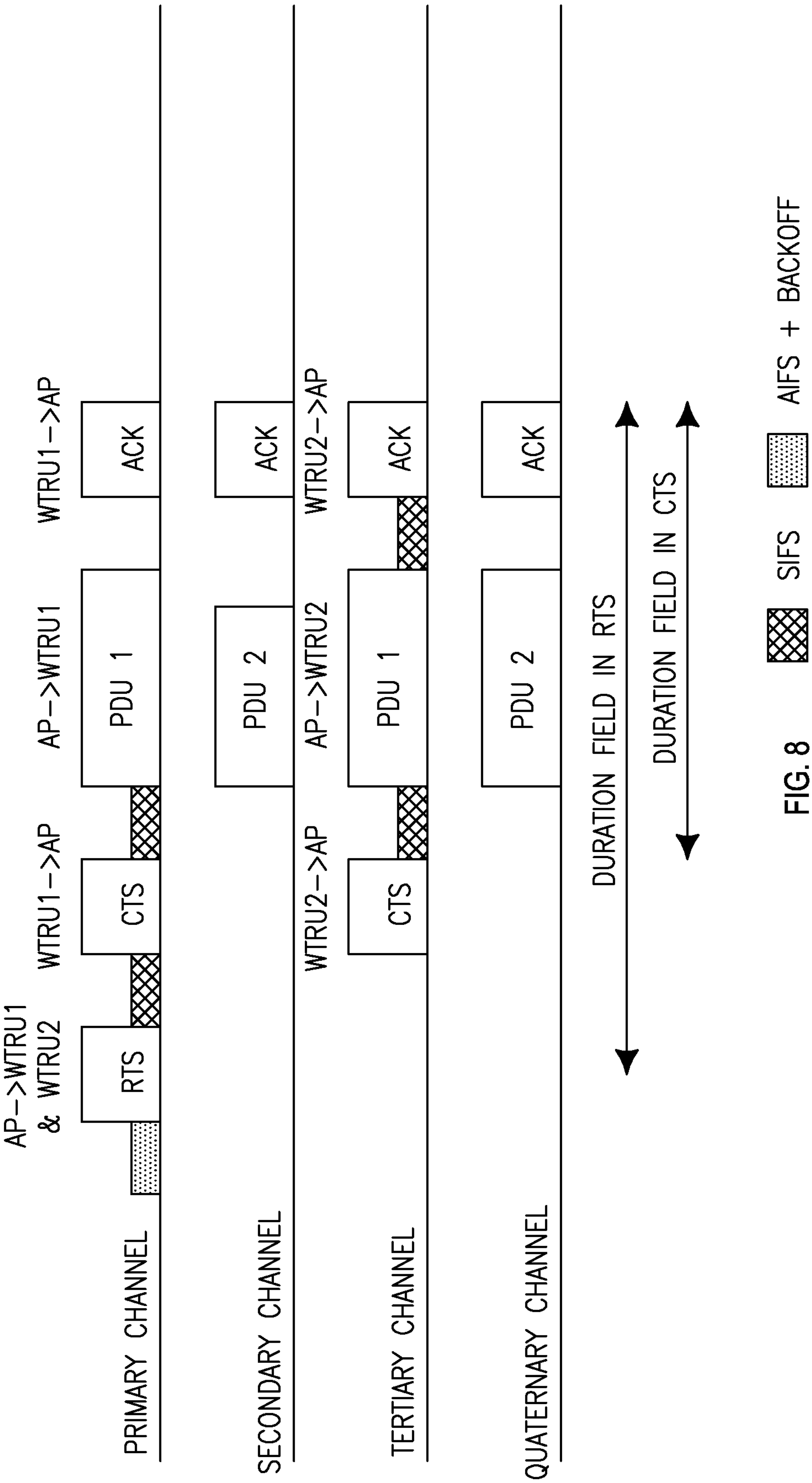
PRIMARY CHANNEL
SECONDARY CHANNEL
TERTIARY CHANNEL
QUATERNARY CHANNEL
AP–>WTRU1 & WTRU2
RTS
WTRU1–>AP
CTS
AP–>WTRU1
PDU 1
WTRU1–>AP
ACK
PDU 2
ACK
WTRU2–>AP
CTS
AP–>WTRU2
PDU 1
WTRU2–>AP
ACK
PDU 2
ACK
DURATION FIELD IN RTS
DURATION FIELD IN CTS
SIFS
AIFS + BACKOFF

FIG. 8

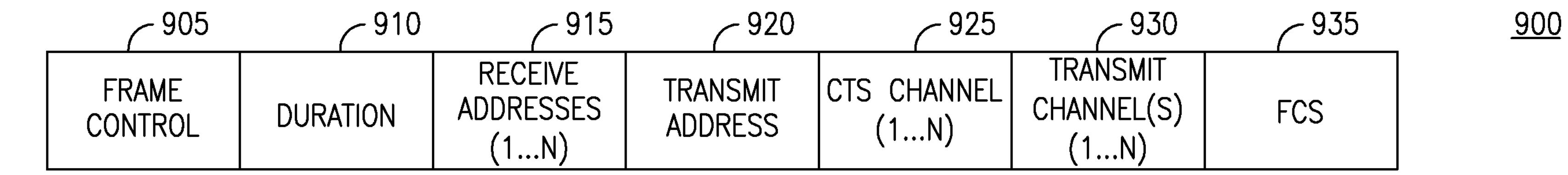
900
905
FRAME CONTROL
910
DURATION
915
RECEIVE ADDRESSES (1...N)
920
TRANSMIT ADDRESS
925
CTS CHANNEL (1...N)
930
TRANSMIT CHANNEL(S) (1...N)
935
FCS

FIG. 9

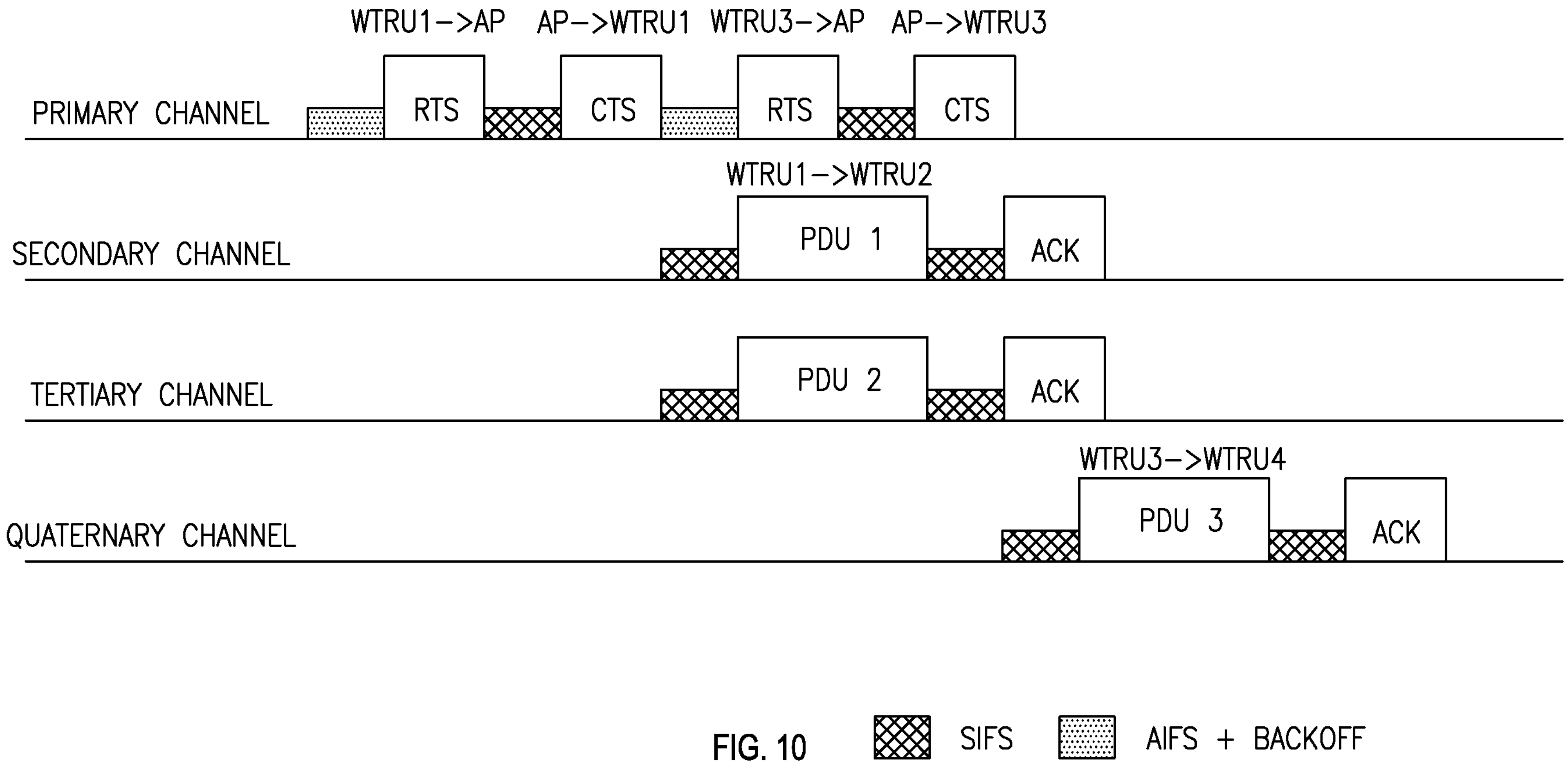
WTRU1->AP
AP->WTRU1
WTRU3->AP
AP->WTRU3
PRIMARY CHANNEL
RTS
CTS
RTS
CTS
WTRU1->WTRU2
SECONDARY CHANNEL
PDU 1
ACK
TERTIARY CHANNEL
PDU 2
ACK
WTRU3->WTRU4
QUATERNARY CHANNEL
PDU 3
ACK
SIFS
AIFS + BACKOFF

FIG. 10

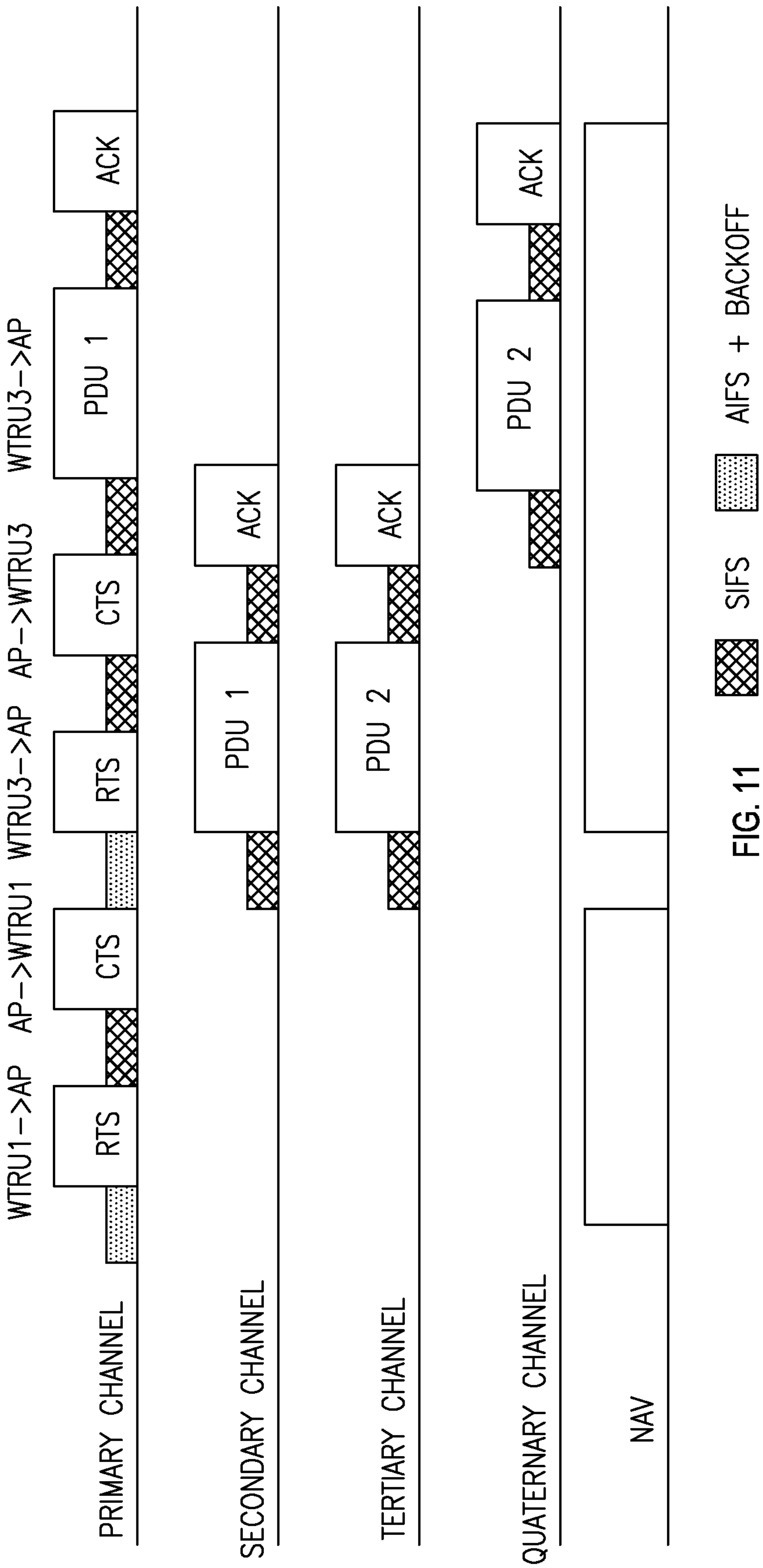
WTRU1->AP
AP->WTRU1
WTRU3->AP
AP->WTRU3
WTRU3->AP
PRIMARY CHANNEL
RTS
CTS
RTS
CTS
PDU 1
ACK
SECONDARY CHANNEL
PDU 1
ACK
TERTIARY CHANNEL
PDU 2
ACK
QUATERNARY CHANNEL
PDU 2
ACK
NAV
SIFS
AIFS + BACKOFF

FIG. 11

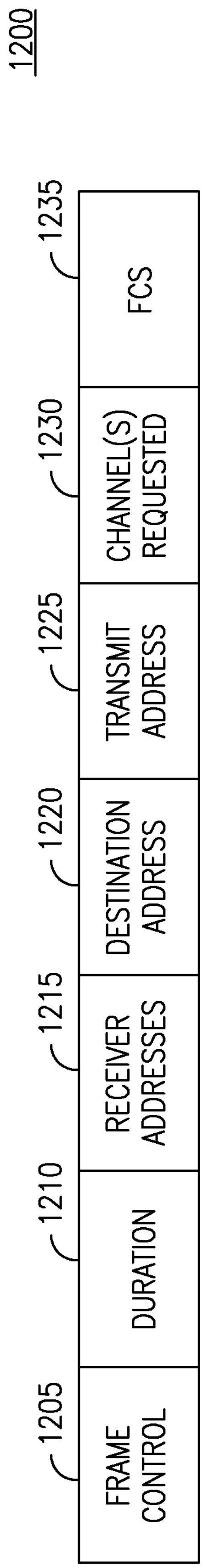
1200
1205
1210
1215
1220
1225
1230
1235
FRAME CONTROL
DURATION
RECEIVER ADDRESSES
DESTINATION ADDRESS
TRANSMIT ADDRESS
CHANNEL(S) REQUESTED
FCS

FIG. 12

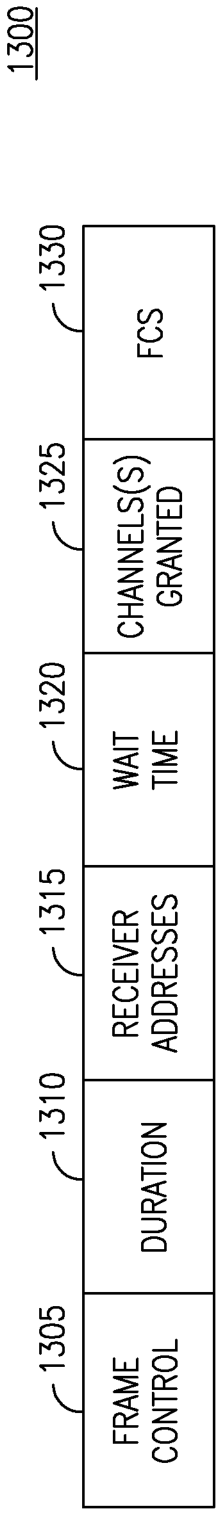


FIG. 13

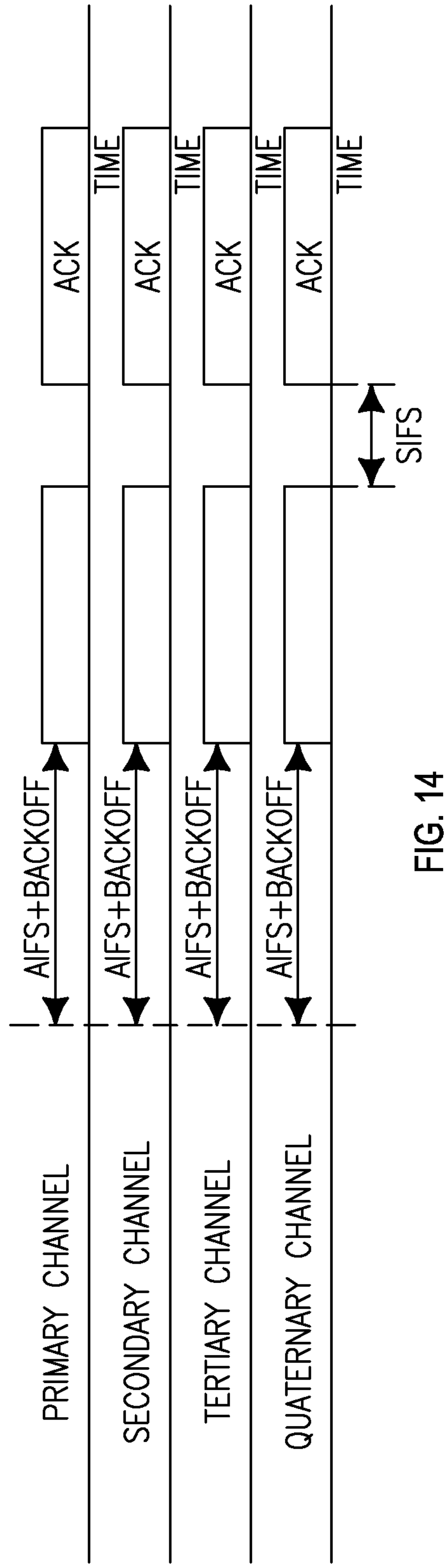


FIG. 14

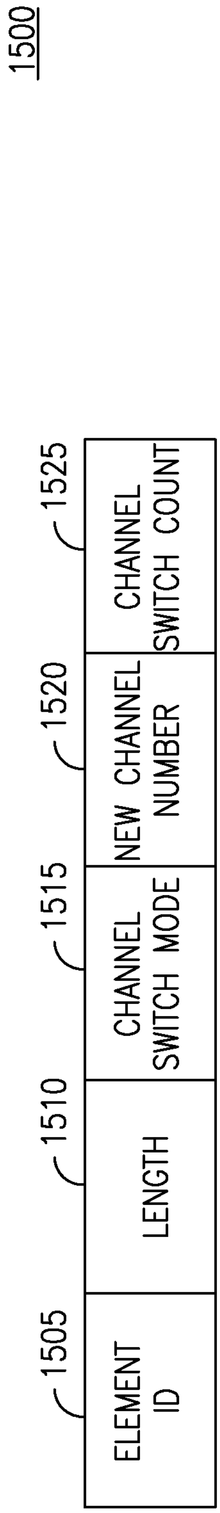


FIG. 15

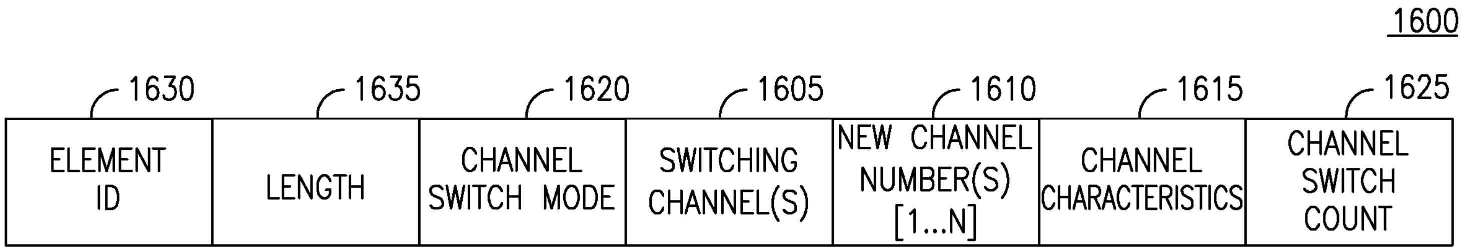


FIG. 16

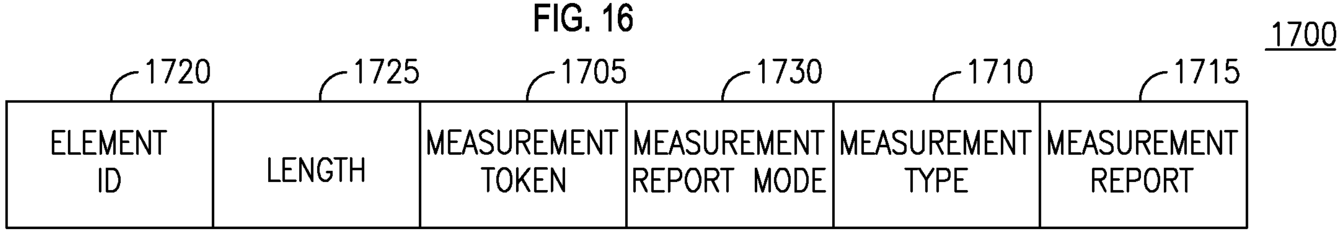


FIG. 17

| NAME | MEASUREMENT TYPE |
|---|---|
| BASIC REPORT | 0 |
| CCA REPORT | 1 |
| RPI HISTOGRAM REPORT | 2 |
| RESERVED | 3–255 |

FIG. 18

| | PRIMARY | SECONDARY | TERTIARY | QUATERNARY | RESERVED |
|---|---|---|---|---|---|
| BIT: | 0 | 1 | 2 | 3 | 5–7 |

FIG. 19

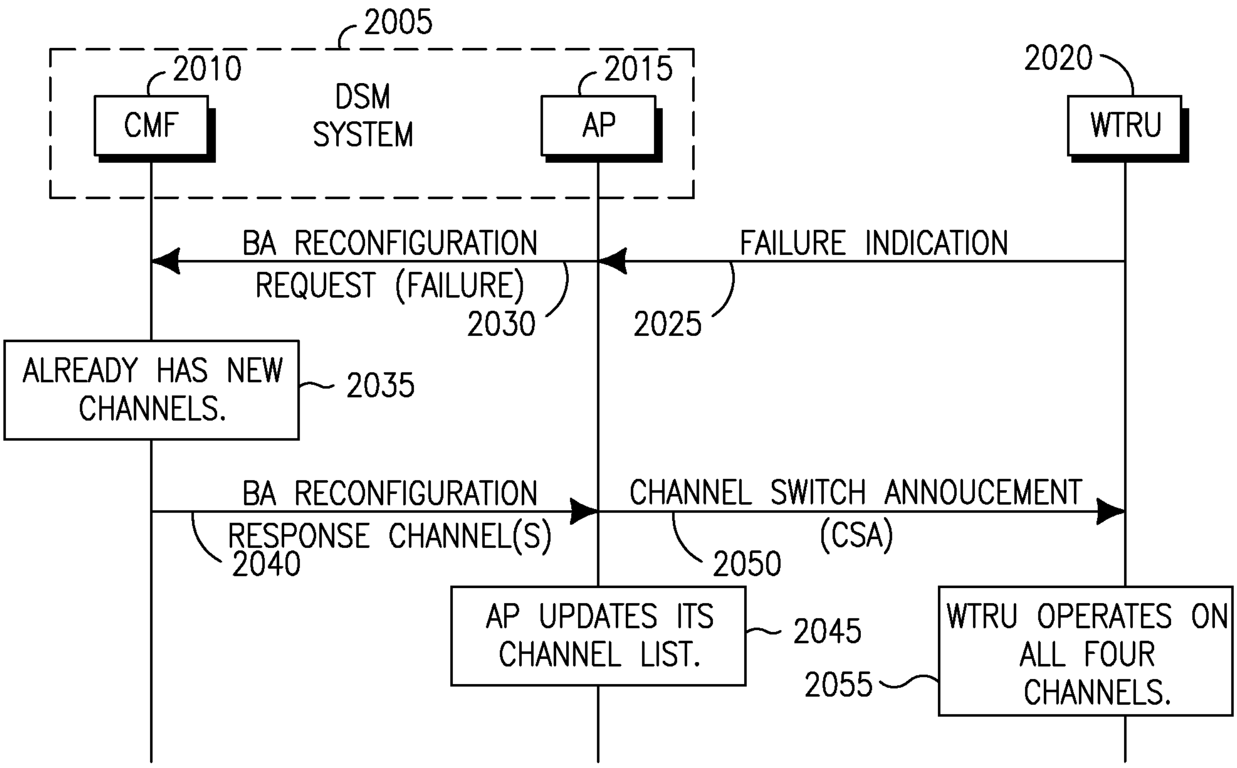
2005
2010
CMF
DSM
SYSTEM
2015
AP
2020
WTRU
BA RECONFIGURATION
REQUEST (FAILURE)
2030
FAILURE INDICATION
2025
ALREADY HAS NEW
CHANNELS.
2035
BA RECONFIGURATION
RESPONSE CHANNEL(S)
2040
CHANNEL SWITCH ANNOUCEMENT
(CSA)
2050
AP UPDATES ITS
CHANNEL LIST.
2045
WTRU OPERATES ON
ALL FOUR
CHANNELS.
2055

FIG. 20

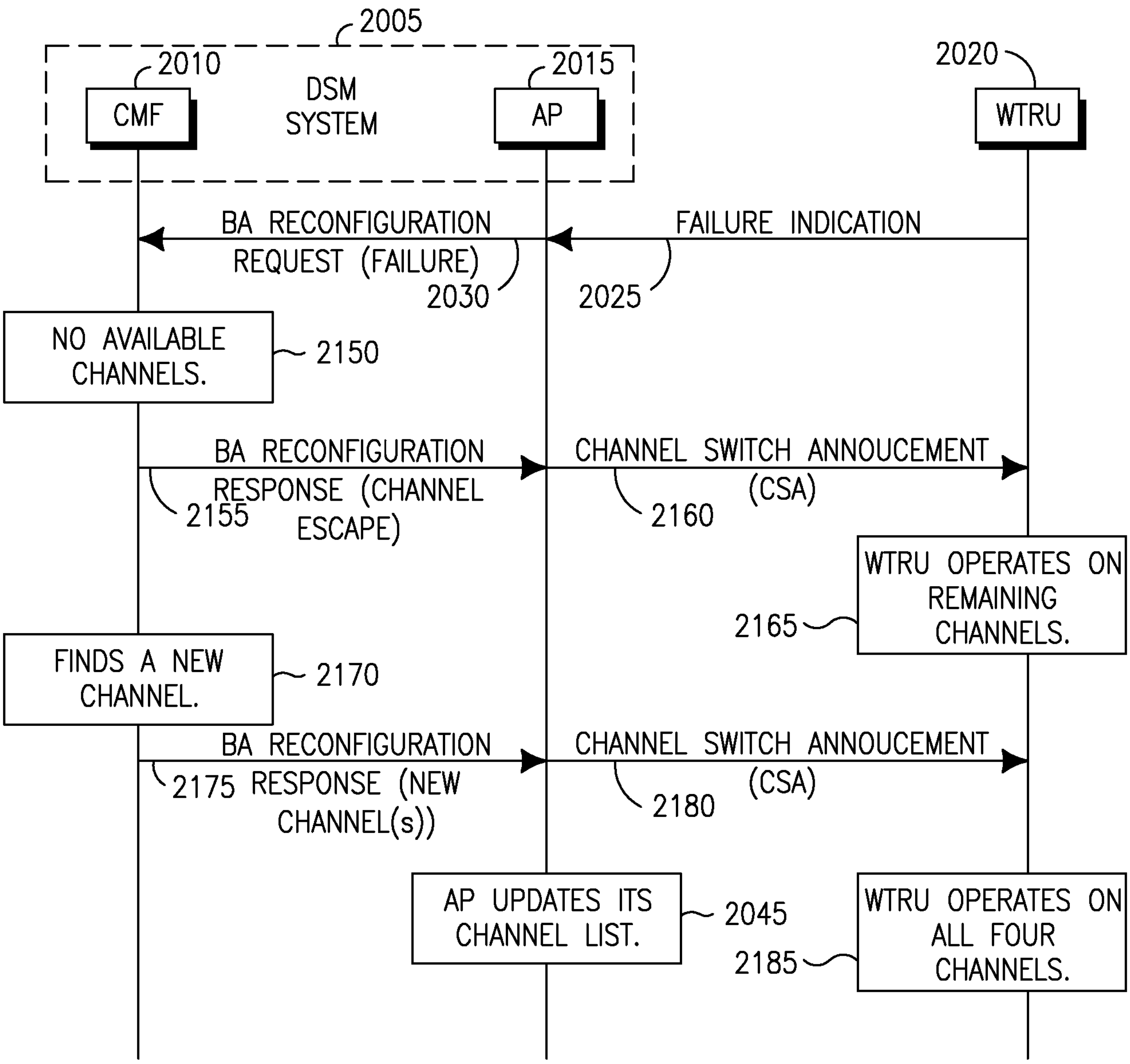
2005
2010
CMF
DSM SYSTEM
2015
AP
2020
WTRU
BA RECONFIGURATION REQUEST (FAILURE)
2030
FAILURE INDICATION
2025
NO AVAILABLE CHANNELS.
2150
BA RECONFIGURATION RESPONSE (CHANNEL ESCAPE)
2155
CHANNEL SWITCH ANNOUCEMENT (CSA)
2160
WTRU OPERATES ON REMAINING CHANNELS.
2165
FINDS A NEW CHANNEL.
2170
BA RECONFIGURATION RESPONSE (NEW CHANNEL(s))
2175
CHANNEL SWITCH ANNOUCEMENT (CSA)
2180
AP UPDATES ITS CHANNEL LIST.
2045
WTRU OPERATES ON ALL FOUR CHANNELS.
2185

FIG. 21

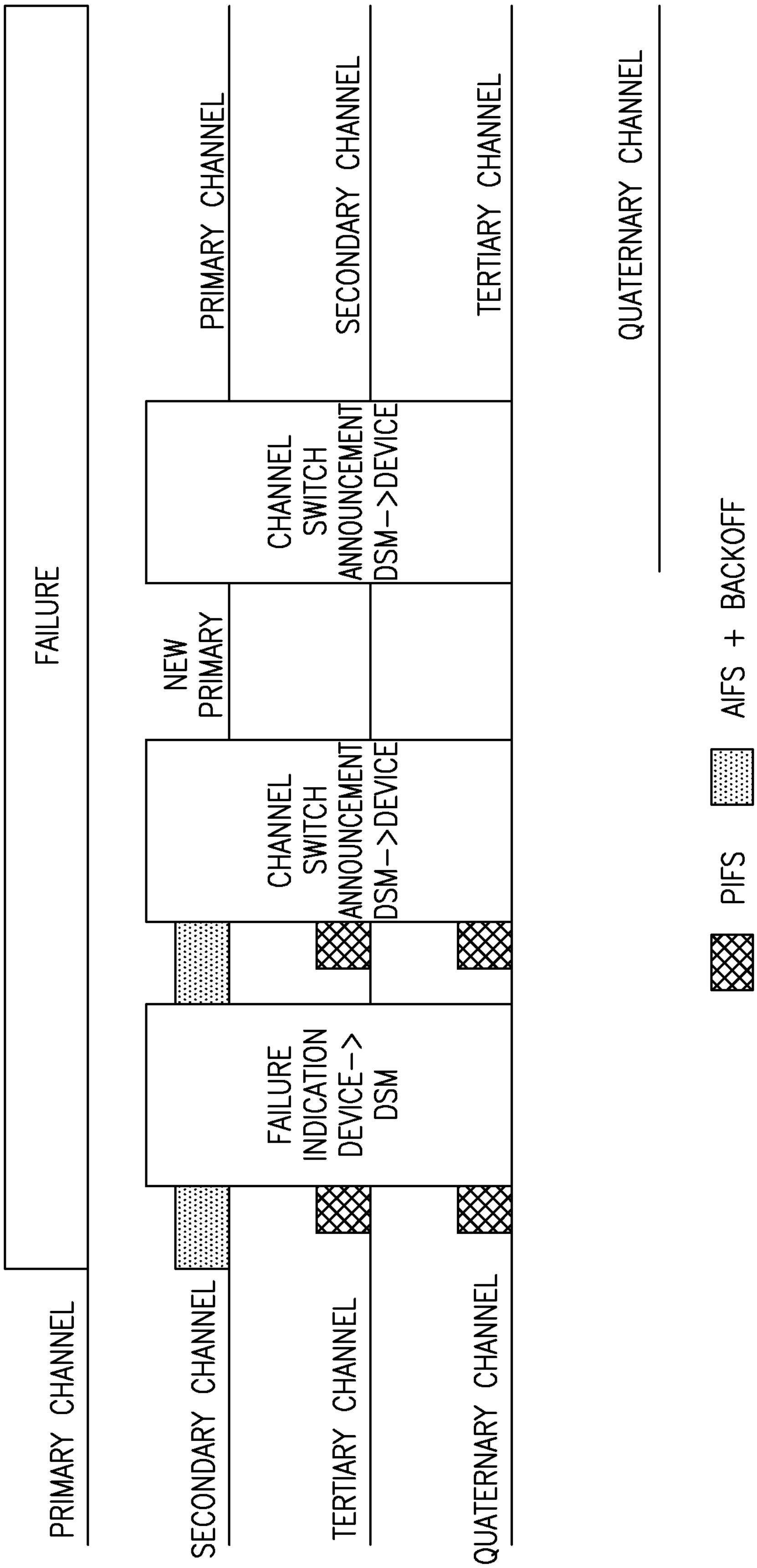
PRIMARY CHANNEL
SECONDARY CHANNEL
TERTIARY CHANNEL
QUATERNARY CHANNEL
FAILURE
FAILURE INDICATION DEVICE–> DSM
CHANNEL SWITCH ANNOUNCEMENT DSM–>DEVICE
NEW PRIMARY
CHANNEL SWITCH ANNOUNCEMENT DSM–>DEVICE
PRIMARY CHANNEL
SECONDARY CHANNEL
TERTIARY CHANNEL
QUATERNARY CHANNEL
PIFS
AIFS + BACKOFF

FIG. 22

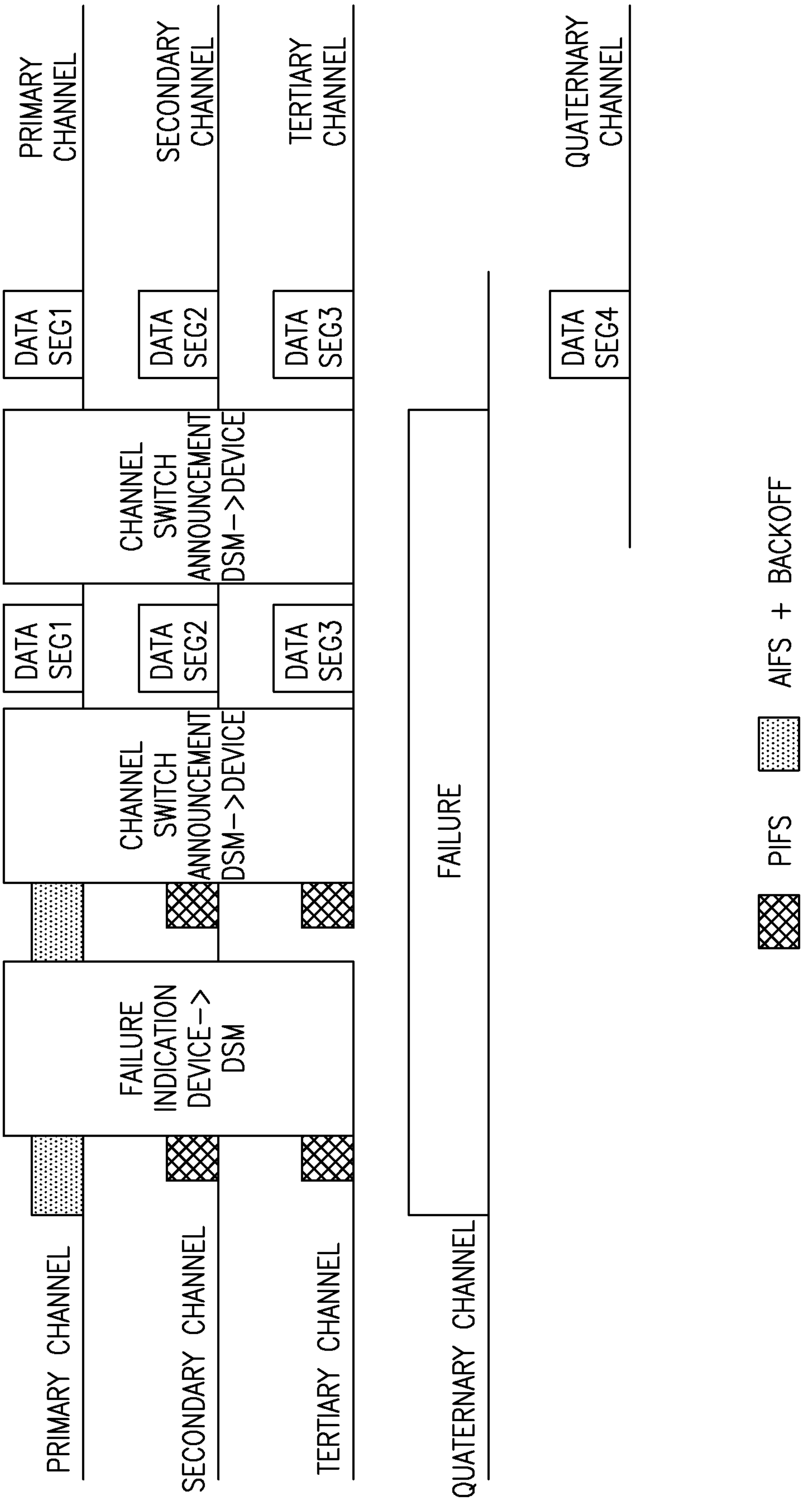
PRIMARY CHANNEL
SECONDARY CHANNEL
TERTIARY CHANNEL
QUATERNARY CHANNEL
FAILURE INDICATION DEVICE-> DSM
CHANNEL SWITCH ANNOUNCEMENT DSM->DEVICE
DATA SEG1
DATA SEG2
DATA SEG3
CHANNEL SWITCH ANNOUNCEMENT DSM->DEVICE
FAILURE
DATA SEG1
DATA SEG2
DATA SEG3
DATA SEG4
PRIMARY CHANNEL
SECONDARY CHANNEL
TERTIARY CHANNEL
QUATERNARY CHANNEL
PIFS
AIFS + BACKOFF

FIG. 23

| MESSAGE | PRIORITY | IDLE MODE MONITORING | IMPORTANCE AT FAILURE | BROADCAST/ UNICAST |
|---|---|---|---|---|
| BEACON | H | Y | Y | B |
| CHANNEL SWITCH ANNOUCEMENT | H | Y | Y | B |
| DIRECT LINK SETUP CONFIRM | M | Y | N | U |
| CONGESTION REPORT | H | Y | N | N |
| FAILURE INDICATION | H | Y | N | U |
| PERIODIC SENSING RESULTS | H | N | N | U |
| PAGING MESSAGE | M | Y | N | U |

FIG. 24

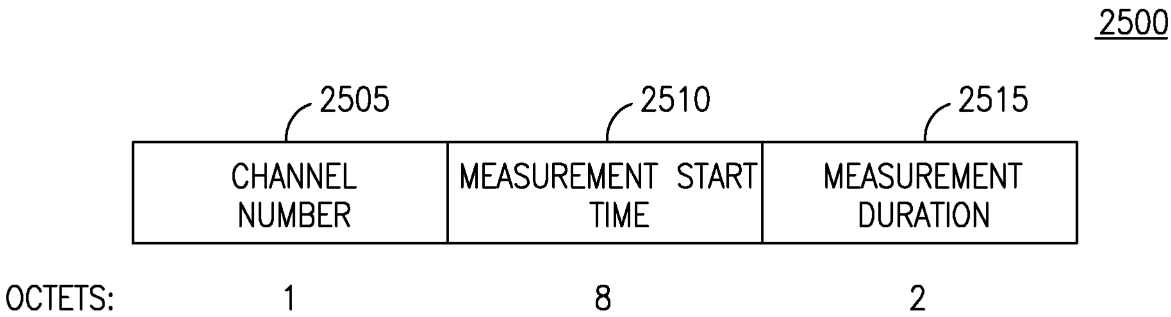


FIG. 25

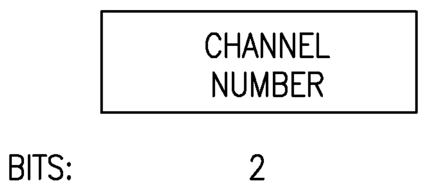


FIG. 26

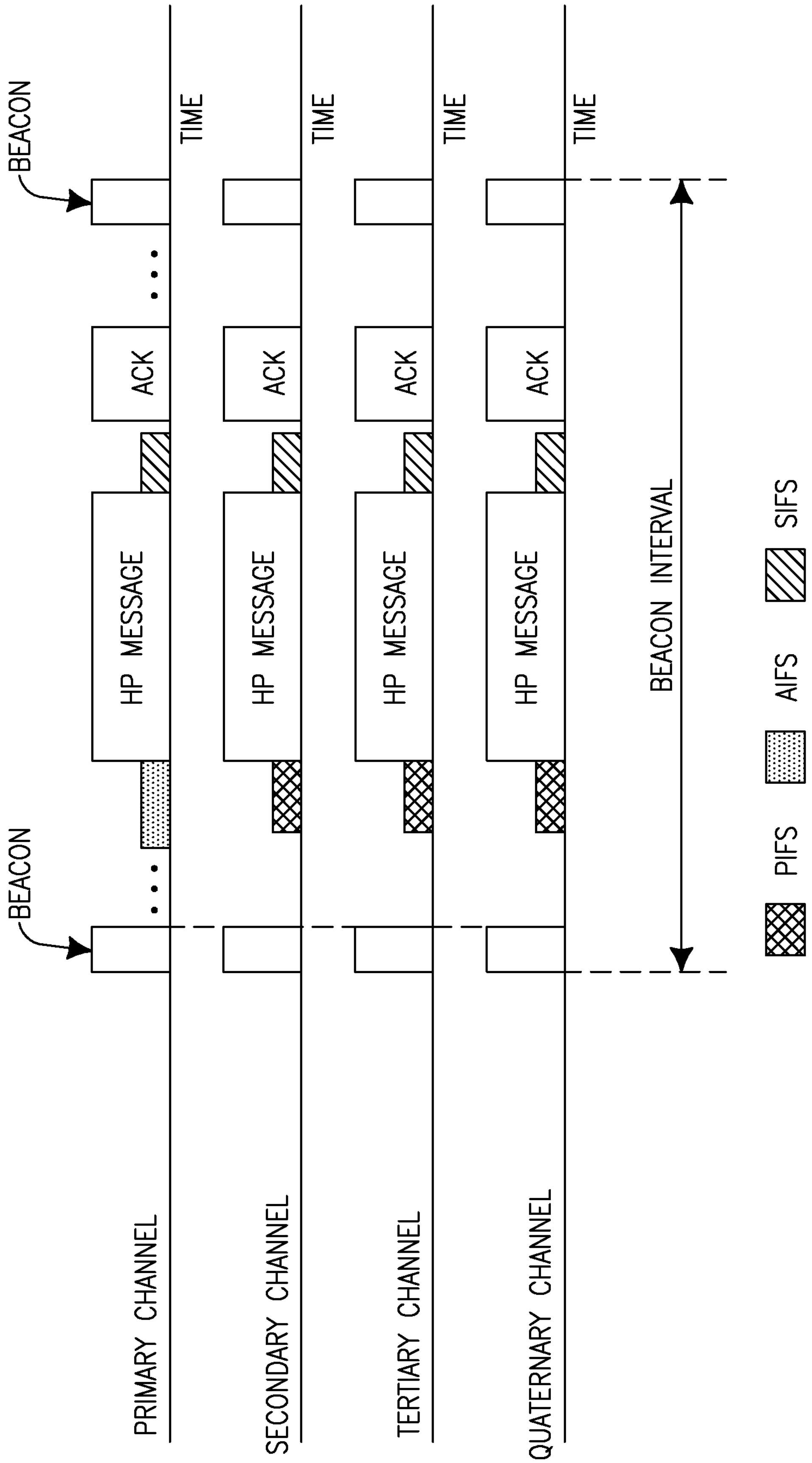
BEACON
BEACON
TIME
TIME
TIME
TIME
PRIMARY CHANNEL
SECONDARY CHANNEL
TERTIARY CHANNEL
QUATERNARY CHANNEL
HP MESSAGE
HP MESSAGE
HP MESSAGE
HP MESSAGE
ACK
ACK
ACK
ACK
BEACON INTERVAL
PIFS
AIFS
SIFS

FIG. 27

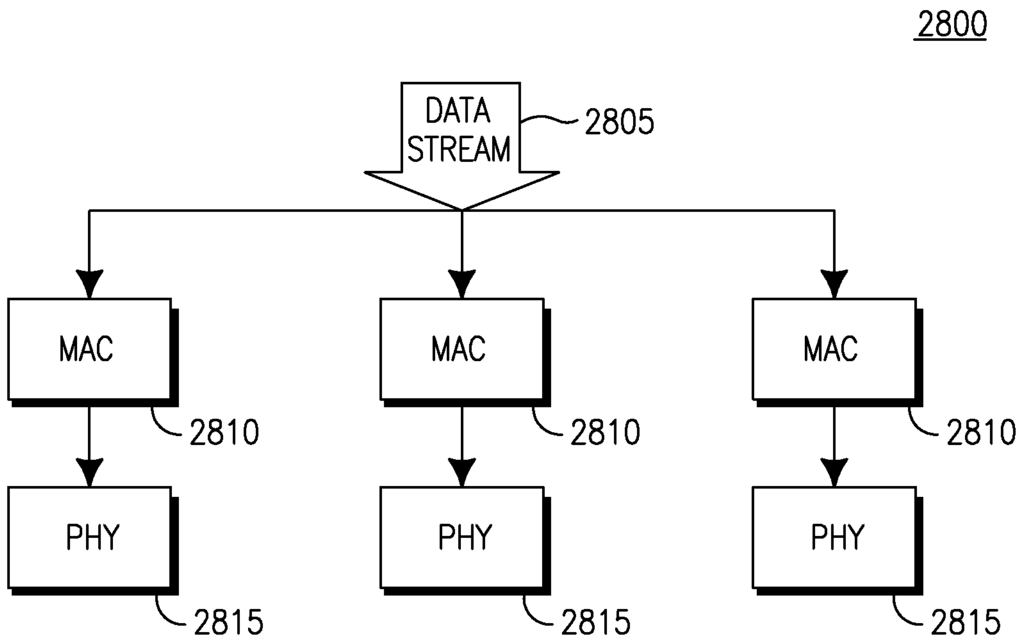
2800
DATA STREAM
2805
MAC
MAC
MAC
2810
2810
2810
PHY
PHY
PHY
2815
2815
2815

FIG. 28

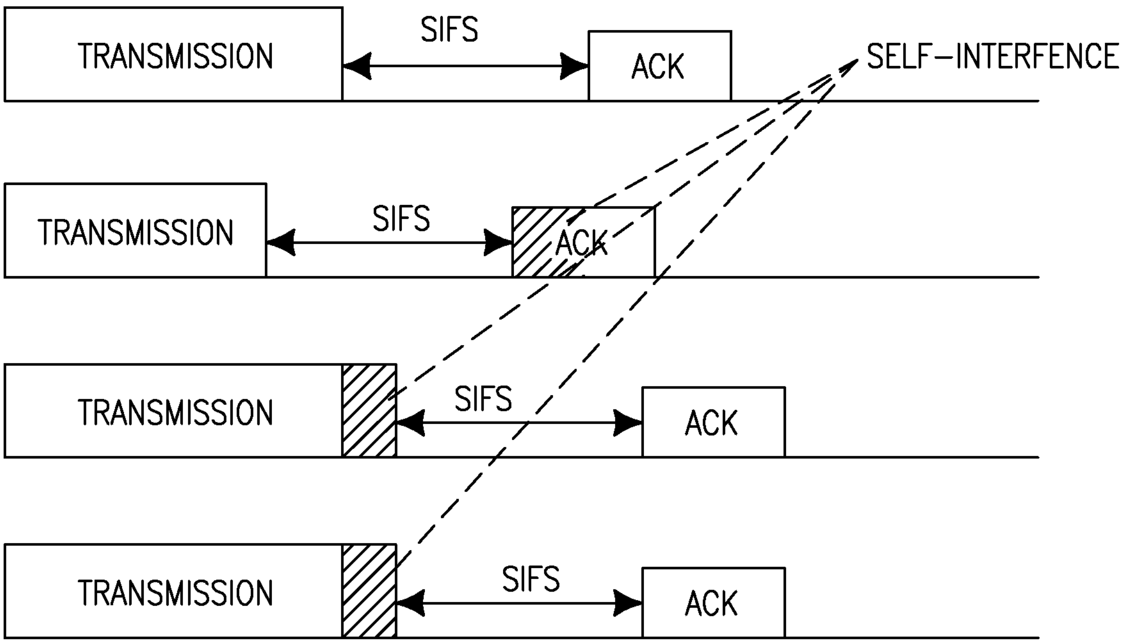
TRANSMISSION
SIFS
ACK
SELF–INTERFENCE
TRANSMISSION
SIFS
ACK
TRANSMISSION
SIFS
ACK
TRANSMISSION
SIFS
ACK

FIG. 29

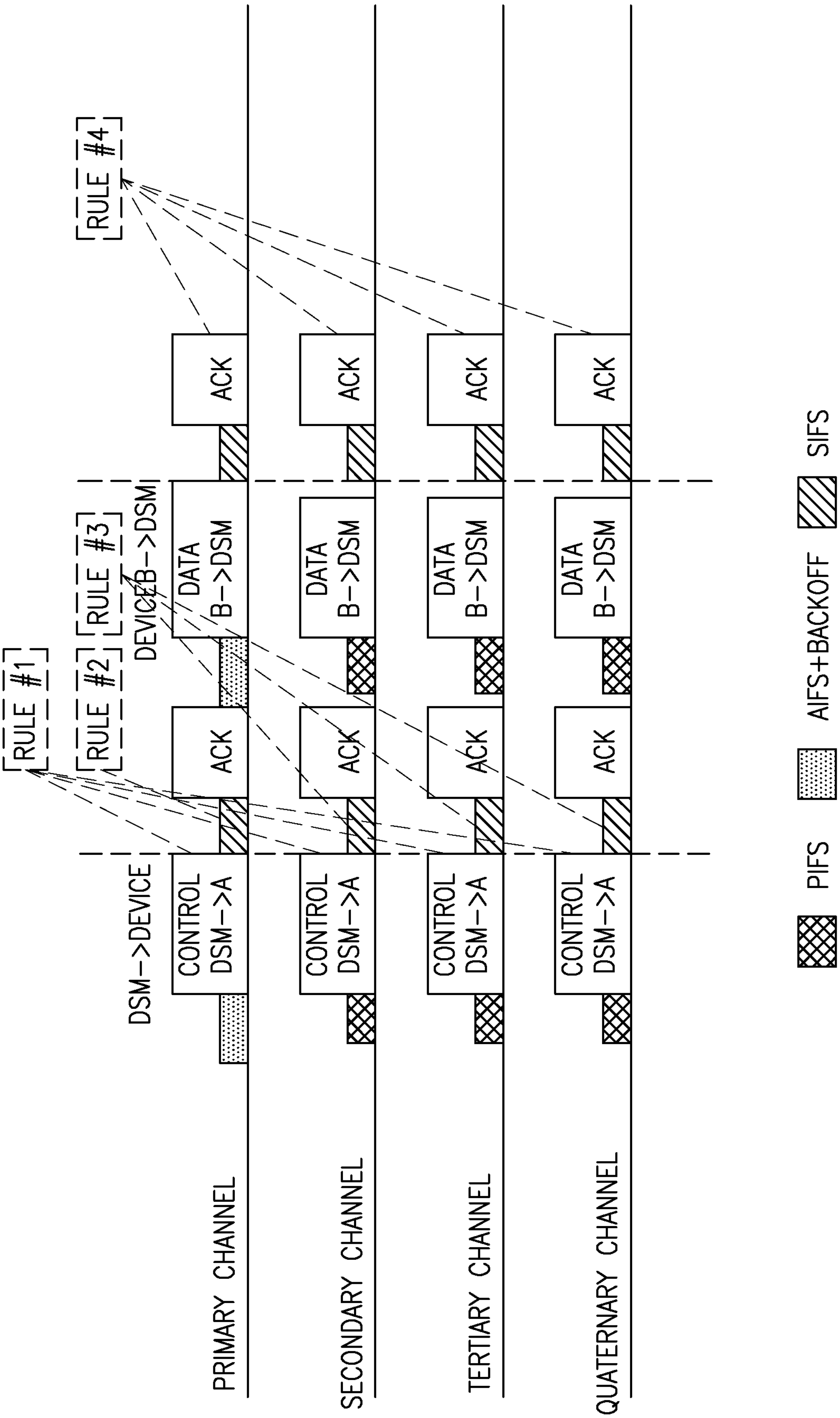
PRIMARY CHANNEL
SECONDARY CHANNEL
TERTIARY CHANNEL
QUATERNARY CHANNEL
DSM->DEVICE
DEVICEB->DSM
CONTROL DSM->A
ACK
DATA B->DSM
RULE #1
RULE #2
RULE #3
RULE #4
PIFS
AIFS+BACKOFF
SIFS

FIG. 30

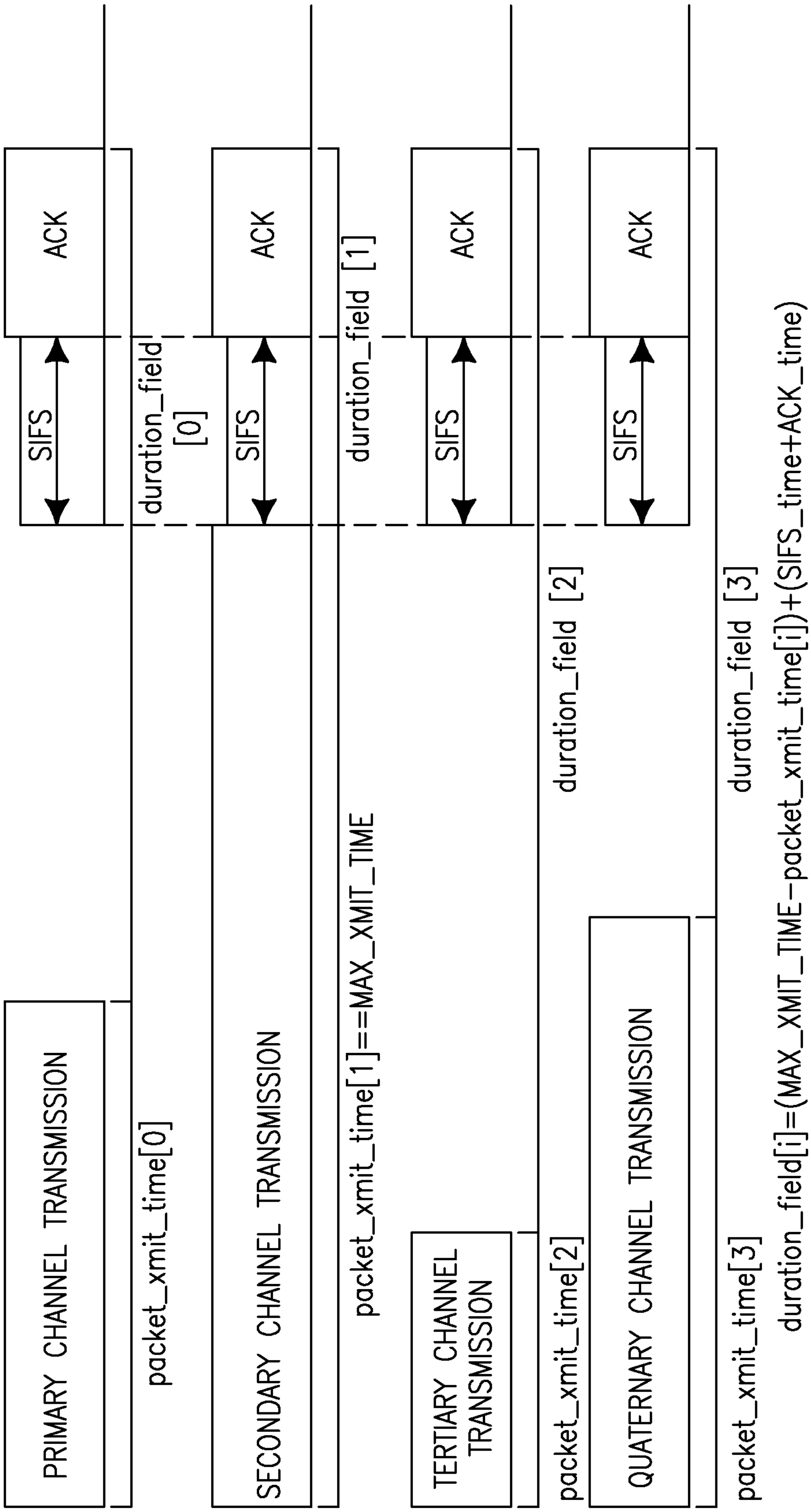
PRIMARY CHANNEL TRANSMISSION
ACK
SIFS
packet_xmit_time[0]
duration_field [0]
SECONDARY CHANNEL TRANSMISSION
ACK
SIFS
packet_xmit_time[1]==MAX_XMIT_TIME
duration_field [1]
TERTIARY CHANNEL TRANSMISSION
ACK
SIFS
packet_xmit_time[2]
duration_field [2]
QUATERNARY CHANNEL TRANSMISSION
ACK
SIFS
packet_xmit_time[3]
duration_field [3]
duration_field[i]=(MAX_XMIT_TIME−packet_xmit_time[i])+(SIFS_time+ACK_time)

FIG. 31

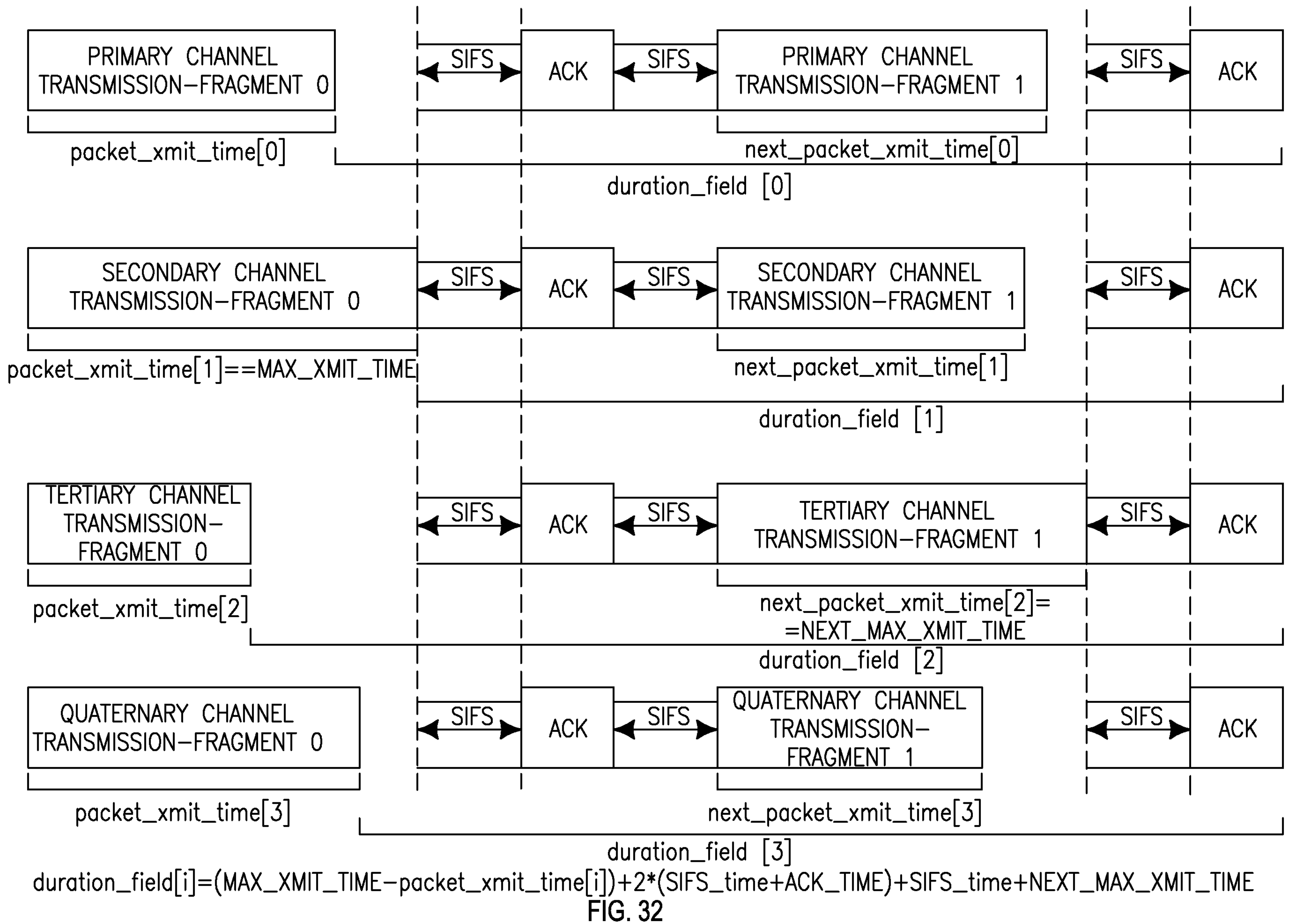
PRIMARY CHANNEL TRANSMISSION–FRAGMENT 0
SIFS
ACK
SIFS
PRIMARY CHANNEL TRANSMISSION–FRAGMENT 1
SIFS
ACK
packet_xmit_time[0]
next_packet_xmit_time[0]
duration_field [0]
SECONDARY CHANNEL TRANSMISSION–FRAGMENT 0
SECONDARY CHANNEL TRANSMISSION–FRAGMENT 1
packet_xmit_time[1]==MAX_XMIT_TIME
next_packet_xmit_time[1]
duration_field [1]
TERTIARY CHANNEL TRANSMISSION– FRAGMENT 0
TERTIARY CHANNEL TRANSMISSION–FRAGMENT 1
packet_xmit_time[2]
next_packet_xmit_time[2]= =NEXT_MAX_XMIT_TIME
duration_field [2]
QUATERNARY CHANNEL TRANSMISSION–FRAGMENT 0
QUATERNARY CHANNEL TRANSMISSION– FRAGMENT 1
packet_xmit_time[3]
next_packet_xmit_time[3]
duration_field [3]
duration_field[i]=(MAX_XMIT_TIME–packet_xmit_time[i])+2*(SIFS_time+ACK_TIME)+SIFS_time+NEXT_MAX_XMIT_TIME

FIG. 32

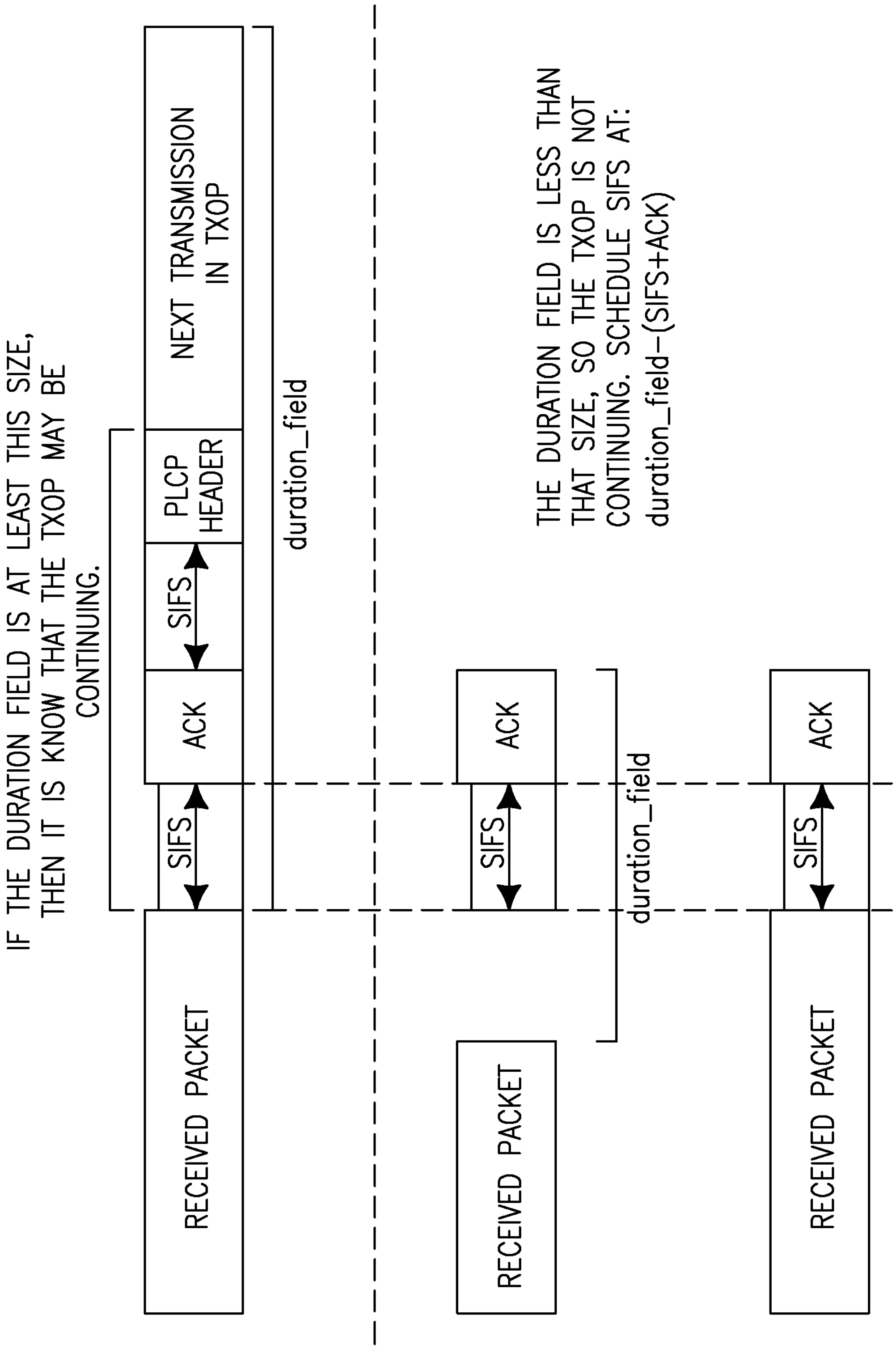
IF THE DURATION FIELD IS AT LEAST THIS SIZE, THEN IT IS KNOW THAT THE TXOP MAY BE CONTINUING.
RECEIVED PACKET
SIFS
ACK
SIFS
PLCP HEADER
NEXT TRANSMISSION IN TXOP
duration_field
RECEIVED PACKET
SIFS
ACK
duration_field
THE DURATION FIELD IS LESS THAN THAT SIZE, SO THE TXOP IS NOT CONTINUING. SCHEDULE SIFS AT: duration_field−(SIFS+ACK)
RECEIVED PACKET
SIFS
ACK

FIG. 33

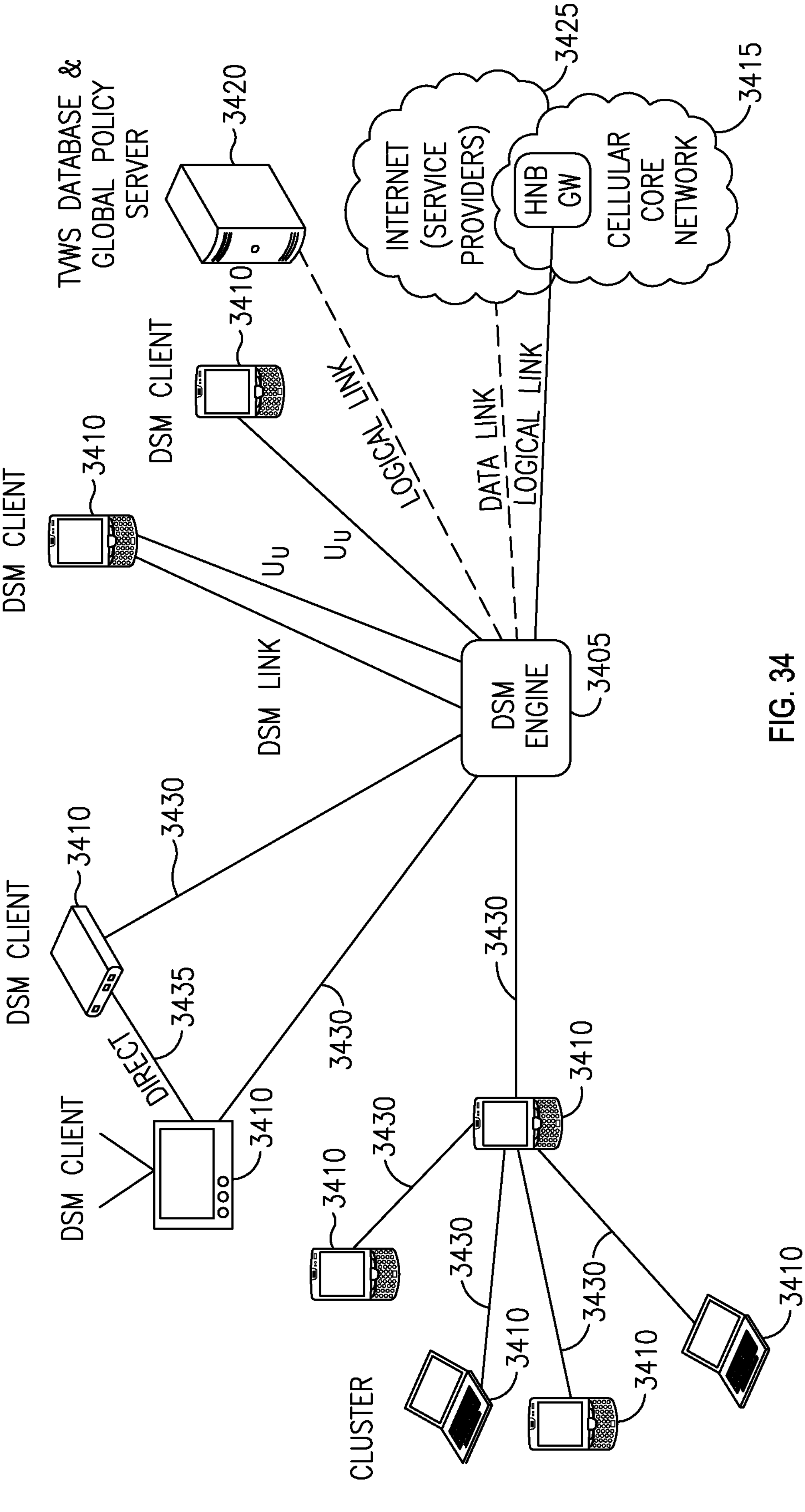
TWS DATABASE &
GLOBAL POLICY
SERVER
3420
INTERNET
(SERVICE
PROVIDERS)
3425
HNB
GW
CELLULAR
CORE
NETWORK
3415
DSM CLIENT
3410
DSM CLIENT
3410
LOGICAL LINK
DATA LINK
LOGICAL LINK
$U_U$
$U_U$
DSM LINK
DSM
ENGINE
3405
DSM CLIENT
3410
3430
3435
DIRECT
DSM CLIENT
3410
3430
3430
3410
3410
3430
3430
3430
3430
3410
3410
3410
3410
CLUSTER

FIG. 34

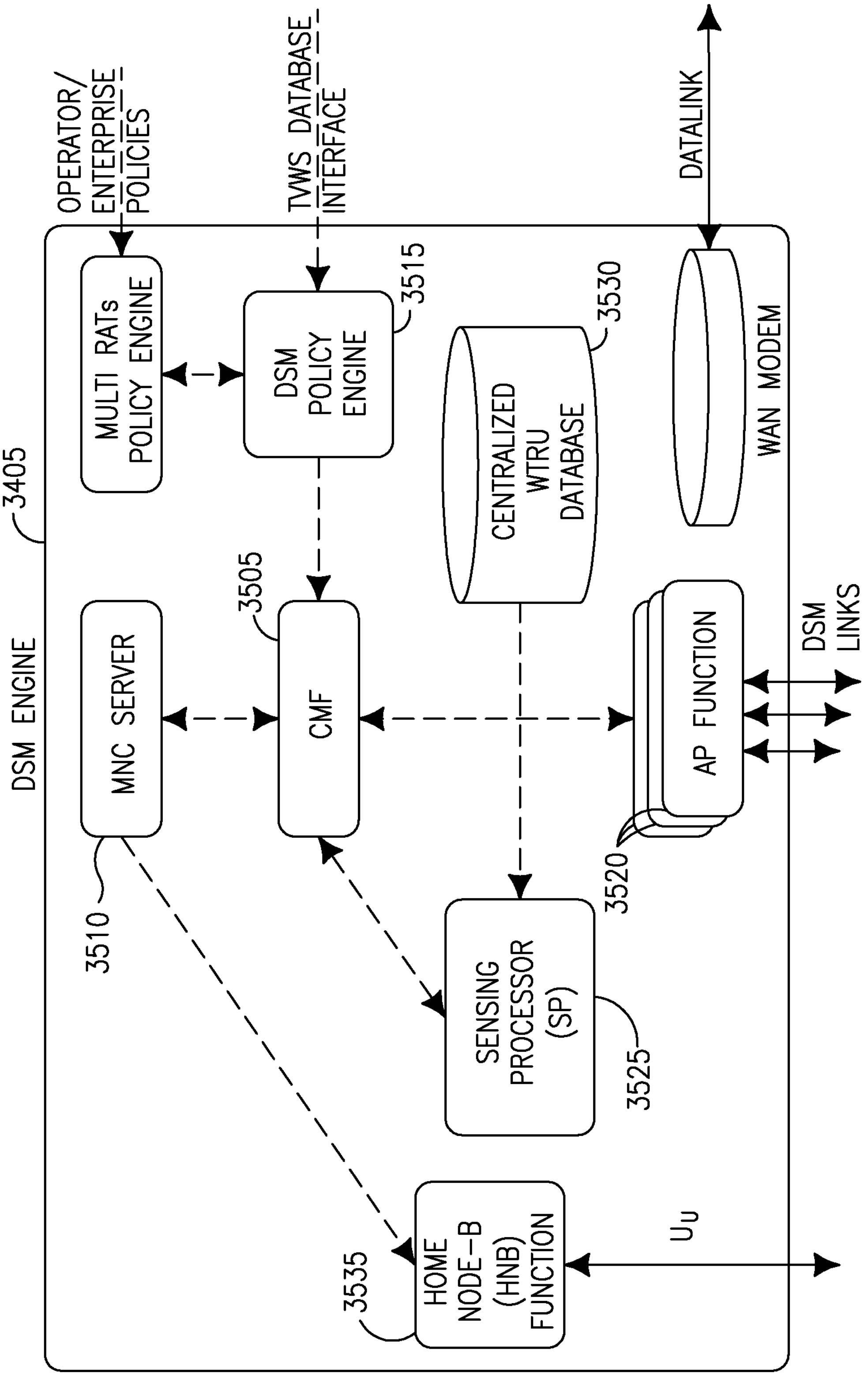
DSM ENGINE
3405
OPERATOR/
ENTERPRISE
POLICIES
TWVS DATABASE
INTERFACE
DATALINK
MULTI RATs
POLICY ENGINE
DSM
POLICY
ENGINE
3515
CENTRALIZED
WTRU
DATABASE
3530
WAN MODEM
MNC SERVER
3510
CMF
3505
AP FUNCTION
3520
DSM
LINKS
SENSING
PROCESSOR
(SP)
3525
HOME
NODE-B
(HNB)
FUNCTION
3535
$U_U$

FIG. 35

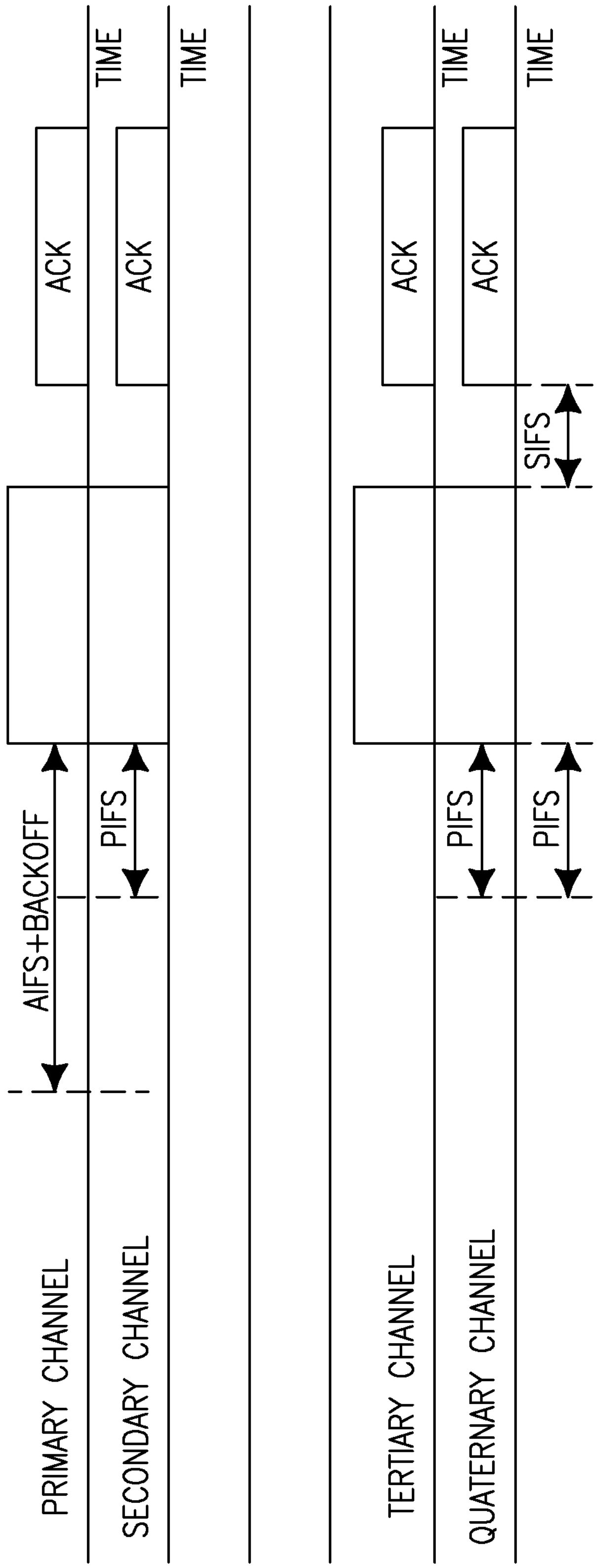
PRIMARY CHANNEL
SECONDARY CHANNEL
TERTIARY CHANNEL
QUATERNARY CHANNEL
AIFS+BACKOFF
PIFS
PIFS
PIFS
SIFS
ACK
ACK
ACK
ACK
TIME
TIME
TIME
TIME

FIG. 36

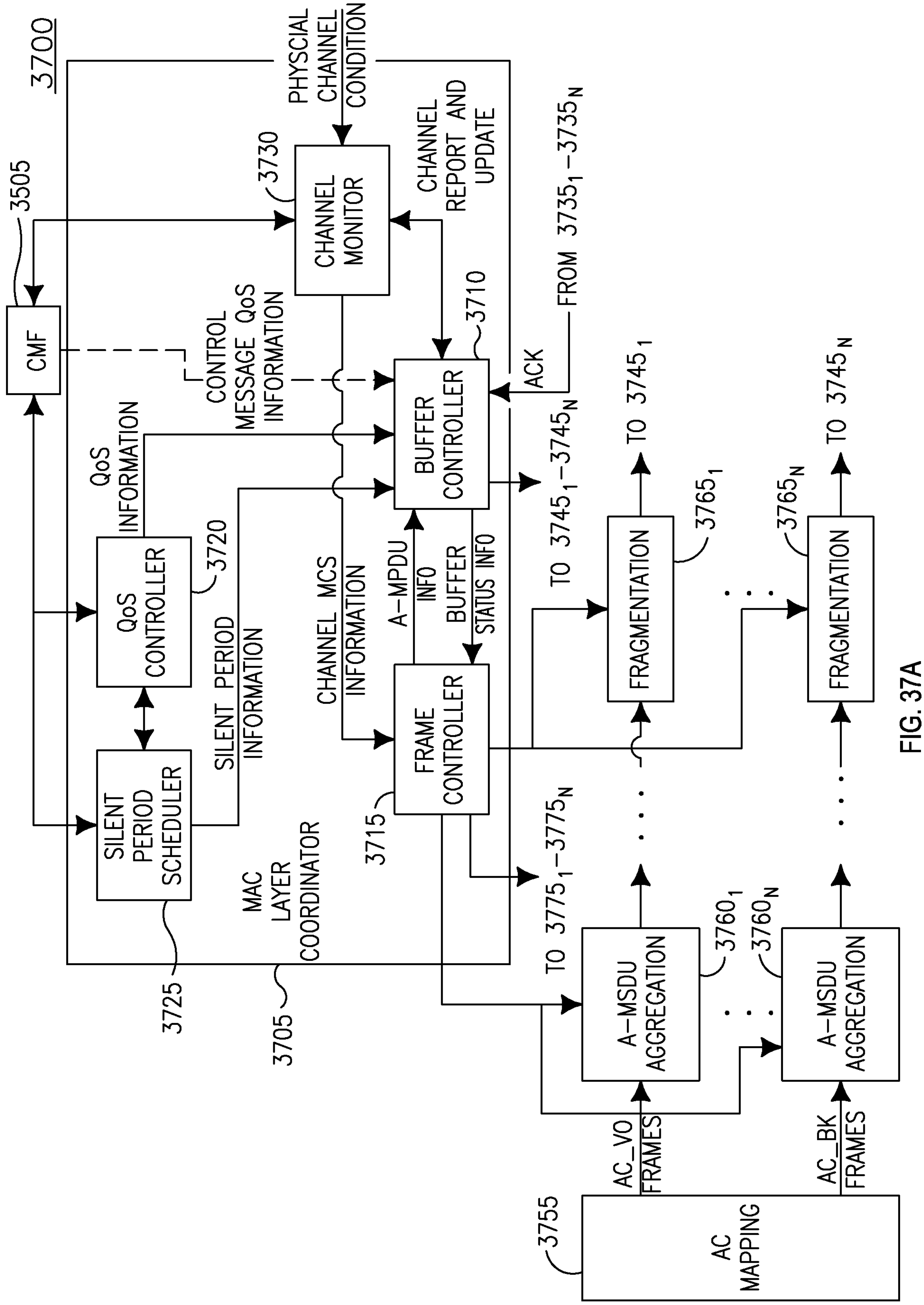
3700
3505
CMF
PHYSCIAL CHANNEL CONDITION
3730
CHANNEL MONITOR
CHANNEL REPORT AND UPDATE
CONTROL MESSAGE QoS INFORMATION
QoS INFORMATION
3710
BUFFER CONTROLLER
ACK
FROM $3735_1$ – $3735_N$
TO $3745_1$ – $3745_N$
3720
QoS CONTROLLER
SILENT PERIOD INFORMATION
CHANNEL MCS INFORMATION
A–MPDU INFO
BUFFER STATUS INFO
SILENT PERIOD SCHEDULER
FRAME CONTROLLER
3715
TO $3775_1$ – $3775_N$
MAC LAYER COORDINATOR
3725
3705
FRAGMENTATION
$3765_1$
TO $3745_1$
FRAGMENTATION
$3765_N$
TO $3745_N$
A–MSDU AGGREGATION
$3760_1$
A–MSDU AGGREGATION
$3760_N$
AC_VO FRAMES
AC_BK FRAMES
3755
AC MAPPING

FIG. 37A

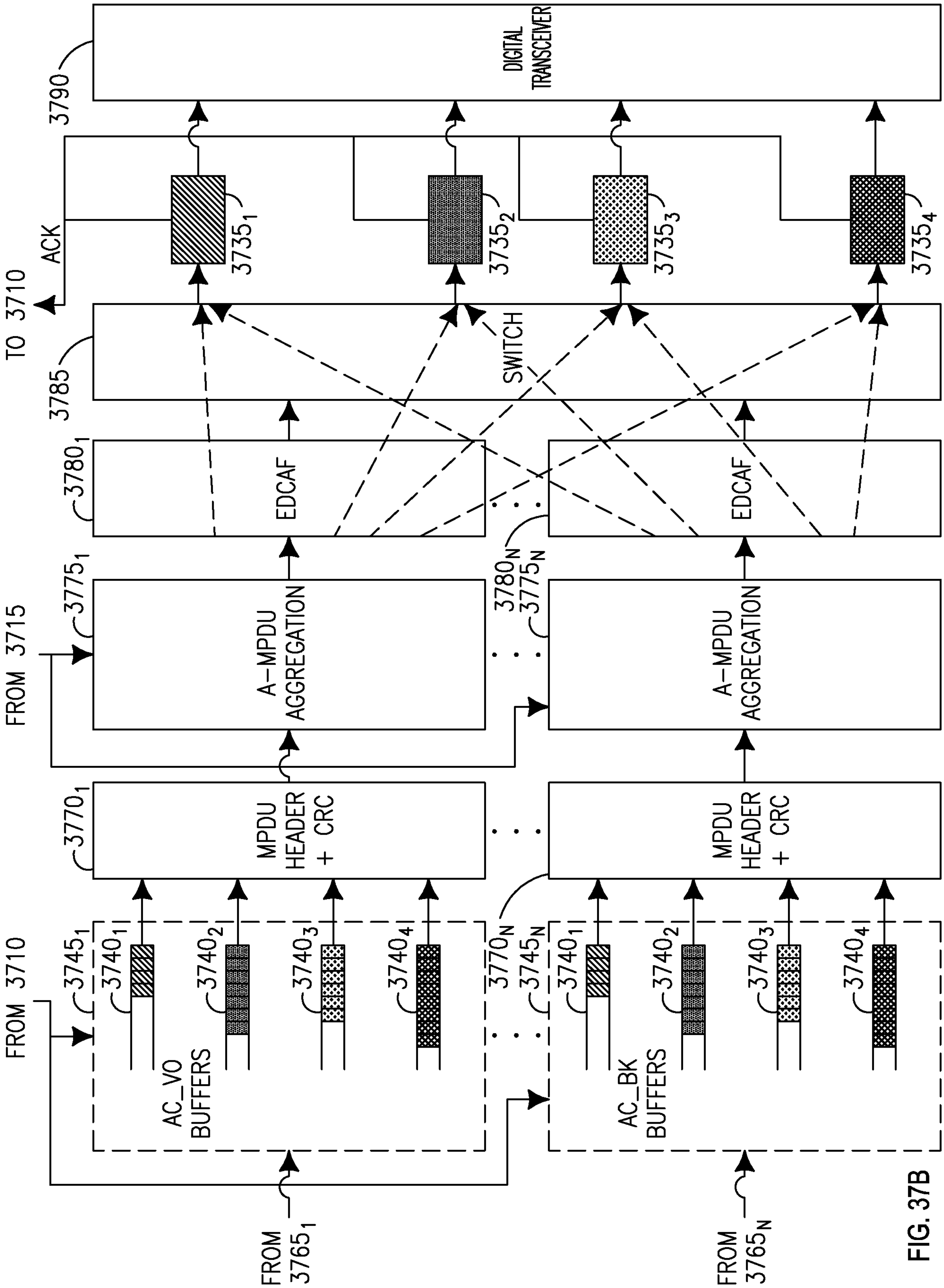
3790
DIGITAL TRANSCEIVER
ACK
TO 3710
3735$_1$
3735$_2$
3735$_3$
3735$_4$
3785
SWITCH
3780$_1$
EDCAF
3780$_N$
EDCAF
FROM 3715
3775$_1$
A–MPDU AGGREGATION
3775$_N$
A–MPDU AGGREGATION
3770$_1$
MPDU HEADER + CRC
3770$_N$
MPDU HEADER + CRC
FROM 3710
3745$_1$
3740$_1$
3740$_2$
3740$_3$
3740$_4$
AC_VO BUFFERS
3745$_N$
3740$_1$
3740$_2$
3740$_3$
3740$_4$
AC_BK BUFFERS
FROM 3765$_1$
FROM 3765$_N$

FIG. 37B

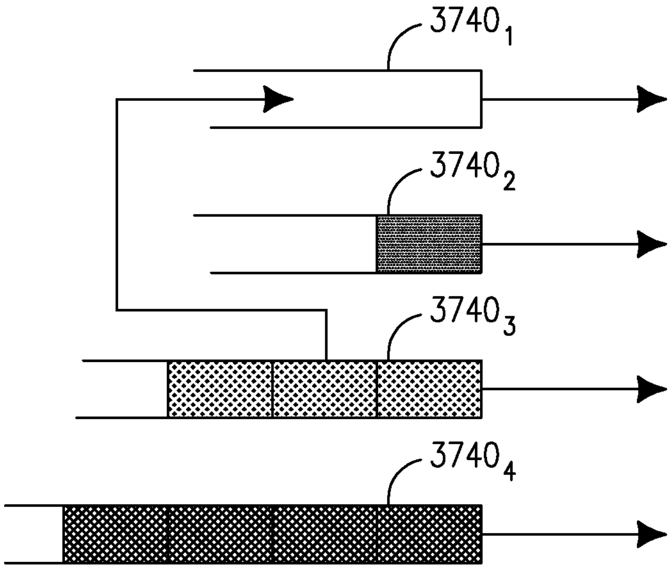


FIG. 38

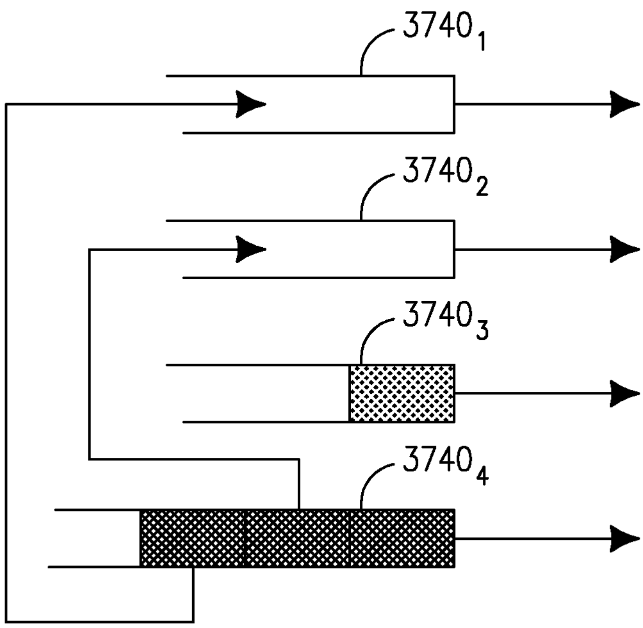


FIG. 39

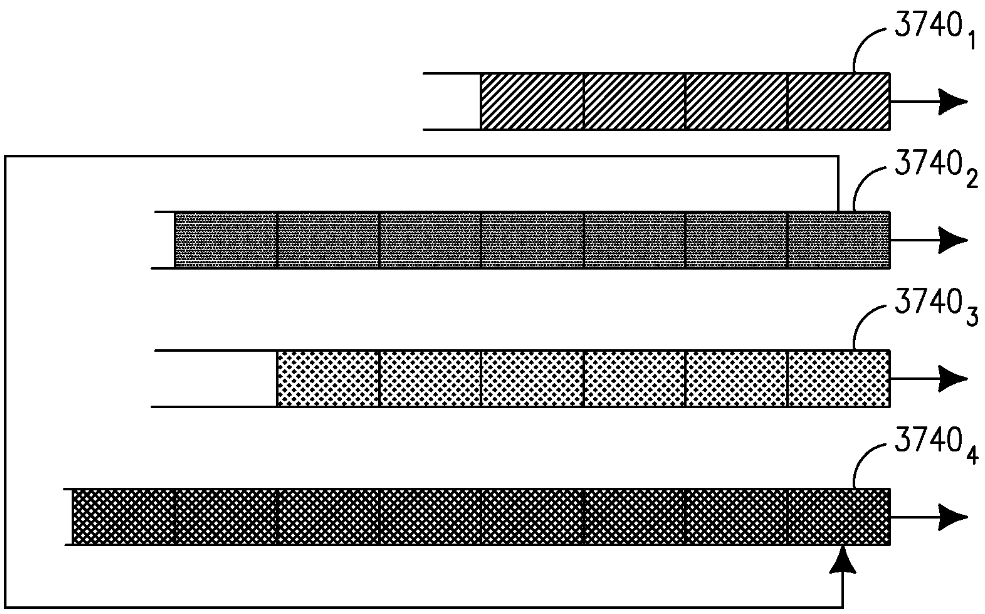


FIG. 40

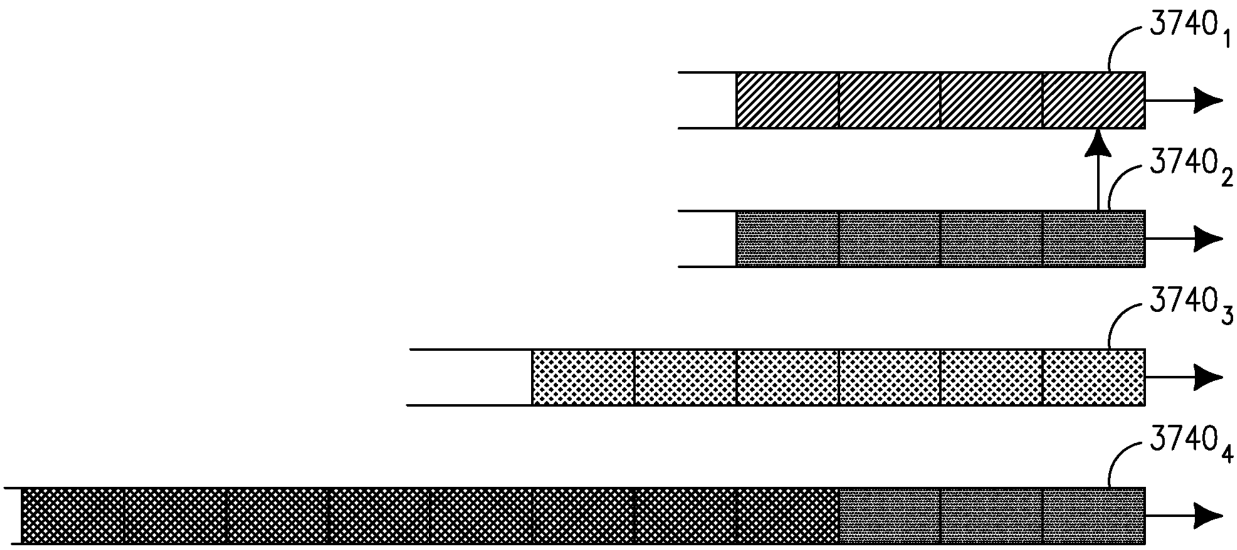


FIG. 41

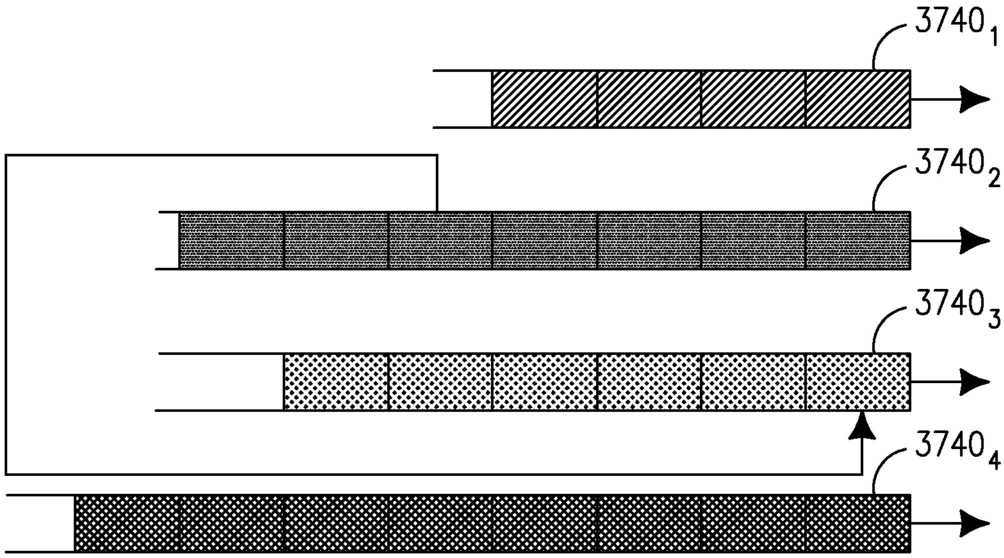


FIG. 42

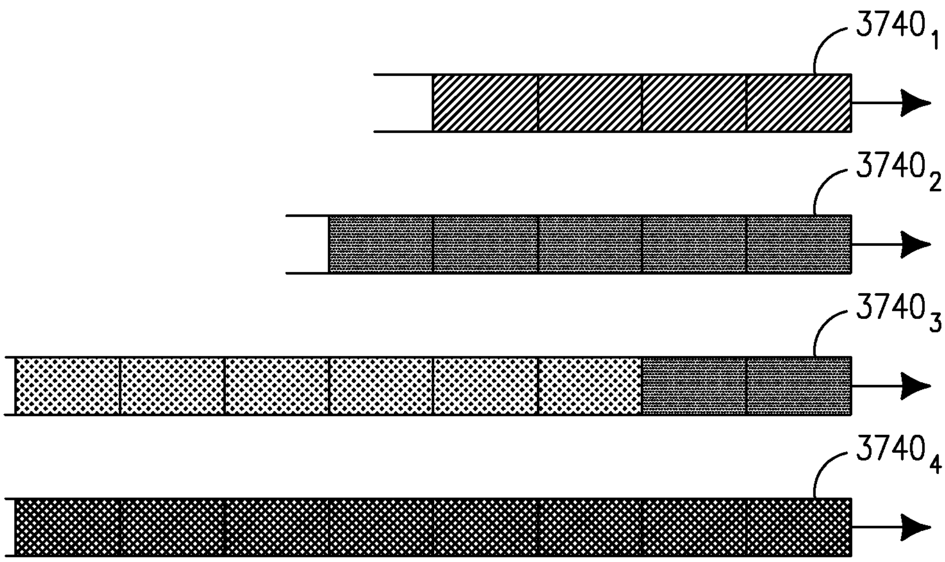


FIG. 43

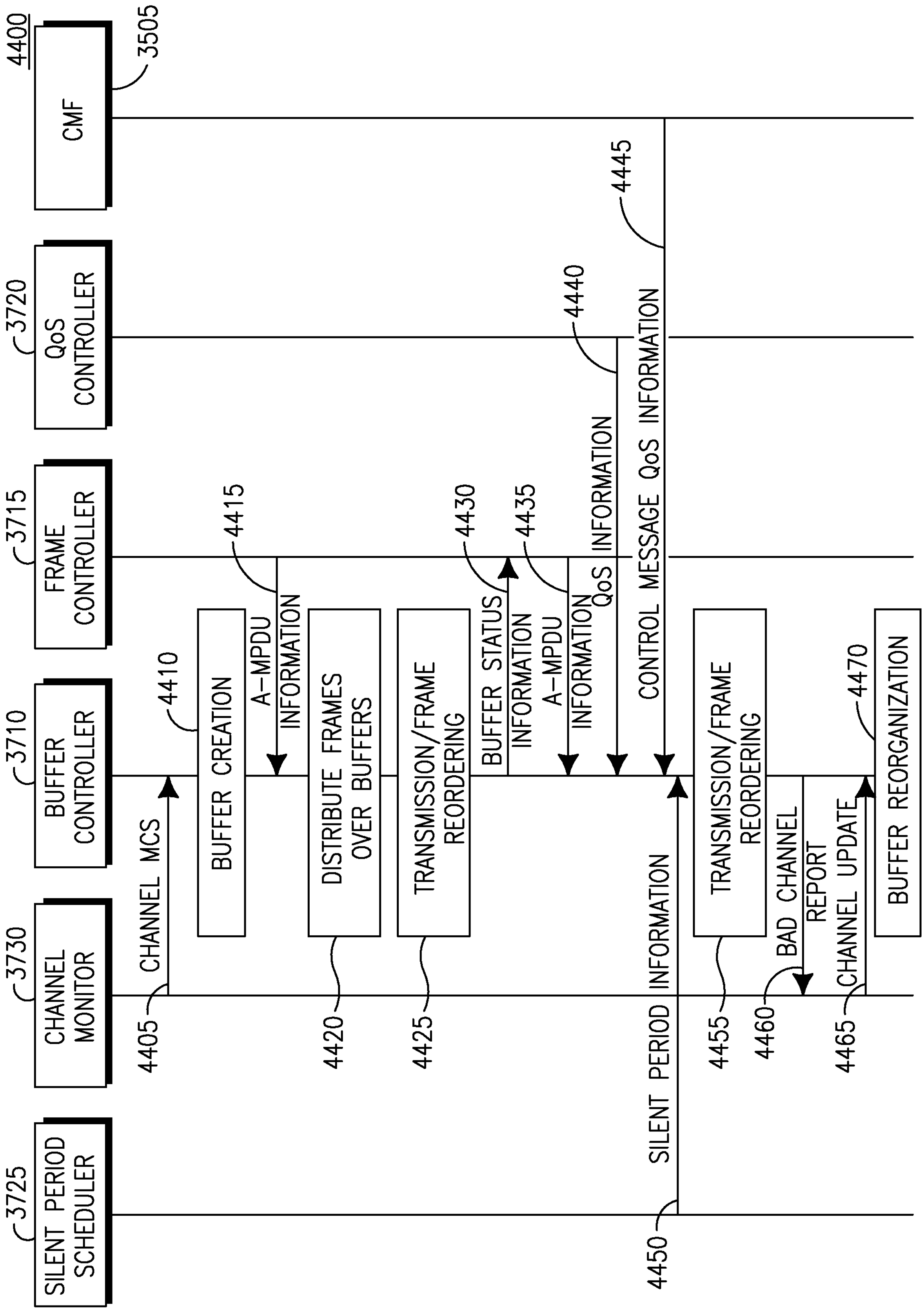
4400
CMF
3505
QoS CONTROLLER
3720
FRAME CONTROLLER
3715
BUFFER CONTROLLER
3710
CHANNEL MONITOR
3730
SILENT PERIOD SCHEDULER
3725
CHANNEL MCS
4405
BUFFER CREATION
4410
A-MPDU INFORMATION
4415
DISTRIBUTE FRAMES OVER BUFFERS
4420
TRANSMISSION/FRAME REORDERING
4425
BUFFER STATUS INFORMATION
4430
A-MPDU INFORMATION
4435
QoS INFORMATION
4440
CONTROL MESSAGE QoS INFORMATION
4445
SILENT PERIOD INFORMATION
4450
TRANSMISSION/FRAME REORDERING
4455
BAD CHANNEL REPORT
4460
CHANNEL UPDATE
4465
BUFFER REORGANIZATION
4470

FIG. 44

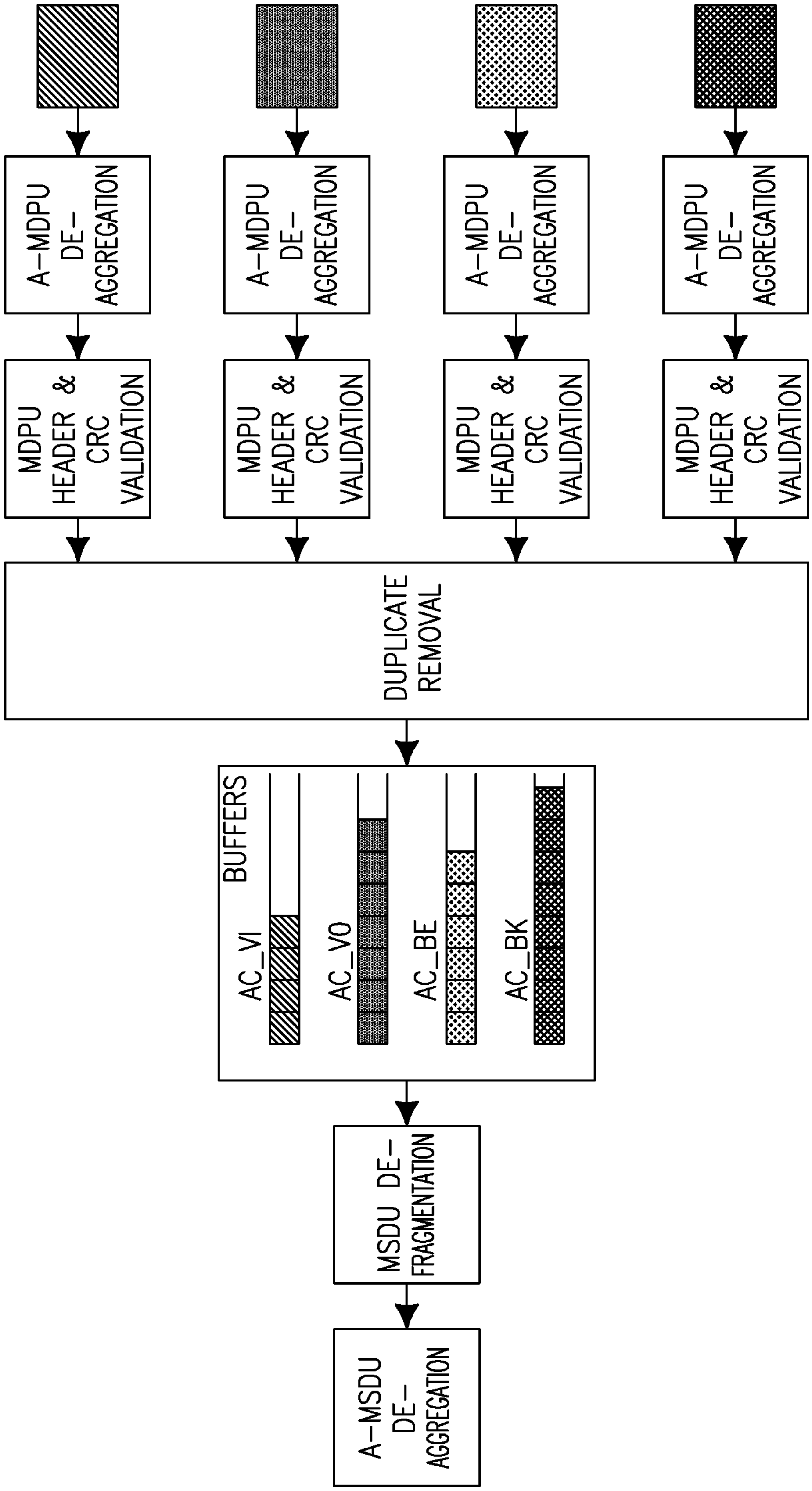
A–MDPU DE–AGGREGATION
A–MDPU DE–AGGREGATION
A–MDPU DE–AGGREGATION
A–MDPU DE–AGGREGATION
MDPU HEADER & CRC VALIDATION
MDPU HEADER & CRC VALIDATION
MDPU HEADER & CRC VALIDATION
MDPU HEADER & CRC VALIDATION
DUPLICATE REMOVAL
BUFFERS
AC_VI
AC_VO
AC_BE
AC_BK
MSDU DE–FRAGMENTATION
A–MSDU DE–AGGREGATION

FIG. 45

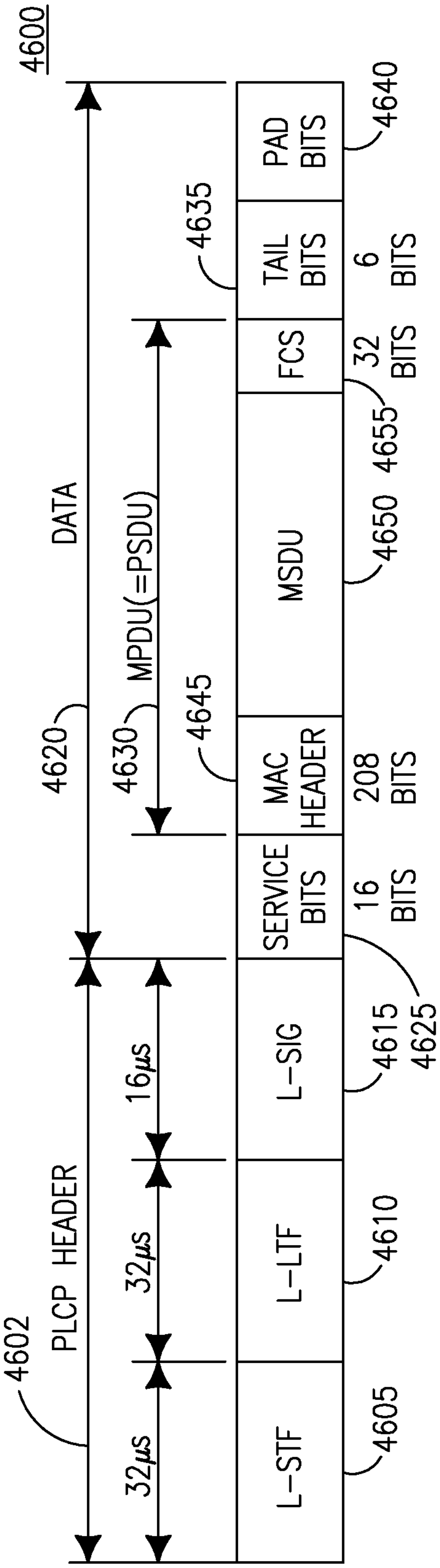
4600
4602
PLCP HEADER
DATA
4620
32µs
32µs
16µs
4630
MPDU(=PSDU)
4645
4635
L-STF
L-LTF
L-SIG
SERVICE BITS
MAC HEADER
MSDU
FCS
TAIL BITS
PAD BITS
16 BITS
208 BITS
32 BITS
6 BITS
4605
4610
4615
4625
4650
4655
4640

FIG. 46

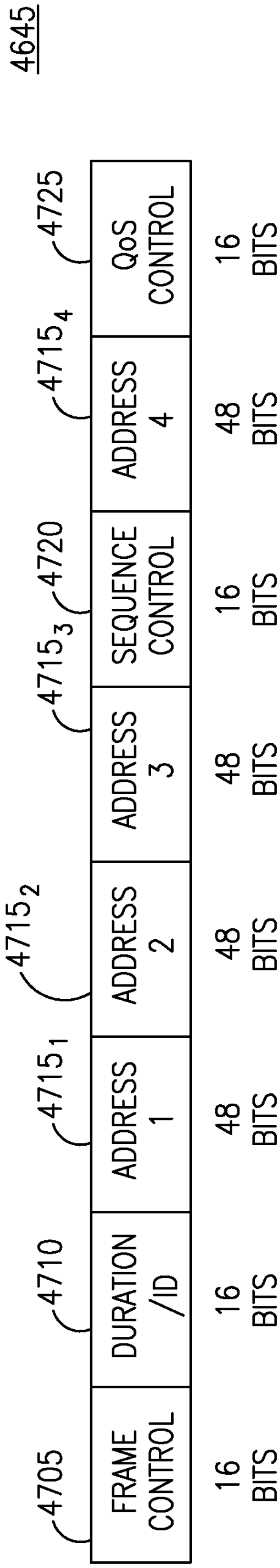
4645
4705
4710
$4715_1$
$4715_2$
$4715_3$
4720
$4715_4$
4725
FRAME CONTROL
DURATION /ID
ADDRESS 1
ADDRESS 2
ADDRESS 3
SEQUENCE CONTROL
ADDRESS 4
QoS CONTROL
16 BITS
16 BITS
48 BITS
48 BITS
48 BITS
16 BITS
48 BITS
16 BITS

FIG. 47

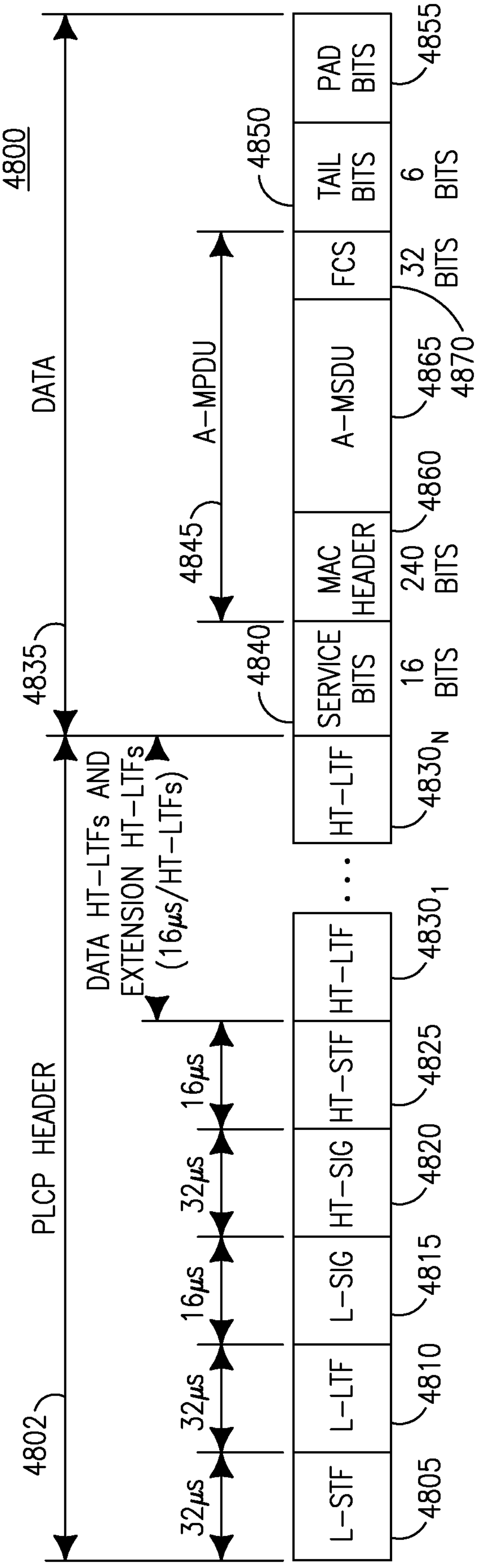
4800
PLCP HEADER
DATA
4802
4835
32μs
32μs
16μs
32μs
16μs
DATA HT-LTFs AND EXTENSION HT-LTFs (16μs/HT-LTFs)
4845
A-MPDU
4840
4850
L-STF
L-LTF
L-SIG
HT-SIG
HT-STF
HT-LTF
...
HT-LTF
SERVICE BITS
MAC HEADER
A-MSDU
FCS
TAIL BITS
PAD BITS
16 BITS
240 BITS
32 BITS
6 BITS
4805
4810
4815
4820
4825
4830₁
4830N
4860
4865
4870
4855

FIG. 48

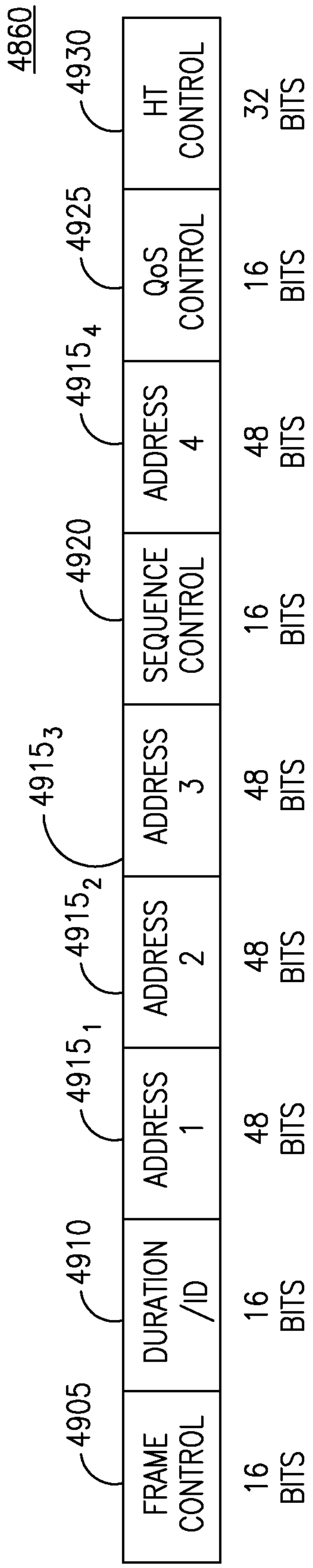
4860
4905
4910
4915₁
4915₂
4915₃
4915₄
4920
4925
4930
FRAME CONTROL
DURATION /ID
ADDRESS 1
ADDRESS 2
ADDRESS 3
SEQUENCE CONTROL
ADDRESS 4
QoS CONTROL
HT CONTROL
16 BITS
16 BITS
48 BITS
48 BITS
48 BITS
16 BITS
48 BITS
16 BITS
32 BITS

FIG. 49

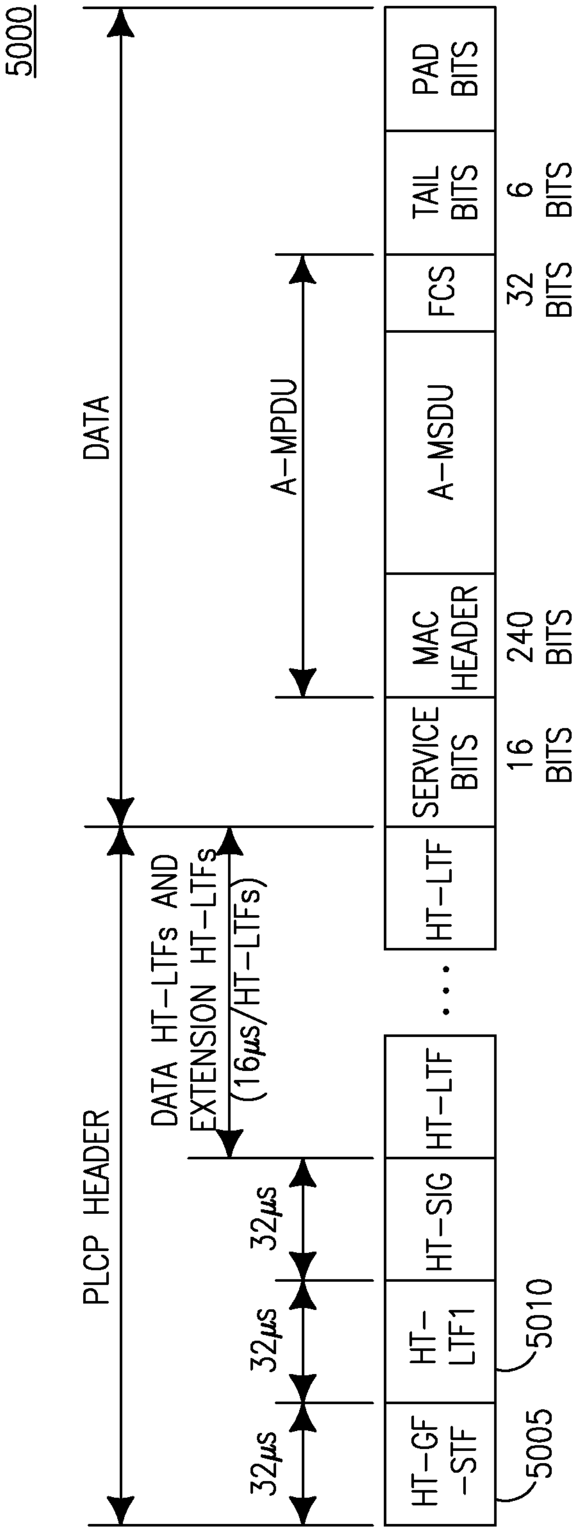
5000
PLCP HEADER
DATA
DATA HT-LTFs AND EXTENSION HT-LTFs (16μs/HT-LTFs)
A-MPDU
32μs
32μs
32μs
HT-GF -STF
HT- LTF1
HT-SIG
HT-LTF
. . .
HT-LTF
SERVICE BITS
MAC HEADER
A-MSDU
FCS
TAIL BITS
PAD BITS
16 BITS
240 BITS
32 BITS
6 BITS
5005
5010

FIG. 50

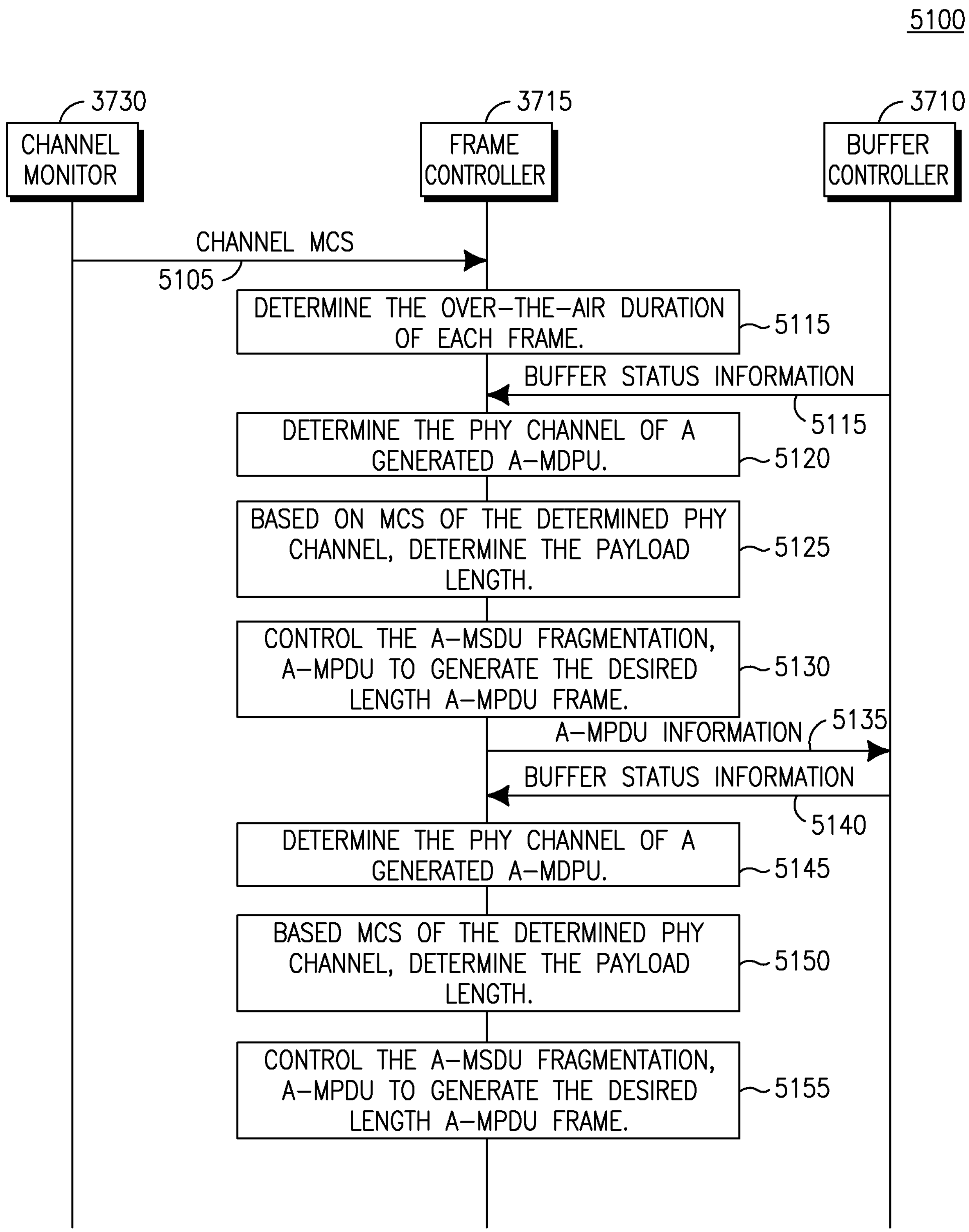
5100
3730
CHANNEL MONITOR
3715
FRAME CONTROLLER
3710
BUFFER CONTROLLER
CHANNEL MCS
5105
DETERMINE THE OVER-THE-AIR DURATION OF EACH FRAME.
5115
BUFFER STATUS INFORMATION
5115
DETERMINE THE PHY CHANNEL OF A GENERATED A-MDPU.
5120
BASED ON MCS OF THE DETERMINED PHY CHANNEL, DETERMINE THE PAYLOAD LENGTH.
5125
CONTROL THE A-MSDU FRAGMENTATION, A-MPDU TO GENERATE THE DESIRED LENGTH A-MPDU FRAME.
5130
A-MPDU INFORMATION
5135
BUFFER STATUS INFORMATION
5140
DETERMINE THE PHY CHANNEL OF A GENERATED A-MDPU.
5145
BASED MCS OF THE DETERMINED PHY CHANNEL, DETERMINE THE PAYLOAD LENGTH.
5150
CONTROL THE A-MSDU FRAGMENTATION, A-MPDU TO GENERATE THE DESIRED LENGTH A-MPDU FRAME.
5155

FIG. 51

| MODULATION | CODING RATE | CODED BITS PER SUBCARRIER | CODED BITS PER OFDM SYMBOL | DATA BITS PER OFDM SYMBOL | DATA RATE (Mb/s) (5 MHz BANDWIDTH) |
|---|---|---|---|---|---|
| BPSK | 1/2 | 1 | 48 | 24 | 1.5 |
| BPSK | 3/4 | 1 | 48 | 36 | 2.25 |
| QPSK | 1/2 | 2 | 96 | 48 | 3 |
| QPSK | 3/4 | 2 | 96 | 72 | 4.5 |
| 16–QAM | 1/2 | 4 | 192 | 96 | 6 |
| 16–QAM | 3/4 | 4 | 192 | 144 | 9 |
| 64–QAM | 2/3 | 6 | 288 | 192 | 12 |
| 64–QAM | 3/4 | 6 | 288 | 216 | 13.5 |

FIG. 52

| MODULATION | CODING RATE | CODED BITS PER SUBCARRIER | CODED BITS PER OFDM SYMBOL | DATA BITS PER OFDM SYMBOL | DATA RATE (Mb/s) (5 MHz BANDWIDTH) |
|---|---|---|---|---|---|
| BPSK | 1/2 | 1 | 52 | 24 | 1.5 |
| QPSK | 1/2 | 2 | 104 | 52 | 3.3 |
| QPSK | 3/4 | 2 | 104 | 78 | 4.9 |
| 16–QAM | 1/2 | 4 | 208 | 104 | 6.5 |
| 16–QAM | 3/4 | 4 | 208 | 156 | 9.8 |
| 64–QAM | 2/3 | 6 | 312 | 208 | 13.0 |
| 64–QAM | 3/4 | 6 | 312 | 234 | 14.7 |
| 64–QAM | 5/6 | 6 | 312 | 260 | 16.3 |

FIG. 53

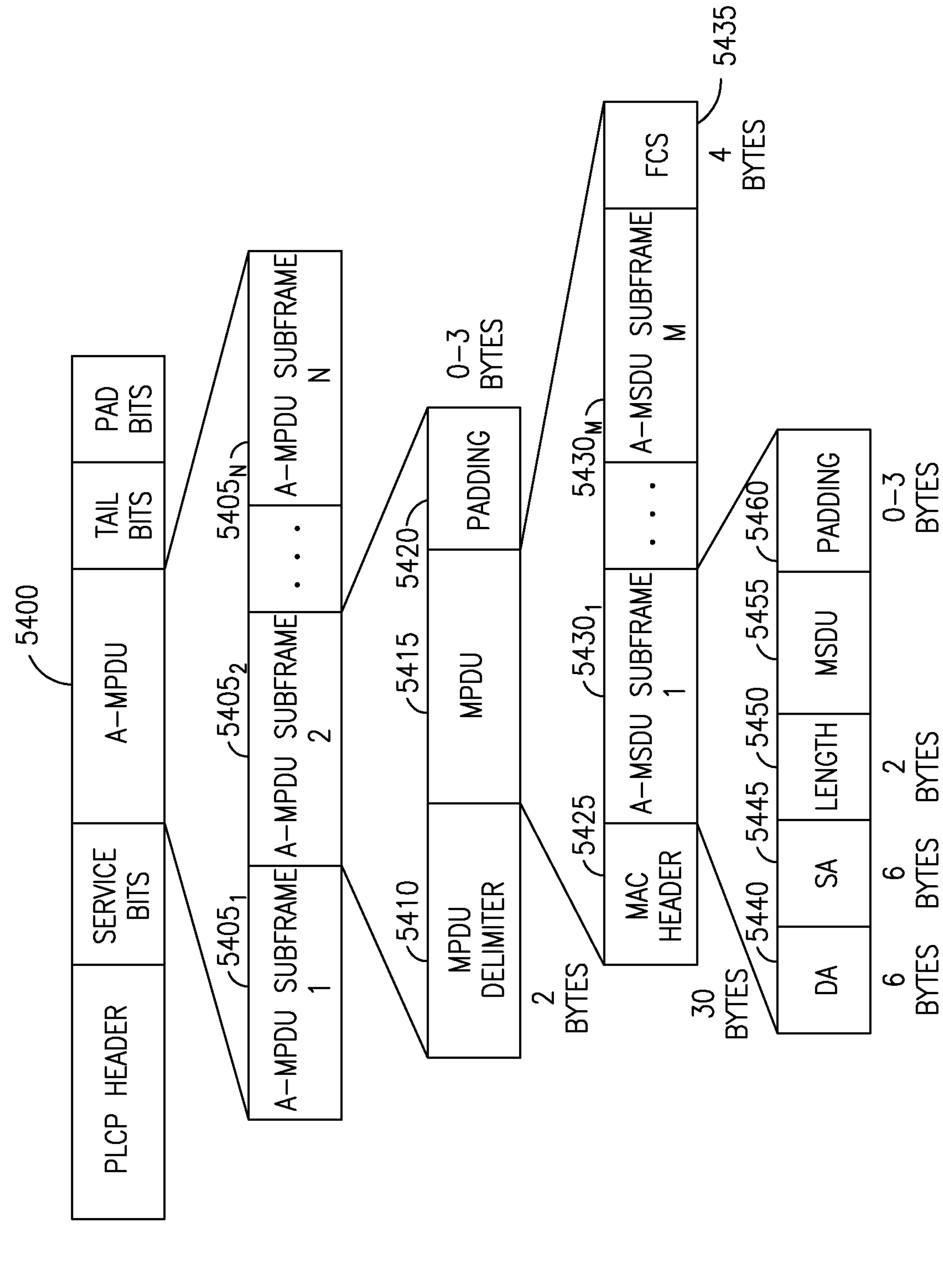
5400
PLCP HEADER
SERVICE BITS
A-MPDU
TAIL BITS
PAD BITS
5405₁
A-MPDU SUBFRAME 1
5405₂
A-MPDU SUBFRAME 2
. . .
5405N
A-MPDU SUBFRAME N
5410
MPDU DELIMITER
2 BYTES
5415
MPDU
5420
PADDING
0-3 BYTES
5425
MAC HEADER
30 BYTES
5430₁
A-MSDU SUBFRAME 1
. . .
5430M
A-MSDU SUBFRAME M
FCS
4 BYTES
5435
5440
DA
6 BYTES
5445
SA
6 BYTES
5450
LENGTH
2 BYTES
5455
MSDU
5460
PADDING
0-3 BYTES

FIG. 54

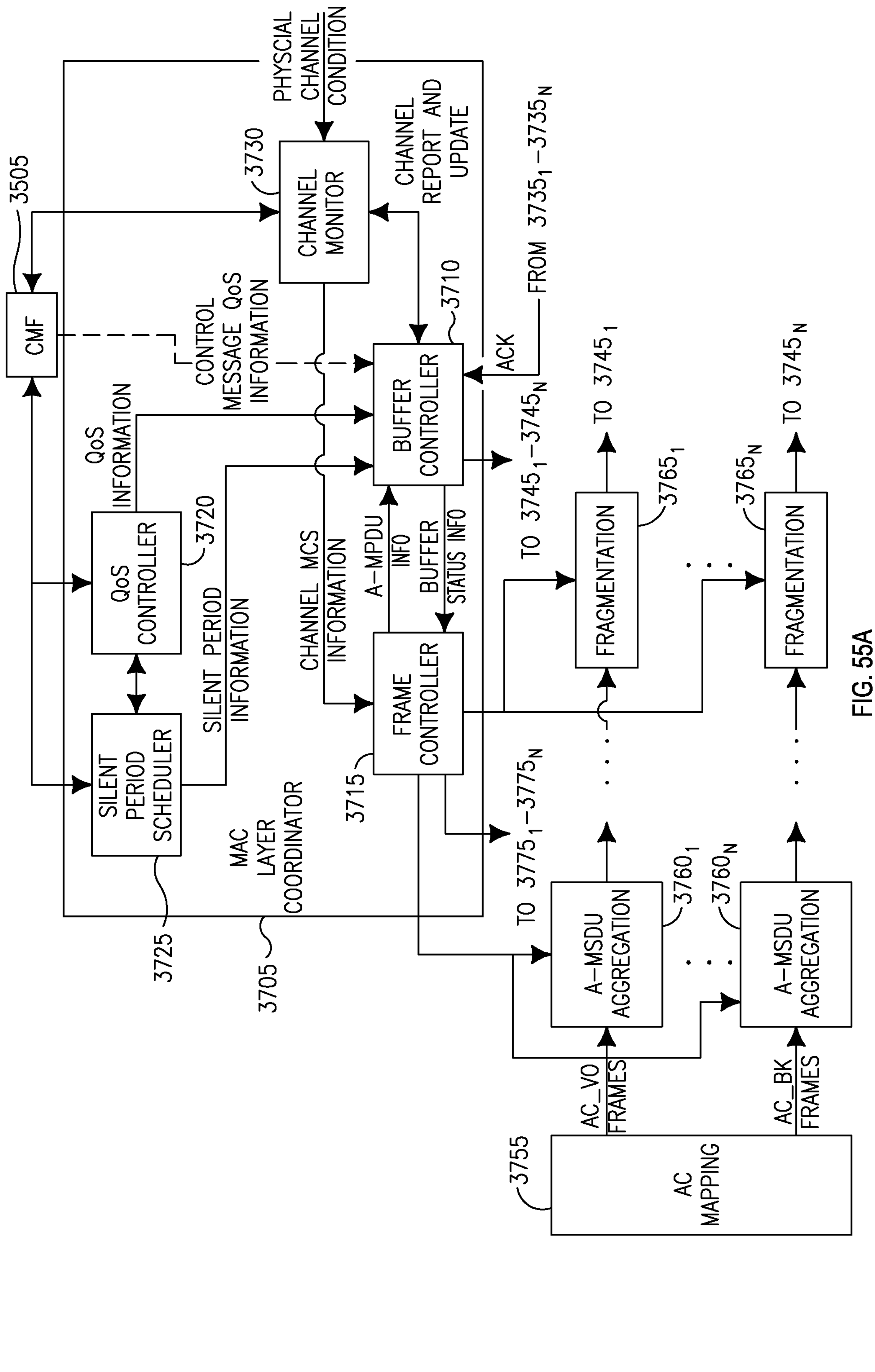

3505
CMF
3730
PHYSCIAL CHANNEL CONDITION
CHANNEL MONITOR
CHANNEL REPORT AND UPDATE
FROM $3735_1$–$3735_N$
CONTROL MESSAGE QoS INFORMATION
3710
ACK
BUFFER CONTROLLER
TO $3745_1$–$3745_N$
TO $3745_1$
TO $3745_N$
QoS INFORMATION
QoS CONTROLLER
3720
SILENT PERIOD INFORMATION
CHANNEL MCS INFORMATION
A–MPDU INFO
BUFFER STATUS INFO
$3765_1$
$3765_N$
FRAGMENTATION
FRAGMENTATION
SILENT PERIOD SCHEDULER
FRAME CONTROLLER
3715
TO $3775_1$–$3775_N$
MAC LAYER COORDINATOR
3725
3705
$3760_1$
$3760_N$
A–MSDU AGGREGATION
A–MSDU AGGREGATION
AC_VO FRAMES
AC_BK FRAMES
3755
AC MAPPING


FIG. 55A

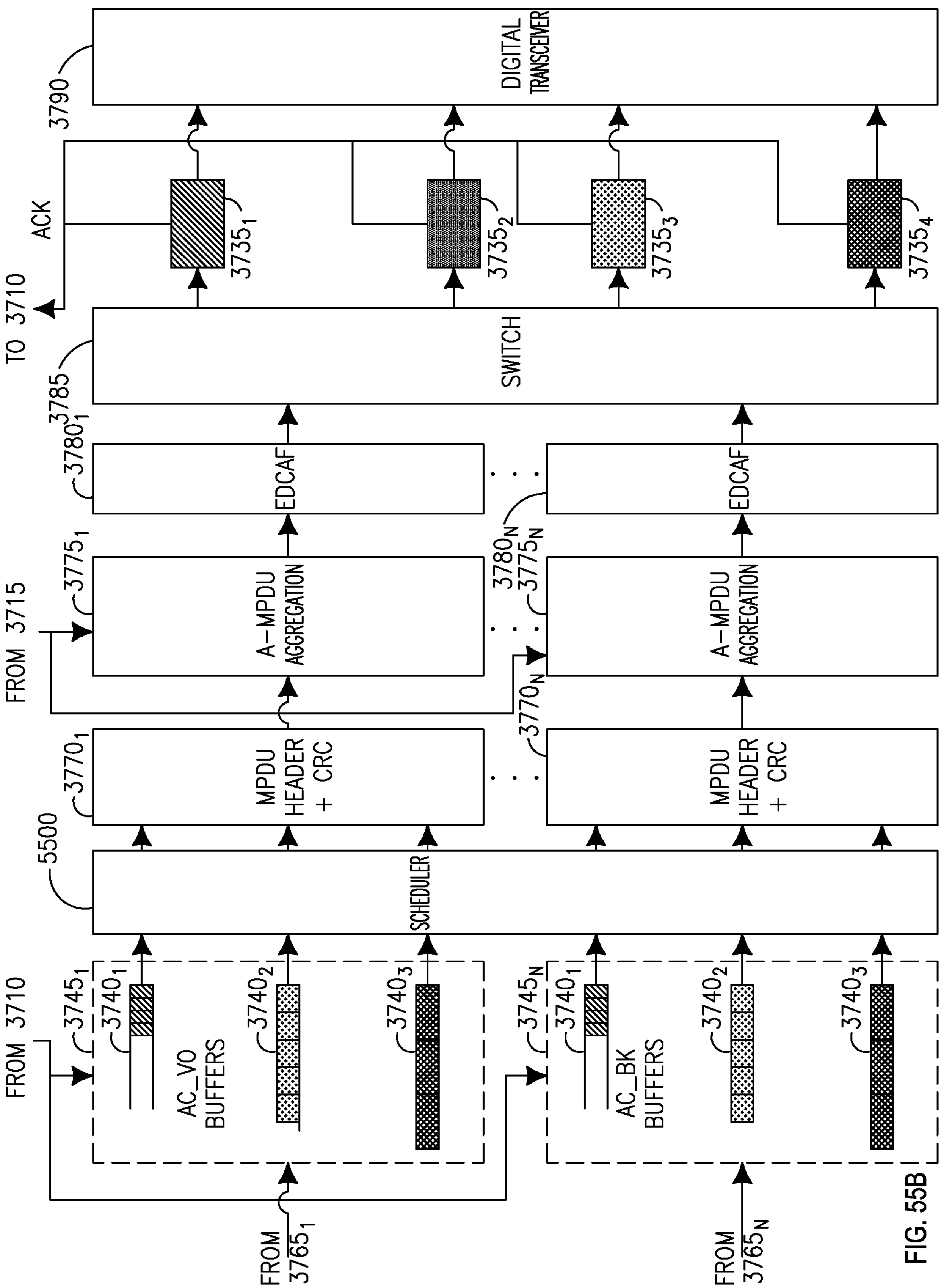
DIGITAL TRANSCEIVER
3790
ACK
TO 3710
$3735_1$
$3735_2$
$3735_3$
$3735_4$
SWITCH
3785
$3780_1$
EDCAF
$3780_N$
EDCAF
FROM 3715
$3775_1$
A-MPDU AGGREGATION
$3775_N$
A-MPDU AGGREGATION
$3770_1$
MPDU HEADER + CRC
$3770_N$
MPDU HEADER + CRC
5500
SCHEDULER
FROM 3710
$3745_1$
$3740_1$
$3740_2$
$3740_3$
AC_VO BUFFERS
$3745_N$
$3740_1$
$3740_2$
$3740_3$
AC_BK BUFFERS
FROM $3765_1$
FROM $3765_N$

FIG. 55B

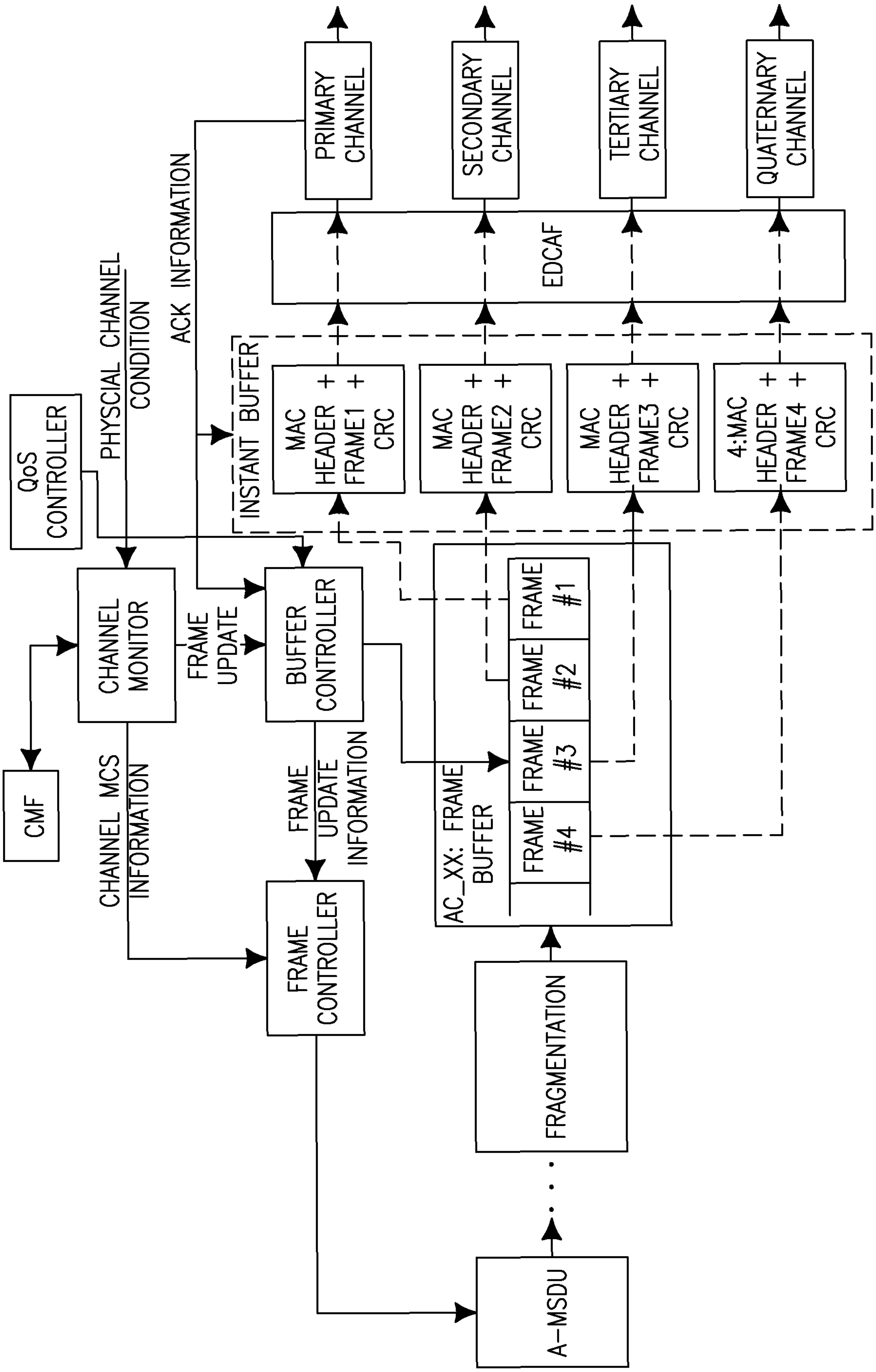
PRIMARY CHANNEL
SECONDARY CHANNEL
TERTIARY CHANNEL
QUATERNARY CHANNEL
EDCAF
ACK INFORMATION
PHYSCIAL CHANNEL CONDITION
QoS CONTROLLER
INSTANT BUFFER
MAC HEADER + FRAME1 + CRC
MAC HEADER + FRAME2 + CRC
MAC HEADER + FRAME3 + CRC
4:MAC HEADER + FRAME4 + CRC
CMF
CHANNEL MONITOR
FRAME UPDATE
BUFFER CONTROLLER
CHANNEL MCS INFORMATION
FRAME UPDATE INFORMATION
FRAME CONTROLLER
AC_XX: FRAME BUFFER
FRAME #1
FRAME #2
FRAME #3
FRAME #4
FRAGMENTATION
A-MSDU

FIG. 56

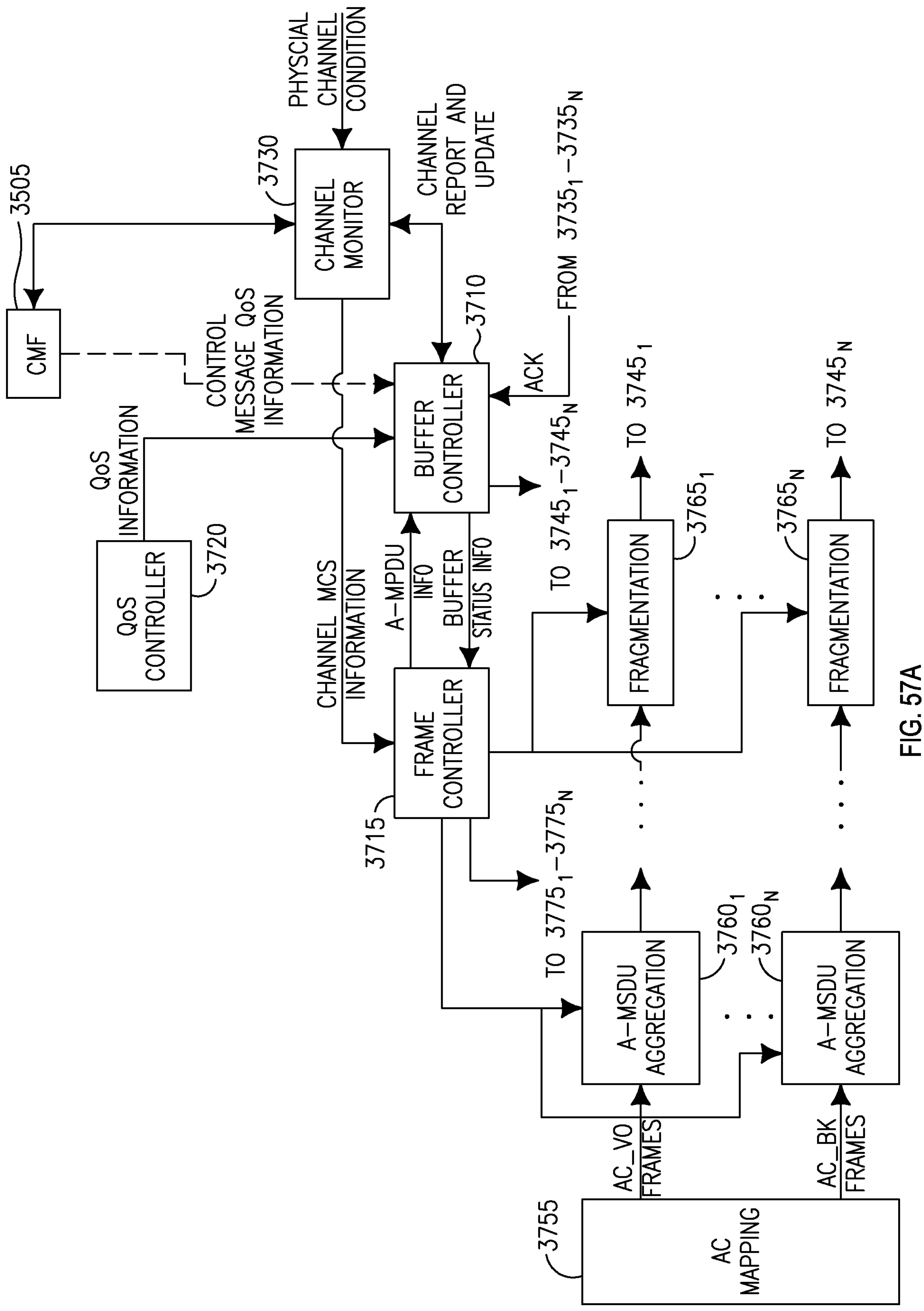
3505
CMF
CONTROL MESSAGE QoS INFORMATION
QoS INFORMATION
QoS CONTROLLER
3720
3730
CHANNEL MONITOR
PHYSCIAL CHANNEL CONDITION
CHANNEL REPORT AND UPDATE
CHANNEL MCS INFORMATION
3710
BUFFER CONTROLLER
ACK
FROM $3735_1 - 3735_N$
TO $3745_1 - 3745_N$
A-MPDU INFO
BUFFER STATUS INFO
3715
FRAME CONTROLLER
TO $3775_1 - 3775_N$
FRAGMENTATION
$3765_1$
TO $3745_1$
FRAGMENTATION
$3765_N$
TO $3745_N$
A-MSDU AGGREGATION
$3760_1$
A-MSDU AGGREGATION
$3760_N$
3755
AC MAPPING
AC_VO FRAMES
AC_BK FRAMES

FIG. 57A

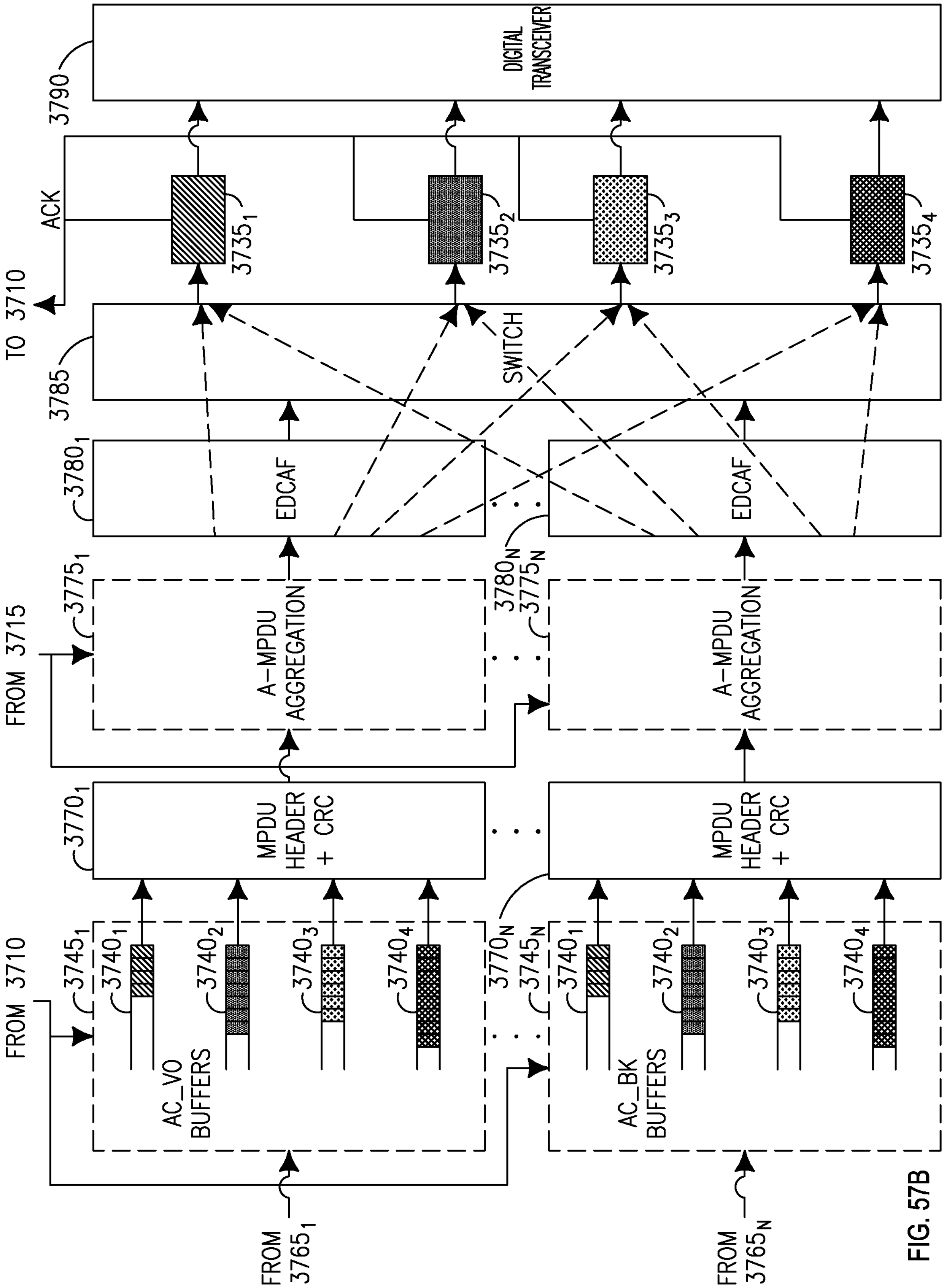
DIGITAL TRANSCEIVER
3790
ACK
TO 3710
3735$_1$
3735$_2$
3735$_3$
3735$_4$
3785
SWITCH
3780$_1$
EDCAF
3780$_N$
EDCAF
FROM 3715
3775$_1$
A-MPDU AGGREGATION
3775$_N$
A-MPDU AGGREGATION
3770$_1$
MPDU HEADER + CRC
3770$_N$
MPDU HEADER + CRC
FROM 3710
3745$_1$
AC_VO BUFFERS
3740$_1$
3740$_2$
3740$_3$
3740$_4$
3745$_N$
AC_BK BUFFERS
3740$_1$
3740$_2$
3740$_3$
3740$_4$
FROM 3765$_1$
FROM 3765$_N$

FIG. 57B

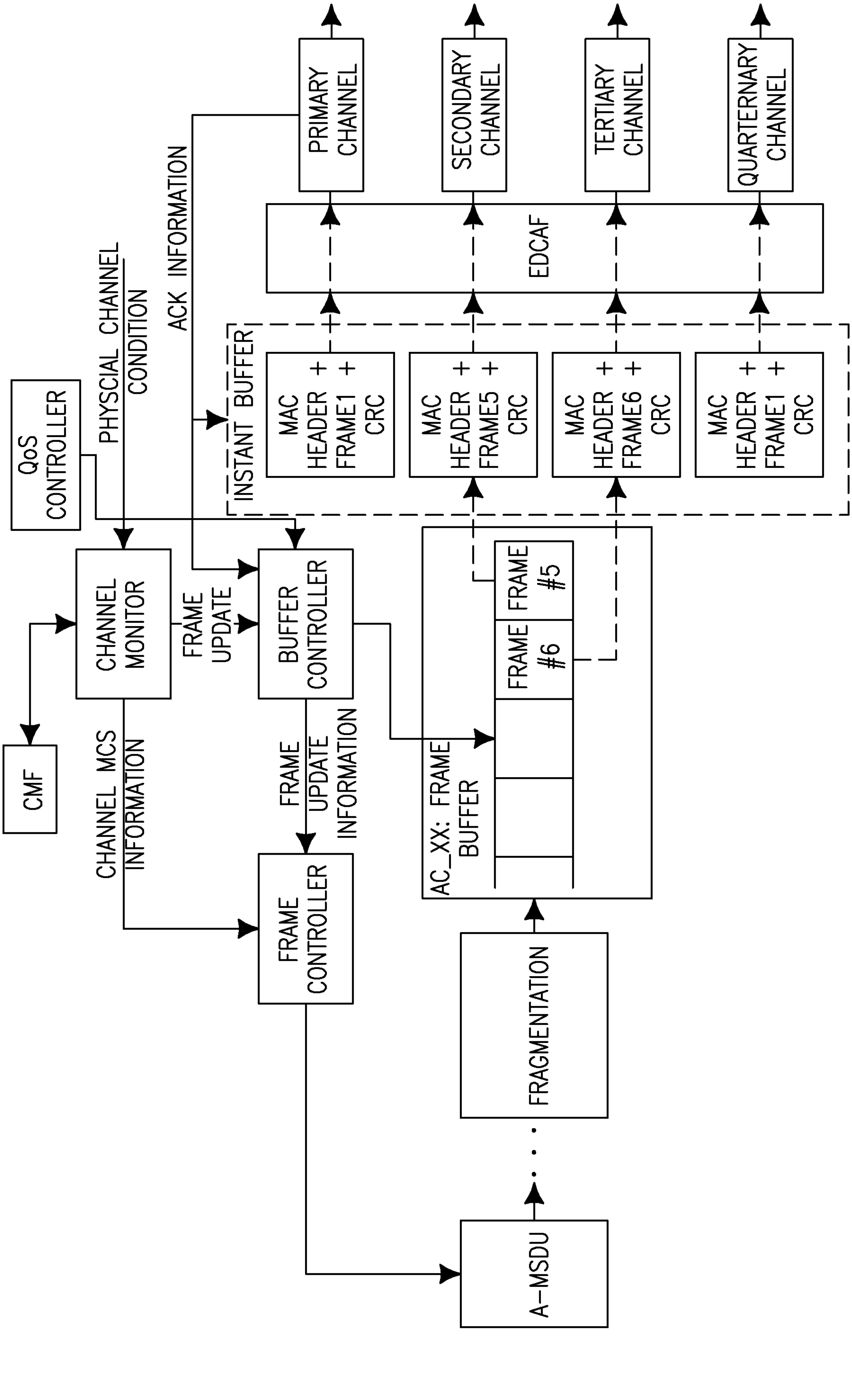
PRIMARY CHANNEL
SECONDARY CHANNEL
TERTIARY CHANNEL
QUARTERNARY CHANNEL
EDCAF
ACK INFORMATION
PHYSCIAL CHANNEL CONDITION
QoS CONTROLLER
INSTANT BUFFER
MAC HEADER + FRAME1 + CRC
MAC HEADER + FRAME5 + CRC
MAC HEADER + FRAME6 + CRC
MAC HEADER + FRAME1 + CRC
CHANNEL MONITOR
FRAME UPDATE
BUFFER CONTROLLER
FRAME #5
FRAME #6
CMF
CHANNEL MCS INFORMATION
FRAME UPDATE INFORMATION
AC_XX: FRAME BUFFER
FRAME CONTROLLER
FRAGMENTATION
A-MSDU

FIG. 58

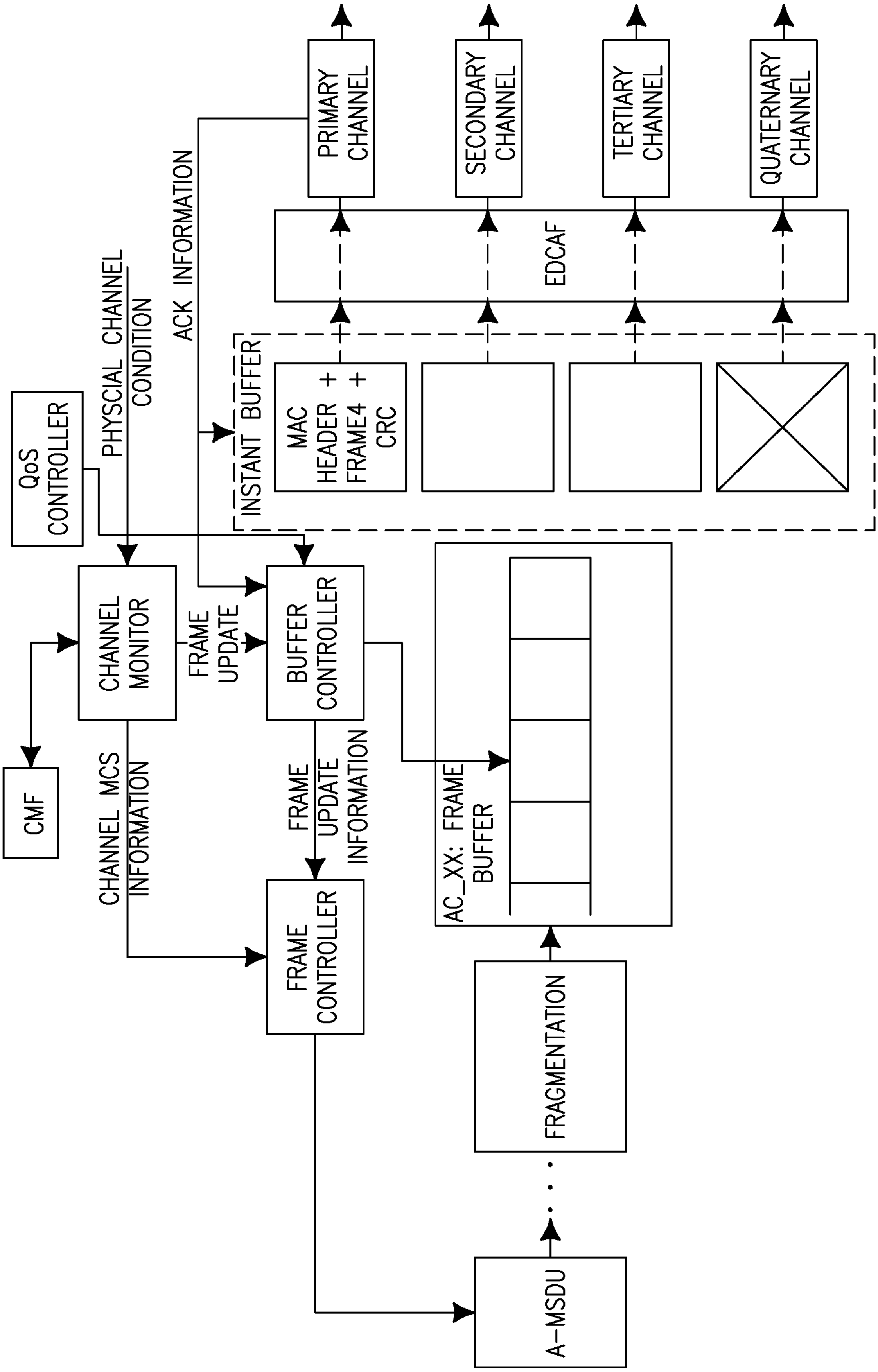
PRIMARY CHANNEL
SECONDARY CHANNEL
TERTIARY CHANNEL
QUATERNARY CHANNEL
EDCAF
INSTANT BUFFER
MAC HEADER + FRAME4 + CRC
ACK INFORMATION
PHYSCIAL CHANNEL CONDITION
QoS CONTROLLER
CHANNEL MONITOR
FRAME UPDATE
BUFFER CONTROLLER
CMF
CHANNEL MCS INFORMATION
FRAME UPDATE INFORMATION
FRAME CONTROLLER
AC_XX: FRAME BUFFER
FRAGMENTATION
A−MSDU

FIG. 59

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2005100039 A1